(19) Europäisches Patentamt
European Patent Office
Office européen des brevets

(11) **EP 4 549 186 A1**

(12) **EUROPEAN PATENT APPLICATION**
published in accordance with Art. 153(4) EPC


(43) Date of publication:
**07.05.2025 Bulletin 2025/19**

(21) Application number: **23831566.7**

(22) Date of filing: **29.06.2023**

(51) International Patent Classification (IPC):
***B60J 5/00*** $^{(2006.01)}$ ***B60J 5/10*** $^{(2006.01)}$
***B62D 25/10*** $^{(2006.01)}$

(52) Cooperative Patent Classification (CPC):
**B60J 5/00; B60J 5/10; B62D 25/10**

(86) International application number:
**PCT/JP2023/024138**

(87) International publication number:
**WO 2024/005127 (04.01.2024 Gazette 2024/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.07.2022 JP 2022106760**



(71) Applicant: **NIPPON STEEL CORPORATION**
**Chiyoda-ku**
**Tokyo 100-8071 (JP)**

(72) Inventors:
- **YONEBAYASHI, Toru**
  **Tokyo 100-8071 (JP)**
- **SAWA, Yasunori**
  **Tokyo 100-8071 (JP)**
- **NISHIMURA, Ryuichi**
  **Tokyo 100-8071 (JP)**
- **OTSUKA, Kenichiro**
  **Tokyo 100-8071 (JP)**

(74) Representative: **Zimmermann & Partner**
**Patentanwälte mbB**
**Postfach 330 920**
**80069 München (DE)**


(54) **PANEL SET**


(57) A panel set (100) includes an outer panel component (1), and inner panel component (2), and a stiffening member (3). The outer panel component (1) includes an outer panel body (10) that is curved convexly outward in section perpendicular to a first direction. The inner panel component (2) includes an inner panel body (20) and is united with the outer panel component (1). The stiffening member (3) is positioned in a space (V) between the outer panel body (10) and the inner panel body (20). A first outer-side corner part (35) and a second outer-side corner part (36) of the stiffening member (3) are joined to the outer panel body (10), and a first inner-side lateral part (33) and a second inner-side lateral part (34) of the stiffening member (3) are joined to the inner panel body (20).


FIG. 3

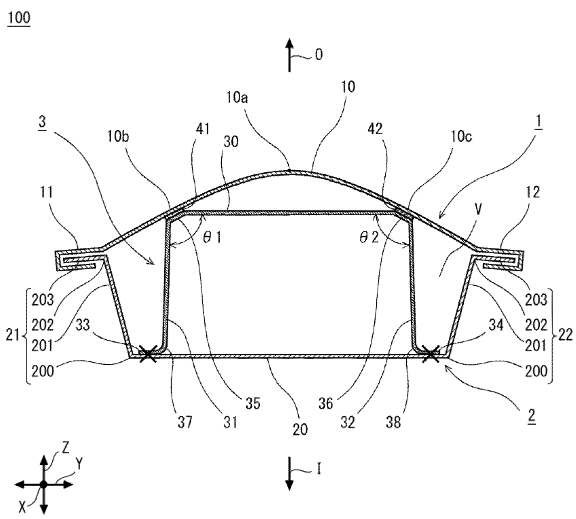

EP 4 549 186 A1

## Description

TECHNICAL FIELD

The present disclosure relates to a panel set including an outer panel component and an inner panel component.

BACKGROUND ART

An automobile includes outer panel components (for example, a back door panel, a hood (bonnet), fenders, side panels, etc.). Each of the outer panel components includes a panel body that is curved convexly outward (which will hereinafter be also referred to as "outer panel body"), and in view of fuel economy, weight reduction of the outer panel components is demanded. The weight reduction of the outer panel components can be achieved by decreasing the plate thicknesses.

While an automobile is moving, the outer panel components undergo various vibrations, and therefore, these components are required to have good noise/vibration characteristics. For example, vibrations are generated in the engine and transmission (drive train). Also, when the tires touch the road surface, vibrations are generated. These vibrations propagate to various components of the automobile body, including the outer panel components. The vibration of the components causes vibration of the interior air, which sometimes turns into noise that makes the occupants feel uncomfortable. Therefore, it is demanded to suppress such uncomfortable noise for the occupants. The noise caused by vibration is called muffled sound or drumming noise.

If the frequency of such vibration is the same as the natural frequency of the component that undergoes the vibration, resonance occurs in the component, and noise caused by the vibration (muffled sound or drumming noise) is amplified. Especially when resonance occurs in a component with a large surface area, such as an outer panel component, a loud noise may be produced. Unlike a component with a hat-shaped cross section (for example, a side sill or a B pillar), an outer panel component or the like does not have a ridge line and is low in stiffness; however, once resonance occurs in such a component, a loud noise could be produced. The noise/vibration characteristics will also be referred to as NV characteristics.

There are some cases in which an outer panel component is combined and integrated with an inner panel component. A panel set is made by combining an outer panel component with an inner panel component. In the case of a panel set, weight reduction of the inner panel component as well as the outer panel component is demanded. The inner panel component includes a panel body (which will hereinafter be also referred to as "inner panel body"). An inner panel body has a large surface area, and therefore, when external vibration propagates to the inner panel component and the frequency of the vibration propagating from external is the same as the natural frequency of the inner panel component, resonance occurs, and uncomfortable noise for the occupants may be amplified.

For weight reduction, it is required to decrease the plate thickness of the outer panel component, the plate thickness of the inner panel component, or the plate thicknesses of both the outer panel component and the inner panel component. When the plate thicknesses of these components are reduced, the natural frequency of the panel set becomes lower. When the lowered natural frequency becomes equal to the frequency of the vibration propagating from the engine, the transmission or the tires, resonance occurs. This may produce muffle sound or drumming noise and may amplify uncomfortable noise for the occupants.

When some external force is applied to a component, the component is deformed. A component that is easy to deform has low stiffness. The lower the stiffness, the lower the natural frequency. Accordingly, increasing the stiffness of a component is considered as an effective way to increase the natural frequency of the component. Therefore, there are some cases in which an additional member, such as a stiffening member (stiffener) or a reinforcing member, is provided to the component. Another way to suppress vibration is to attach a vibration damping material that converts vibration energy to thermal energy to the component. However, adding a stiffening member, a reinforcing member or a vibration damping material with no consideration leads to an increase in the total weight. Therefore, it is necessary to provide a stiffening member or the like only at an effective point to increase the natural frequency of the component and thereby to minimize the addition of a stiffening member or the like.

On the other hand, it is relatively easy to lower the natural frequency. Lowering of the natural frequency can be achieved by decreasing the plate thickness, making a hole, or the like.

However, it is technically difficult to increase the natural frequency while suppressing a weight increase and a cost increase. In the past, various techniques have been developed.

Techniques focusing on noise and vibration are disclosed in, for example, Japanese Patent Application Publication No. 2010-228617 (Patent Literature 1), Japanese Patent Application Publication No. 2005-271707 (Patent Literature 2), Japanese Patent Application Publication No. 2006-036134 (Patent Literature 3) and Japanese Patent Application Publication No. 2010-058622 (Patent Literature 4).

The technique disclosed in Patent Literature 1 relates to an upper back structure that can reduce automobile interior noise caused by vibration of an upper back panel. According to the technique of Patent Literature 1, the upper back panel has a natural frequency that is different from the vibration frequency of a volume change of an automobile interior that occurs while the automobile is moving.

The technique disclosed in Patent Literature 2 relates to a dash panel structure that is excellent in noise barrier performance while having a reduced weight and a reduced manufacturing cost. The technique disclosed in Patent Literature 3 relates to an automobile roof panel structure that can reduce the weight and can reduce vibration energy effectively to reduce acoustic radiation. According to each of the techniques of Patent Literatures 2 and 3, a high-stiffness member to reinforce the intended panel can be positioned only in a limited area.

The technique disclosed in Patent Literature 4 relates to a structure of an automobile upper part that is simple in structure and can suppress muffled sound in the automobile interior without causing a cost increase or a weight increase. According to the technique of Patent Literature 4, the upper part of the automobile body includes a cowl panel, a front member, and a rear member, which are listed in the order of natural frequency from highest to lowest.

## CITATION LIST

### PATENT LITERATURES

[Patent Literature 1] Japanese Patent Application Publication No. 2010-228617
[Patent Literature 2] Japanese Patent Application Publication No. 2005-271707
[Patent Literature 3] Japanese Patent Application Publication No. 2006-036134
[Patent Literature 4] Japanese Patent Application Publication No. 2010-058622

## SUMMARY OF INVENTION

### TECHNICAL PROBLEM

The techniques of Patent Literatures 1 to 4 may be useful to improve NV characteristics while reducing weight when it comes to a simple panel component. However, none of Patent Literatures 1 to 4 discusses suppressing amplification of uncomfortable noise for automobile occupants even when the plate thickness of a panel set including an outer panel component and an inner panel component is decreased.

An object of the present disclosure is to provide a panel set including an outer panel component and an inner panel component that can suppress amplification of uncomfortable noise for automobile occupants even when the weight of the panel set is reduced.

### SOLUTION TO PROBLEM

A panel set according to the present disclosure includes an outer panel component, an inner panel component, and a stiffening member. The outer panel component spreads in a first direction and in a second direction perpendicular to the first direction. The outer panel component includes an outer panel body that is curved convexly outward in section perpendicular to the first direction. The inner panel component is positioned in an inner side of the outer panel component and united with the outer panel component. The inner panel component includes an inner panel body that faces the outer panel body, and a space is formed between the outer panel body and the inner panel body. The stiffening member is positioned in the space between the outer panel body and the inner panel body.

When viewed in the first direction, the stiffening member includes an outer-side lateral part, a first vertical part, a second vertical part, a first inner-side lateral part, a second inner-side lateral part, a first outer-side corner part, a second outer-side corner part, a first inner-side corner part, and a second inner-side corner part. The outer-side lateral part is positioned near the side of the outer panel body. The first outer-side corner part connects the outer-side lateral part and the first vertical part. The second outer-side corner part connects the outer-side lateral part and the second vertical part. The first inner-side corner part connects the first vertical part and the first inner-side lateral part. The second inner-side corner part connects the second vertical part and the second inner-side lateral part. The stiffening member has a width in the first direction.

The first outer-side corner part is joined to a first portion of the outer panel body that is away from an apex part of the outer panel body. The second outer-side corner part is joined to a second portion of the outer panel body that is opposite the first portion with the apex part in between. The first inner-side lateral part and the second inner-side lateral part are joined to the inner panel body.

EFFECT OF INVENTION

The panel set according to the disclosure can suppress amplification of uncomfortable noise for automobile occupants even when the weight of the panel set is reduced.

BRIEF DESCRIPTION OF DRAWINGS

[FIG. 1] FIG. 1 is a perspective view of an assembled panel set according to a first embodiment.
[FIG. 2] FIG. 2 is an exploded perspective view of the panel set according to the first embodiment.
[FIG. 3] FIG. 3 is a sectional view of the panel set shown in FIG. 1.
[FIG. 4] FIG. 4 is a plan view of a back door, which is a specific example of a panel set.
[FIG. 5] FIG. 5 is a perspective view of an outer panel component of the back door shown in FIG. 4.
[FIG. 6] FIG. 6 is a perspective view of an inner panel component of the back door shown in FIG. 4.
[FIG. 7] FIG. 7 is a sectional view of the back door along line VII-VII in FIG. 4.
[FIG. 8] FIG. 8 is a perspective view of an inner panel body with an attached stiffening member.
[FIG. 9] FIG. 9 is a sectional view of a modification of the panel set.
[FIG. 10] FIG. 10 is a sectional view of another modification of the panel set.
[FIG. 11] FIG. 11 is a perspective view of a stiffening member of the panel set according to the first embodiment.
[FIG. 12] FIG. 12 is a sectional view of the panel set according to the first embodiment, showing preferred condition 1.
[FIG. 13] FIG. 13 is a plan view of the panel set according to the first embodiment, showing preferred condition 2.
[FIG. 14] FIG. 14 is a plan view of the panel set according to the first embodiment, showing preferred condition 3.
[FIG. 15] FIG. 15 is a perspective view of a stiffening member of a panel set according to a second embodiment.
[FIG. 16] FIG. 16 is a sectional view of the panel set including the stiffening member according to the second embodiment.
[FIG. 17] FIG. 17 is a perspective view of a stiffening member of a panel set according to a third embodiment.
[FIG. 18] FIG. 18 is a sectional view of the panel set including the stiffening member according to the third embodiment.
[FIG. 19] FIG. 19 is a perspective view of modification 1 of the stiffening member of the panel set according to the third embodiment.
[FIG. 20] FIG. 20 is a perspective view of modification 2 of the stiffening member of the panel set according to the third embodiment.
[FIG. 21] FIG. 21 is a perspective view of modification 3 of the stiffening member of the panel set according to the third embodiment.
[FIG. 22] FIG. 22 is a perspective view of a stiffening member of a panel set according to a fourth embodiment.
[FIG. 23] FIG. 23 is a sectional view of the panel set including the stiffening member according to the fourth embodiment.
[FIG. 24] FIG. 24 is a perspective view of modification 4 of the stiffening member of the panel set according to the fourth embodiment.
[FIG. 25] FIG. 25 is a perspective view of modification 5 of the stiffening member of the panel set according to the fourth embodiment.
[FIG. 26] FIG. 26 is a perspective view of a stiffening member of a panel set according to a fifth embodiment.
[FIG. 27] FIG. 27 is a perspective view of modification 6 of the stiffening member of the panel set according to the fifth embodiment.
[FIG. 28] FIG. 28 is a perspective view of a stiffening member of a panel set according to a sixth embodiment.
[FIG. 29] FIG. 29 is a perspective view of modification 7 of the stiffening member of the panel set according to the sixth embodiment.
[FIG. 30] FIG. 30 is a perspective view of modification 8 of the stiffening member of the panel set according to the sixth embodiment.
[FIG. 31] FIG. 31 is a perspective view of modification 9 of the stiffening member of the panel set according to the sixth embodiment.
[FIG. 32] FIG. 32 is a plan view of a panel set according to a seventh embodiment.
[FIG. 33] FIG. 33 is a graph showing analysis results of Example 6.
[FIG. 34] FIG. 34 is a graph showing analysis results of Example 6.
[FIG. 35] FIG. 35 is a graph showing analysis results of Example 7.
[FIG. 36] FIG. 36 is a graph showing analysis results of Example 7.

DESCRIPTION OF EMBODIMENTS

Some embodiments of the present disclosure will hereinafter be described. In the following paragraphs, examples will be given to describe those embodiments of the present disclosure; however, the present disclosure is not limited to those examples. In the following paragraphs, specific values and materials will be given as examples in some parts; however, the present disclosure is not limited to those examples.

A panel set according to an embodiment of the present disclosure includes an outer panel component, an inner panel component, and a stiffening member. The outer panel component spreads in a first direction and in a second direction perpendicular to the first direction. The outer panel component includes an outer panel body that is curved convexly outward in section perpendicular to the first direction. The inner panel component is positioned in an inner side of the outer panel component and united with the outer panel component. The inner panel component includes an inner panel body that faces the outer panel body, and a space is formed between the outer panel body and the inner panel body. The stiffening member is positioned in the space between the outer panel body and the inner panel body.

When viewed in the first direction, the stiffening member includes an outer-side lateral part, a first vertical part, a second vertical part, a first inner-side lateral part, a second inner-side lateral part, a first outer-side corner part, a second outer-side corner part, a first inner-side corner part, and a second inner-side corner part. The outer-side lateral part is positioned near the side of the outer panel body. The first outer-side corner part connects the outer-side lateral part and the first vertical part. The second outer-side corner part connects the outer-side lateral part and the second vertical part. The first inner-side corner part connects the first vertical part and the first inner-side lateral part. The second inner-side corner part connects the second vertical part and the second inner-side lateral part. The stiffening member has a width in the first direction.

The first outer-side corner part is joined to a first portion of the outer panel body that is away from an apex part of the outer panel body. The second outer-side corner part is joined to a second portion of the outer panel body that is opposite the first portion with the apex part in between. The first inner-side lateral part and the second inner-side lateral part are joined to the inner panel body. (This is a first configuration.)

In a typical example, the stiffening member is shaped like a hat in section perpendicular to the first direction. In another typical example, the stiffening member is shaped like a C in section perpendicular to the first direction. In another typical example, the stiffening member is a solid member.

In the panel set with the first configuration, the stiffening member is joined to the outer panel body and joined to the inner panel body. Specifically, the first outer-side corner part and the second outer-side corner part of the stiffening member are joined respectively to the first portion and the second portion of the outer panel body. Thereby, the outer-side lateral part stretches from the first portion to the second portion of the outer panel body and keeps out of contact with the apex part of the outer panel body. In this case, when an external force is applied to the outer panel body, the outer-side lateral part undergoes a tensile force or a compressive force in the second direction, and from the outer-side lateral part, the first portion and the second portion of the outer panel body receive a force reactive to the tensile or compressive force in the second direction. Thereby, the first portion and the second portion of the outer panel body keep their relative positions that are distant from each other with the apex part of the convex curve in between, and a shape change of the outer panel body seen in section perpendicular to the first direction is suppressed. Additionally, since the stiffening member has a width in the first direction, the first outer-side corner part and the second outer-side corner part are joined respectively to the first portion and the second portion of the outer panel body with a certain range in the first direction. Therefore, when the first portion and the second portion of the outer panel body are about to make a shape change seen in section perpendicular to the second direction, the first outer-side corner part and the second outer-side corner part produce a reactive force. Thereby, a shape change of the outer panel body seen in section perpendicular to the second direction is also suppressed. Thus, both a shape change of the outer panel body seen in section perpendicular to the first direction and a shape change of the outer panel body seen in section perpendicular to the second direction of the outer panel body are suppressed, and thereby, a deformation of the surface shape of the outer panel body are suppressed. Accordingly, the stiffness of the outer panel body is enhanced.

In this case, even when vibrations propagated to the panel set are about to cause deformation of the outer panel body, the outer panel body is difficult to deform because the outer panel body has an enhanced stiffness.

Moreover, the first inner-side lateral part and the second inner-side lateral part of the stiffening member are joined to the inner panel body.

Specifically, the first inner-side lateral part is connected to the first vertical part via the first inner-side corner part, and the second inner-side lateral part is connected to the second vertical part via the second inner-side corner part. Since the stiffening member has a width in the first direction, the first inner-side lateral part and the second inner-side lateral part are joined to the inner panel body with a certain range in the first direction. This produces the following effect. For example, when an external force that may cause a shape change of the inner panel body seen in section perpendicular to the second direction (Y direction which will be described later) is applied to the inner panel body, the first inner-side lateral part and the second inner-side lateral part produce reactive forces in the separate portions of the inner panel body to which the first inner-side lateral part and the second inner-side lateral part are joined. Therefore, a shape change of the inner panel body seen in section perpendicular to the second direction is suppressed. Thus, the stiffness of the inner panel component is enhanced. In this case, even when vibrations propagated to the panel set are about to cause deformation of the inner panel body in section perpendicular to the second direction, the inner panel body is difficult to deform because the inner panel body has an enhanced stiffness.

In sum, the stiffness of the outer panel component is enhanced by the outer-side lateral part, the first outer-side corner part, and the second outer-side corner part. The stiffness of the inner panel component is enhanced by the first inner-side lateral part, the second inner-side lateral part, the first inner-side corner part and the second inner-side corner part. The outer panel component and the inner panel component, of which the rigidities and the natural frequencies are heightened, are connected to each other via the first vertical part and the second vertical part. In this case, since the components that are both enhanced in stiffness are connected to each other, when an external force is applied to one of these components, the force propagates to the other component to which the external force is not directly applied. Then, even though both the components deform, the amount of deformation of each component becomes less. Thus, the stiffness of the panel set is enhanced.

In other words, the inner panel component is hardly deformed by external forces due to the first inner-side lateral part, the second inner-side lateral part, the first inner-side corner part, and the second inner-side corner part. This inner panel component that is hardly deformed is connected to the outer panel component via the first vertical part and the second vertical part. This makes the outer panel component further less deformable. In other words, the stiffness of the outer panel component is further enhanced. The outer panel component is hardly deformed by external forces due to the outer-side lateral part, the first outer-side corner part, and the second outer-side corner part. The outer panel component that is hardly deformed is connected to the inner panel component via the first vertical part and the second vertical part. This makes the inner panel component further less deformable. In other words, the stiffness of the outer panel component is further enhanced.

With respect to the elements of the stiffening member located on the side of the inner panel component, the first inner-side lateral part connects to the first inner-side corner part, and further, the first inner-side corner part connects to the first vertical part. When an external force that may cause a shape change of the inner panel body seen in section perpendicular to the second direction (Y direction) is applied to the inner panel body, the reactive force produced by the first inner-side lateral part and the second inner-side lateral part is increased due to the presence of the first vertical part. Accordingly, as compared with a stiffening member without a first vertical part, this stiffening member stiffens the inner panel component more, and the stiffness of the inner panel component is further enhanced. This effect of the first vertical part is obtained by the second vertical part in the same way.

With respect to the elements of the stiffening member located on the side of the outer panel component, the outer-side lateral part connects to the first outer-side corner part, and further, the first outer-side corner part connects to the first vertical part. When an external force that may cause a shape change of the outer panel body seen in section perpendicular to the second direction (Y direction) is applied to the outer panel body, the reactive force produced by the first outer-side corner part is increased due to the presence of the first vertical part. Accordingly, as compared with a stiffening member without a first vertical part, the stiffening member stiffens the outer panel component more, and the stiffness of the outer panel component is further enhanced. This effect of the first vertical part is obtained by the second vertical part in the same way.

With respect to the stiffening member, the outer-side lateral part is connected to the first inner-side lateral part via the first vertical part and connected to the second inner-side lateral part via the second vertical part. In this case, as compared with a stiffening member with neither a first vertical part nor a second vertical part, the area moment of inertia of this stiffening member itself becomes higher, and as a result, the stiffness of the panel set stiffened with this stiffening member is enhanced.

In sum, the outer panel body and the inner panel body are connected to each other via the first vertical part and the second vertical part. Therefore, in the panel set stiffened with the stiffening member according to this embodiment, the effect of the stiffening member to enhance the stiffness of the panel set is higher than the stiffening effect produced by the outer-side lateral part alone, higher than the stiffening effect produced by the first inner-side lateral part (or the second inner-side lateral part) and the first inner-side corner part (or the second inner-side corner part) alone, and higher than the stiffening effect produced by the outer-side lateral part, the first inner-side lateral part (or the second inner-side lateral part) and the first inner-side corner part (or the second inner-side corner part) alone. Accordingly, even when vibrations propagate to the panel set, the outer panel body and the inner panel body are hardly deformed. Therefore, the rigidities of the outer panel body and the inner panel body are enhanced, and the natural frequencies of the outer panel body and the inner panel body become higher than the natural frequencies without the stiffening member.

From another perspective, with respect to the outer panel component, the first outer-side corner part connecting the first vertical part to the outer-side lateral part is joined to the first portion of the outer panel body. The second outer-side corner part connecting the second vertical part to the outer-side lateral part is joined to the second portion of the outer panel body. The first portion and the second portion are located across the apex part from each other. Accordingly, the first outer-side corner part and the second outer-part corner part are joined to the outer panel body at two places that are separate from each other. Therefore, relative displacements of the first portion and the second portion not only in the second direction but also in the plate-thickness direction of the outer panel body are suppressed. The positional relation between the first portion and the second portion is maintained to keep the first portion and the second portion away from each other with the apex part of the convex curve in between in the second direction. Accordingly, a shape change of the outer panel body seen in section perpendicular to the first direction is suppressed. Moreover, since the stiffening member has a width in the first direction, the first outer-side corner part and the second outer-side corner part are joined respectively to the first portion and the second portion of the outer panel body with a certain range in the first direction. Thereby, a shape change of the outer panel body seen in section perpendicular to the second direction is suppressed. Thus, both a shape change of the outer panel body seen in section perpendicular to the first direction and a shape change of the outer panel body seen in section perpendicular to the second direction are suppressed, and a deformation of the surface shape of the outer panel body are suppressed. Accordingly, the stiffness of the outer panel body is enhanced.

With respect to the inner panel component, the first inner-side lateral part and the second inner-side lateral part are postured to fit the inner panel body and positioned away from each other in the second direction. The first inner-side lateral part is connected to the first vertical part via the first inner-side corner part, and the second inner-side lateral part is connected to the second vertical part via the second inner-side corner part. The first inner-side lateral part and the second inner-side lateral part are joined to the inner panel body. A deformation of the surface shape of the first inner-side lateral part postured to fit the inner panel body are suppressed by the first inner-side corner part that is, for example, curved to become an edge line. Similarly, a deformation of the surface shape of the second inner-side lateral part postured to fit the inner panel body are suppressed by the second inner-side corner part that is, for example, curved to become an edge line. Thereby, a deformation of the surface shape of the inner panel body to which the first inner-side lateral part and the second inner-side lateral part are joined are suppressed. Moreover, since the first inner-side lateral part and the second inner-side lateral part are positioned away from each other in the second direction, a deformation of the surface shape of the inner panel body are suppressed in a wide range corresponding to the interval between these lateral parts. Thus, since the first inner-side lateral part and the second inner-side lateral part are joined to the inner panel body, the stiffness of the inner panel body is enhanced, and the inner panel body becomes difficult to deform.

With respect to the panel set, relative displacements of the first outer-side corner part and the first inner-side lateral part are suppressed by the first vertical part, and relative displacements of the second outer-side corner part and the second inner-side lateral part are suppressed by the second vertical part. The first outer-side corner part and the second outer-side corner part are joined to the outer panel body, and the first inner-side lateral part and the second inner-side lateral part are joined to the inner panel body. Therefore, in the portions of the panel set where the first vertical part and the second vertical part are located, relative displacements of the outer panel body and the inner panel body in a direction in which the outer panel body and the inner panel body are stacked upon one another (for example, in a third direction perpendicular to the first direction and the second direction) are suppressed, and the stiffness of the whole panel set is enhanced.

Thus, by enhancing the rigidities of the outer panel body and the inner panel body and by connecting the outer panel body and the inner panel body to each other, the stiffness of the whole panel set can be enhanced. Therefore, even when the outer panel component and the inner panel component are thinned for a weight reduction, which will result in lowering of the natural frequency, the first configuration enhances the stiffness of the whole panel set and suppresses the lowering of the natural frequency. This makes it possible to obtain a panel set that is unlikely to resonate with vibrations propagating from a vibration source, such as an engine or the like, and is unlikely to make uncomfortable noise for automobile occupants.

As described above, the panel set with the first configuration can suppress an increase in the noise reaching to automobile occupants even when the weight of the panel set is reduced.

In a typical example, one stiffening member is provided. However, the number of stiffening members provided may be two or more. When a plurality of stiffening members are provided, the plurality of stiffening members are arranged in the first direction.

The above-described panel set preferably has the following configuration. In section perpendicular to the first direction, the first outer-side corner part has a shape that fits the first portion of the outer panel body, and the second outer-side corner part has a shape that fits the second portion of the outer panel body (second configuration).

In the panel set with the second configuration, an area where the first portion of the outer panel body and the first outer-side corner part of the stiffening member are in contact with each other is large, and an area where the second portion of the outer panel body and the second outer-side corner part of the stiffening member are in contact with each other is large. In the joint part between the first portion and the first outer-side corner part and the joint part between the second portion and the second outer-side corner part, the gap between the outer panel body and the stiffening member becomes small, and therefore, the outer panel body and the stiffening member can be joined in stable condition, and good connection can be achieved. It is preferred that the gap is substantially a constant value.

The above-described panel set preferably has the following configuration. Each of the outer-side lateral part, the first vertical part, the second vertical part, the first inner-side lateral part, the second inner-side lateral part, the first outer-side corner part, the second outer-side corner part, the first inner-side corner part, and the second inner-side corner part is shaped like a plate (third configuration).

In the panel set with the third configuration, the stiffening member is, for example, made of plate material. In this case, the first outer-side corner part and the second outer-side corner part that are joined to the outer panel body are like plate. Additionally, the first inner-side lateral part and the second inner-side lateral part that are joined to the inner panel body are like plate. Therefore, it is possible to structure each of the first outer-side corner part, the second outer-side corner part, the first inner-side lateral part, and the second inner-side lateral part in a simple form. Moreover, it is possible to make the stiffening member by pressing plate material, and the manufacturing cost can be kept low.

The panel set with the third configuration preferably has the following configuration. The outer-side lateral part, entirely or partly in the width, has a flat portion from the first outer-side corner part to the second outer-side corner part (fourth configuration).

In the panel set with the fourth configuration, the outer-side lateral part is not slack, and the outer-side lateral part is tense. The outer-side lateral part stretches from the first portion to the second portion of the outer panel body and keeps away from the apex part of the outer panel body. In this case, when an external force is applied to the outer panel body, the outer-side lateral part undergoes a tensile force or a compressive force in the second direction. Since the outer-side lateral part has a flat portion and therefore is tense, the outer-side lateral part is difficult to deform in the direction in which the first outer-side corner part and the second outer-side corner portion are arranged (in the second direction), which makes it possible to provide the first portion and the second portion of the outer panel body with a stronger force reactive to the tensile or compressive force. Accordingly, when an external force is applied to the outer panel body, deformations of the first portion and the second portion of the outer panel body can be suppressed. Thereby, the natural frequency of the outer panel component can be increased.

Additionally, the outer panel component and the inner panel component are connected via the first vertical part and the second vertical part. Since the fourth configuration further enhances the stiffness of the outer panel component, the stiffness of the inner panel component is further enhanced. Then, the panel set becomes difficult to deform, and the natural frequency thereof becomes higher.

The panel set with the fourth configuration may have the following configuration. The first vertical part, entirely or partly in the width, has a flat portion from the first outer-side corner part to the first inner-side corner part, and the second vertical part, entirely or partly in the width, has a flat portion from the second outer-side corner part to the second inner-side corner part (fifth configuration).

In the panel set with the fifth configuration, the first vertical part and the second vertical part are not slack, and each of the first vertical part and the second vertical part is tense. Since each of the first vertical part and the second vertical part has a flat portion and is tense, when an external force is applied to the outer panel body or the inner panel body, each of the first vertical part and the second vertical part becomes more difficult to deform in the direction in which the first outer-side corner part and the first inner-side corner part are arranged (in the direction along the first vertical part) or in the direction in which the second outer-side corner part and the second inner-side corner part are arranged (in the direction along the second vertical part), and the stiffness of the panel set becomes still higher. Then, even when an external vibration force is applied to the panel set, the outer panel body and the inner panel body are more unlikely to deform, and the natural frequencies of the outer panel body and the inner panel body become still higher.

The panel set with any one of the third to fifth configurations may have the following configuration. The outer-side lateral part is provided with a protrusion that protrudes in a plate-thickness direction of the outer-side lateral part and extends in the second direction (sixth configuration).

In the panel set with the sixth configuration, the protrusion protruding in the plate-thickness direction of the outer-side lateral part in section perpendicular to the first direction (in section along the second direction) enhances the stiffness of the outer-side lateral part. Therefore, even when the outer panel body undergoes vibrations or when the inner panel body undergoes vibrations, vibrations of the outer-side lateral part of the stiffening member can be suppressed. The plate-thickness direction is, for example, the third direction perpendicular to the first direction and the second direction, and it is the direction in which the outer panel body and the inner panel body are stacked one upon another.

When the panel set has the fourth configuration, in which the outer-side lateral part has a flat portion and is not slack, and the sixth configuration, in which the outer-side lateral part has a protrusion protruding in the plate-thickness direction, the outer-side lateral part is more rigid. In this case, as compared with the case in which the panel set has only the fourth configuration, the outer-side lateral part is more difficult to deform in the direction in which the first outer-corner part and the second outer-corner part are arranged (the second direction), which makes it possible to provide the first portion and the second portion of the outer panel body with a stronger force reactive to the tensile or compressive force. Accordingly, in the structure with the fourth configuration in combination with the sixth configuration, when an external force is applied to the outer panel body, deformations of the first portion and the second portion of the outer panel body can be suppressed more as compared with the structure with the fourth configuration only. Thereby, the natural frequency of the outer panel component can be increased.

In the panel set with the sixth configuration, preferably, the protrusion protrudes in a direction towards the inner panel body, out of directions along the plate thickness of the outer-side lateral part (seventh configuration). However, the protrusion may protrude in a direction towards the outer panel body, out of the directions along the plate thickness of the outer-side lateral part.

The space between the outer panel body and the inner panel body is divided by the outer-side lateral part. Specifically, the space between the outer panel body and the inner panel body is divided into a space in the inner side of the outer-side lateral part (near the inner panel body) and a space in the outer side of the outer-side lateral part (near the outer panel body). The protrusion may protrude to the inner side or the outer side of the outer-side lateral part; however, to avoid interference with the member towards which the protrusion protrudes (the outer panel body or the inner panel body), the protrusion preferably protrudes into a larger space. Generally, the space in the inner side of the outer-side lateral part is larger than the space in the outer side of the outer-side lateral part. In this case, the seventh configuration is advantageous.

The panel set with any one of the third to seventh configurations preferably has the following configuration. The first inner-side lateral part lies on a side of the first vertical part opposite to a side where the outer-side lateral part lies, and the second inner-side lateral part lies on a side of the second vertical part opposite to a side where the outer-side lateral part lies (eighth configuration).

In the panel set with the eighth configuration, the first inner-side lateral part and the second inner-side lateral part extend in directions to separate from each other. Thus, in section perpendicular to the first direction, the stiffening member is shaped like a hat. In this case, it is easy to manufacture the stiffening member by press forming.

The above-described panel set preferably has the following configuration. The first outer-side corner part of the stiffening member is joined to the first portion of the outer panel body via a single or plural first adhesive part. The second outer-side corner part of the stiffening member is joined to the second portion of the outer panel body via a single or plural second adhesive part (ninth configuration).

In the panel set with the ninth configuration, the method of joining the outer panel body and the stiffening member is bonding by use of an adhesive. In this case, the joint between the outer panel body and the stiffening member is not seen on the outer surface of the outer panel body. Therefore, the surface quality and the design of the outer panel body become better, and the outer panel body has a good appearance.

In a typical example, the first adhesive part is one adhesive belt provided within a portion corresponding to the first portion in such a manner as to extend in the first direction, and the second adhesive part is one adhesive belt provided within a portion corresponding to the second portion in such a manner as to extend in the first direction. The first adhesive part may be one adhesive line provided within the portion corresponding to the first portion in such a manner as to extend in the first direction, and the second adhesive part may be one adhesive line provided within the portion corresponding to the second portion in such a manner as to extend in the first direction. The first adhesive part may consist of a plurality of adhesive lines provided within the portion corresponding to the first portion in such a manner as to extend parallel to one another, and the second adhesive part may consist of a plurality of adhesive lines provided within the portion corresponding to the second portion in such a manner as to extend parallel to one another.

When the panel set has the second configuration in which in section perpendicular to the first direction, the first outer-side corner part has a shape that fits the first portion of the outer panel body, and the second outer-side corner part has a shape that fits the second portion of the outer panel body, the gap between the outer panel body and the stiffening member at the time of boding by an adhesive becomes smaller. Accordingly, the outer panel body and the stiffening member can be bonded together by an adhesive in stable condition, which results in good-quality bonding.

However, the method of joining the outer panel body and the stiffening member is not limited to bonding by use of an adhesive. For example, when the outer panel body is not required to have a good appearance, the method of joining may be welding or mechanical fastening.

The method of joining the inner panel body and the stiffening member (the first inner-side lateral part and the second inner-side lateral part) is not particularly limited. For example, the method of joining is welding. Alternatively, the method of joining may be mechanical fastening or bonding by use of an adhesive.

The panel set with the ninth configuration preferably has the following configuration. The first adhesive part consists of a plurality of adhesive spots, and the adhesive spots are arranged on the first outer-side corner part, in the first direction at intervals. The second adhesive part consists of a plurality of adhesive spots, and the adhesive spots are arranged on the second outer-side corner part, in the first direction at intervals. (This is a tenth configuration.)

The tenth configuration leads to a reduction in the usage of an adhesive.

In a typical example, the above-described panel set is a back door of an automobile (eleventh configuration).

Among various panel sets, especially a back door is required to have a rigid back door panel as an outer panel component. Furthermore, the whole back door is demanded to be reduced in weight and to suppress an increase in uncomfortable noise for the occupants. This is for the following reasons. The back door has a larger surface area than any other panel set. The larger the surface area, the more likely to resonate. Therefore, when vibrations propagate from the engine, transmission, tires or the like to the back door, resonance is likely to occur, and thereby, muffle sound or drumming noise is likely to be produced. Thus, a back door is a panel set that is likely to resonate and requires an increase in natural frequency.

Therefore, like the eleventh configuration, the panel set is suited to be used as a back door. However, the panel set is not limited to a back door. For example, the panel set may be a hood (bonnet), a front door, a rear door, a side panel, or the like. In the panel set, the stiffening member is positioned such that the outer-side lateral part extends in the second direction. When the pane set is a back door, a front door, or a rear door, the second direction is, for example, an automobile height direction. In this case, the stiffening member is positioned such that the outer-side lateral part extends in the automobile height direction. However, when the pane set is a back door, a front door, or a rear door, the first direction may be an automobile height direction.

Some specific examples of panel sets according to some embodiments will hereinafter be described with reference to the drawings. In the drawings, the same or similar parts are provided with the same reference symbols, and repetitious descriptions of these same or similar parts will be omitted in appropriate cases.

[First Embodiment]

With reference to FIGS. 1 to 3, a panel set 100 according to a first embodiment will be described. The panel set 100 according to the present embodiment is made by combining an outer panel component 1 and an inner panel component 2. The panel set 100 is used in an automobile. For example, the panel set 100 is a back door.

In this description, in some cases, directions with respect to the panel set 100 are indicated by X direction, Y direction, and Z direction that are perpendicular to one another. X direction and Y direction are directions in which the outer panel component 1 spreads. Z direction is a direction that is substantially perpendicular to the directions in which the outer panel component 1 spreads, and the outer side O and the inner side I of the outer panel component 1 are defined by Z direction. In this description, X direction and Y direction can be referred to as a first direction and a second direction, respectively, and Z direction can be referred to as a third direction.

FIGS. 4 to 8 show typical back doors as examples of the panel set 100. FIG. 4 shows a plan view of the panel set 100 used as a back door. FIG. 5 shows a perspective view of the outer panel component 1 of the panel set 100. FIG. 6 shows a perspective view of the inner panel component 2 of the panel set 100. FIG. 7 shows a sectional view along the line VII-VII in FIG. 4. FIG. 8 shows a perspective view of an inner panel body 20 with an attached stiffening member 3. In each of the figures showing the back door, X direction (first direction) shows an automobile width direction, Y direction (second direction) shows an automobile height direction, and Z direction (third direction) shows an automobile front-back direction.

As shown in FIGS. 4 to 8, the back door (panel set) 100 is mainly composed of the outer panel component 1 and the inner panel component 2. In the space between the outer panel component 1 and the inner panel component 2, lamps, a hinge, a striker, etc. are located. Additionally, a stiffening member 3 (see FIG. 8) is provided between the outer panel 1 and the inner panel 2.

The outer panel component 1 is divided into a lower part that becomes a design surface, and an upper part that becomes a window frame. The lower part includes an outer panel body 10. Compatibly with the outer panel component 1, the inner panel component 2 is divided into a deeply drawn lower part, and an upper part that becomes a window frame. The lower part includes an inner panel body 20, and in this lower part, holes, and convex and concave portions are made. In the outer panel component 1, for example, the lower part including the outer panel body 10 has, in the periphery, a first marginal portion 11 located on the topside, a second marginal portion 12 on the underside, a third marginal portion 13 on the left, and a fourth marginal portion 14 on the right. In the inner panel component 2, the lower part including the inner panel body 10 has, in the periphery, a first marginal portion 21 located on the topside, a second marginal portion 22 on the underside, a third marginal portion 23 on the left, and a fourth marginal portion 24 on the right. The outer panel component 1 and the inner panel component 2 are joined together by hemming. The outer edge portions of the outer panel component 1 and the outer edge portions of the inner panel component 2 are joined together by hemming. In the outer panel component 1 and the inner panel component 2, the inner sides of the window frames in the respective upper parts are not joined by hemming. Therefore, in the lower part including the outer panel body 10 and the lower part including the inner panel body 20, the first marginal portion 11 and the first marginal portion 21, which become an upper part of a window frame, are not joined by hemming. For example, the first marginal portion 11 and the first marginal portion 21 are joined together by spot welding. In this paragraph, the outer edge portions mean the respective peripheral portions of the outer panel component 1 and the inner panel component 2.

As shown in FIGS. 4, 5 and 7, the outer panel body 10 has an apex part 10a. The outer panel body 10 is curved convexly outward O in section perpendicular to X direction (see FIG. 7). In the outer panel body 10, the apex part 10a of the curve extends in a direction along X direction. The extending direction of the apex part 10a of the curve is curved convexly outward O. Thus, also in section perpendicular to Y direction, the outer panel body 10 is curved convexly outward O. In the example shown by FIGS. 4 and 5, the outer panel body 10 has a plurality of apex parts 10a. One is in a central portion, and the others are in both end portions in X direction. In each section including one apex part 10a, a stiffening member 3 is provided. However, in the outer panel body 10, one apex part 10a may extend straight from one end to the other end.

With reference to FIGS. 1 to 3, which show a simplified model of an actual part such as a back door, the panel set 100 according to the present embodiment will be described. In the panel set 100, the outer panel body 10 is not curved in section perpendicular to Y direction, and the extending direction of the apex part 10a of the outer panel body 10 is straight.

The material of the outer panel component 1 is metal, for example. The metal is, for example, steel, aluminum, magnesium, an aluminum alloy, a magnesium alloy, or the like. Typically, the outer panel component 1 is manufactured by press forming a metal plate. Practically, the plate thickness of the outer panel component 1, that is, the plate thickness of the metal plate is not less than 0.3 mm and not more than 1.4 mm. From the perspective of formability, the tensile strength of the outer panel component 1 is preferably not more than 780 MPa. More preferably, the tensile strength of the outer panel component 1 is not less than 270 MPa and not more than 700 MPa.

These things for the outer panel component 1 apply to the inner panel component 2. Specifically, the material of the inner panel component 2 is metal, for example. The metal is, for example, steel, aluminum, magnesium, an aluminum alloy, a magnesium alloy, or the like. Preferably, the material of the inner panel component 2 is the same or the same kind as the material of the outer panel component 1. This is to avoid galvanic corrosion caused by contact between dissimilar metals. However, the materials of these components may differ from each other. Typically, the inner panel component 2 is manufactured by press forming a metal plate. Practically, the plate thickness of the inner panel component 2, that is, the plate thickness of the metal plate is not less than 0.3 mm and not more than 1.4 mm. From the perspective of formability, the tensile strength of the inner panel component 2 is preferably not more than 780 MPa. More preferably, the tensile strength of the inner panel component 2 is not less than 270 MPa and not more than 700 MPa.

FIGS. 1 to 3 show the overall structure of the panel set 100. FIG. 1 shows a perspective view of the panel set 100 after assembled. FIG. 2 shows an exploded perspective view of the panel set 100. FIGS. 1 and 2 are views of the panel set 100 from the side of the outer panel component 1, that is, from outside O. FIG. 3 shows a sectional view of the panel set 100 shown in FIG. 1 in a plane perpendicular to X direction.

As shown in FIGS. 1 to 3, the panel set 100 includes an outer panel component 1, and an inner panel component 2. The panel set 100 further includes a stiffening member 3. In the present embodiment, only one stiffening member 3 is provided. However, the number of stiffening members 3 provided may be two or more.

[Outer Panel Component 1]

The outer panel component 1 spreads in X direction (first direction) and in Y direction (second direction). The outer panel component 1 according to the present embodiment is equiangular quadrilateral in planar view along Z direction. The outer panel component 1 includes an outer panel body 10. As shown in FIGS. 1 and 2, the outer panel body 10 is equiangular quadrilateral in planar view along Z direction. The four corners of the equiangular quadrilateral are rounded. However, the outer panel component 1 may be rectangular, or trapezoidal, pentagonal or any shape other than equiangular quadrilateral in planar view. For example, when the panel set 100 is a back door, the outer panel component 1 may have a window frame (or sash) in any one side. The corners in planar view along Z direction may be rounded.

Since the outer panel body 10 is equiangular quadrilateral in planar view, the outer panel body 10 has four sides. The outer panel component 1 has a first marginal portion 11, a second marginal portion 12, a third marginal portion 13, and a fourth marginal portion 14 in the periphery of the outer panel body 10. The first marginal portion 11 is located on one side of the outer panel body 10 in Y direction (second direction). The second marginal portion 12 is located on the other side of the outer panel body 10 in Y direction. The third marginal portion 13 is located on one side of the outer panel body 10 in X direction (first direction). The fourth marginal portion 14 is located on the other side of the outer panel body 10 in X direction.

FIGS. 1 and 2 show an example in which the outer panel body 10 is square in planar view. However, the outer panel body 10 may be rectangular, or trapezoidal, pentagonal, or any shape other than equiangular quadrilateral in planar view. The corners in planar view may be rounded.

As shown in FIG. 3, the outer panel body 10 is curved convexly outward O in section perpendicular to X direction (first direction). Accordingly, the outer panel body 10 has an apex part 10a. A section of the outer panel body 10 is, for example, like an arc. However, as long as the outer panel body 10 is curved convexly outward O in section perpendicular to X direction (first direction), the section thereof may be like an elliptic arc or any other convex curve. With respect to the sectional shape, for example, the radius of curvature of the curve is 200 mm to 2000 mm. The radius of curvature may be varying. Like the outer panel component 1, the outer panel body 10 spreads in X direction (first direction) and in Y direction (second direction) perpendicular to X direction. FIG. 3 exaggerates the sectional shape of the outer panel body 10. Other drawings also include the same exaggeration.

[Inner Panel Component 2]

The inner panel component 2 is located in an inner side I of the outer panel component 1. The inner panel component 2 includes an inner panel body 20, inner panel punch shoulders 200, inner panel side walls 201, inner panel die shoulders 202, and inner panel flanges 203. In section perpendicular to X direction (first direction), the inner panel body 20 is located in the center, the inner panel punch shoulders 200 connect the inner panel body 20 to the respective inner panel side walls 201, and the inner panel die shoulders 202 connect the respective inner panel side walls 201 to the respective inner panel flanges 203. As shown in FIGS. 1 and 2, the inner panel body 20 is flat in shape. However, convex and concave portions and/or holes may be made in the inner panel body 20, and the inner panel body 20 may be curved. In section perpendicular to X direction (first direction), the inner panel body 20 may be inclined from Y direction, for example, because the inner panel side walls 201 on both sides of the inner panel body 20 are in different shapes. In section perpendicular to Y direction (second direction), the inner panel body 20 may be inclined from X direction, for example, because the inner panel side walls 201 on both sides of the inner panel body 20 are in different shapes.

The inner panel body 20 faces the outer panel body 10. As shown in FIGS.1 and 2, the inner panel body 20 is equiangular quadrilateral in planar view along Z direction. However, the inner panel body 20 may be rectangular, or trapezoidal, pentagonal or any shape other than equiangular quadrilateral in planar view. The corners in planar view may be rounded.

Since the inner panel body 20 is equiangular quadrilateral in planar view, the inner panel body 20 has four sides. The inner panel component 2 has a first marginal portion 21, a second marginal portion 22, a third marginal portion 23, and a fourth marginal portion 24 in the periphery of the inner panel body 20. The first marginal portion 21 is located on one side of the inner panel body 20 in Y direction (second direction). Specifically, the first marginal portion 21 is located at a position corresponding to the first marginal portion 11 of the outer panel component 1. The second marginal portion 22 is located on the other side of the inner panel body 20 in Y direction. Specifically, the second marginal portion 22 is located at a position corresponding to the second marginal portion 12 of the outer panel component 1. The third marginal portion 23 is located on one side of the inner panel body 20 in X direction (first direction). Specifically, the third marginal portion 23 is located at a position corresponding to the third marginal portion 13 of the outer panel component 1. The fourth marginal portion 24 is located on the other side of the inner panel body 20 in X direction. Specifically, the fourth marginal portion 24 is located at a position corresponding to the fourth marginal portion 14 of the outer panel component 1.

Each of the marginal portions 21, 22, 23 and 24 of the inner panel component 2 includes an inner panel punch shoulder 200, an inner panel side wall 201, an inner panel die shoulder 202, and an inner panel flange 203. These flanges 203 of the inner panel component 2 are joined to the corresponding marginal portions 11, 12, 13 and 14 of the outer panel component 1. In the present embodiment, the marginal portions 21, 22, 23 and 24 of the inner panel component 2 are joined to the corresponding marginal portions 11, 12, 13 and 14 of the outer panel component 1 by hemming (folding). Thereby, the inner panel component 2 becomes united with the outer panel component 1, and a space V is formed between the outer panel body 10 and the inner panel body 20. For example, when the panel set 100 is a back door, window frames are to be positioned in the outer panel component 1 and the inner panel component 2. In this case, hemming is not performed on the inner side of the window frames, and hemming is performed along the outer edges of the window frames.

However, the method of uniting the inner panel component 2 and the outer panel component 1 together is not limited to hemming. For example, the method of uniting may be welding, mechanical fastening, or bonding by use of an adhesive. The welding is spot welding, for example. The welding may be laser welding.

With respect to the outer panel component 1, the borders between the marginal portions 11, 12, 13 and 14 and the outer panel body 10 are defined as follows. In the state in which the outer panel component 1 and the inner panel component 2 are united together, the outer panel component 1 has portions that are in contact with and placed on the flanges 203 of the inner panel component 2. The portions of the outer panel component 1 that are in contact with and placed on the flanges 203 of the inner panel component 2 are the marginal portions 11, 12, 13 and 14, and the center portion of the outer panel component 1 that is not placed on the flanges 203 of the inner panel component 2 is the outer panel body 10.

[Stiffening Member 3]

The stiffening member 3 is positioned in the space V between the outer panel body 10 and the inner panel body 20. The stiffening member 3 is shaped like a hat in section perpendicular to X direction (first direction).

The material of the stiffening member 3 is, for example, metal. The metal is, for example, steel, aluminum, magnesium, an aluminum alloy, a magnesium alloy, or the like. Preferably, the material of the stiffening member 3 is the same or the same kind as the material of the outer panel component 1 or the material of the inner panel component 2. This is to avoid galvanic corrosion caused by contact between dissimilar metals. Preferably, the material of the stiffening member 3 is the same as the material of the outer panel component 1 and the inner panel component 2. In some cases, baking finishing is performed on the panel set 100, and in these cases, if these elements (stiffening member 3, outer panel component 1, and inner panel component 2) are made of the same material, these elements have the same coefficient of linear expansion, which prevents thermal deformation caused by differences in coefficient of linear expansion between these elements. However, the material of the stiffening member 3 may be different from the material of the panel components 1 and 2. Typically, the stiffening member 3 is manufactured by press forming a metal plate. The plate thickness of the stiffening member 3 is not particularly limited. Practically, the plate thickness of the stiffening member 3, that is, the plate thickness of the metal plate is only required to be not less than 0.10 mm, and preferably, not less than 0.15 mm. If the plate thickness is thick, the stiffening member 3 will be heavy, and in view of the effect of weight reduction, the plate thickness is desirably not more than 0.8 mm. The tensile strength of the stiffening member 3 is not particularly limited. When a steel plate is used in view of easiness in press formation, the tensile strength of the stiffening member 3 is not less than 270 MPa and not more than 700 MPa.

The stiffening member 3 includes an outer-side lateral part 30, a first vertical part 31, a second vertical part 32, a first inner-side lateral part 33, a second inner-side lateral part 34, a first outer-side corner part 35, a second outer-side corner part 36, a first inner-side corner part 47, and a second inner-side corner part 38. The outer-side lateral part 30 is entirely flat and extends substantially in Y direction (second direction). The first outer-side corner part 35 connects the outer-side lateral part 30 and the first vertical part 31. The second outer-side corner part 36 connects the outer-side lateral part 30 and the second vertical part 32.

In section perpendicular to X direction (first direction), the outer-side lateral part 30 has a straight portion from the first outer-side corner part 35 to the second outer-side corner part 36. From another perspective, the outer-side lateral part 30, across the entire width, has a flat portion from the first outer-side corner part 35 to the second outer-side corner part 36. In this case, in section perpendicular to X direction (first direction), the outer-side lateral part 30 is not slack and is tense. In the present embodiment, since the outer-side lateral part 30 is entirely flat, in any section perpendicular to X direction (first direction), the outer-side lateral part 30 is straight. However, the outer-side lateral part 30 may have a flat portion from the first outer-side corner part 35 to the second outer-side corner part 36 only partly in the width. In the example shown by FIG. 3, the outer-side lateral part 30 extends in Y direction. The outer-side lateral part 30 may have a smaller dimension in X direction (first direction) (width) than a dimension in Y direction (second direction) (length). The dimension in X direction (width) is preferably not more than a half of the dimension in Y direction, and more preferably, not more than one third of the dimension in Y direction. The dimension in X direction (width) is preferably, for example, not less than one tenth of the dimension in Y direction. However, the dimension in X direction (width) may be equal to the dimension in Y direction or may be greater than the dimension in Y direction.

For example, when the dimension in X direction (width) of the outer-side lateral part 30 is not more than a half of the dimension in Y direction, the outer-side lateral part 30 has a shape that is properly long in Y direction. In this case, the weight of the stiffening member 3 can be reduced. If the dimension in X direction (width) is not more than one third of the dimension in Y direction, a higher effect can be obtained. The presence of the stiffening member 3 enhances the stiffness of the portion of the outer panel body 10 immediately above (in Z direction) the stiffening member 3. Moreover, the stiffening member 3 stiffens the portions of the outer panel body 10 around the portion immediately above (in Z direction) the stiffening member 3, and the rigidities of the portions around the portion immediately above (in Z direction) the stiffening member 3 are enhanced. Therefore, even if the stiffening member 3 is narrow and long, the stiffening member 3 exerts the effect of enhancing stiffness. However, if the dimension in X direction (width) is less than one tenth of the dimension in Y direction, the effect of enhancing stiffness becomes low although the weight of the stiffening member 3 can be reduced.

In section perpendicular to X direction, the outer-side lateral part 30 may be inclined from Y direction. FIG. 9 shows an example of this case. In the example shown by FIG. 9, the outer-side lateral part 30 is inclined from Y direction in section perpendicular to X direction. The outer-side lateral part 30 may be inclined from Y direction when viewed in Z direction. The outer-side lateral part 30 may be inclined from X direction in section perpendicular to Y direction.

Referring to FIG. 3 again, the first vertical part 31 is entirely flat and extends substantially in Z direction. As with the first vertical part 31, the second vertical part 32 is entirely flat and extends substantially in Z direction. In section perpendicular to X direction, the first vertical part 31 may be inclined from Z direction or extend precisely in Z direction. As with the first vertical part 31, in section perpendicular to X direction, the second vertical part 32 may be inclined from Z direction or extend precisely in Z direction. The first vertical part 31 may be inclined from X direction when viewed in Z direction. As with the first vertical part 31, the second vertical part 32 may be inclined from X direction when viewed in Z direction.

The first inner-side corner part 37 connects the first vertical part 31 and the first inner-side lateral part 33. The first inner-side lateral part 33 has a shape that substantially fits the inner panel body 20, and lies on the side of the first vertical part 31 opposite to the side where the outer-side lateral part 30 lies. In the case shown by FIGS. 1 and 2, the first inner-side lateral part 33 is flat. The second inner-side corner part 38 connects the second vertical part 32 and the second inner-side lateral part 34. The second inner-side lateral part 34 has a shape that substantially fits the inner panel body 20, and lies on the side of the second vertical part 32 opposite to the side where the outer-side lateral part 30 lies. In the case shown by FIGS. 1 and 2, the second inner-side lateral part 34 is flat.

In the example shown by FIG. 3, since the first inner-side lateral part 33 and the second inner-side lateral part 34 have shapes that substantially fit the inner panel body 20, the first inner-side lateral part 33 in not inclined from Y direction and extends precisely in Y direction. As with the first inner-side lateral part 33, the second inner-side lateral part 34 extends precisely in Y direction.

However, depending on the shape of the inner panel body 20, the first inner-side lateral part 33 may be inclined from Y direction in section perpendicular to X direction. As with the first inner-side lateral part 33, the second inner-side lateral part 34 may be inclined from Y direction in section perpendicular to X direction. FIG. 10 shows an example of this case. In the example shown by FIG. 10, the first inner-side lateral part 33 and the second inner-side lateral part 34 are inclined from Y direction in section perpendicular to X direction. Additionally, the first inner-side lateral part 33 may be inclined from X direction in section perpendicular to Y direction. As with the first inner-side lateral part 33, the second inner-side lateral part 34 may be inclined from X direction in section perpendicular to Y direction. Furthermore, the first inner-side lateral part 33 may be inclined from Y direction when viewed in Z direction. As with the first inner-side lateral part 33, the second inner-side lateral part 34 may be inclined from Y direction when viewed in Z direction.

With reference to FIG. 3 again, the first inner-side lateral part 33 and the second inner-side lateral part 34 are preferably along the shape of the corresponding portions of the inner panel body 20, and more preferably, are flat. However, for drainage of water or liquid paint used for painting, the first inner-side lateral part 33 and the second inner-side lateral part 34 may have convex and concave portions such as bearing faces, joggles, and the like. Additionally, the first inner-side lateral part 33 and the second inner-side lateral part 34 may have holes.

In section perpendicular to X direction (first direction), the first vertical part 31 has a straight portion from the first outer-side corner part 35 to the first inner-side corner part 37, and the second vertical part 32 has a straight portion from the second outer-side corner part 36 to the second inner-side corner part 38. From another perspective, the first vertical part 31, across the entire width, has a flat portion from the first outer-side corner part 35 to the first inner-side corner part 37, and the second vertical part 32, across the entire width, has a flat portion from the second outer-side corner part 36 to the second inner-side corner part 38. In this case, in section perpendicular to X direction, the first vertical part 31 and the second vertical part 32 are not slack, and each of the first vertical part 31 and the second vertical part 32 is tense. In the present embodiment, since the first vertical part 31 and the second vertical part 32 are entirely flat, the first vertical part 31 and the second vertical part 32 are straight in any section perpendicular to X direction. However, the first vertical part 31 may be flat from the first outer-side corner part 35 to the first inner-side corner part 37 only partly in the width. The second vertical part 32 may be flat from the second outer-side corner part 36 to the second inner-side corner part 38 only partly in the width.

In the present embodiment, the first vertical part 31 is not at a negative angle to the outer-side lateral part 30, and the second vertical part 32 is not at a negative angle to the outer-side lateral part 30. Specifically, as shown in FIG. 3, the angle $\theta 1$ between the outer-side lateral part 30 and the first vertical part 31 is a right angle or an obtuse angle (is equal to or more than 90 degrees), and the angle $\theta 2$ between the outer-side lateral part 30 and the second vertical part 32 is a right angle or an obtuse angle. Each of the angles $\theta 1$ and $\theta 2$ means the angle on the inner side I (on the side near the inner panel body 20) of the outer-side lateral part 30. In this case, when the stiffening member 3 is manufactured by press forming, it is possible to release the manufactured product from the die. Accordingly, the stiffening member 3 can be manufactured easily by press forming.

The stiffening member 3 positioned between the outer panel body 10 and the inner panel body 20 is joined to the outer panel body 10 and the inner panel body 20. As shown in FIG. 3, the first outer-side corner part 35 of the stiffening member 3 is joined to the first portion 10b of the outer panel body 10 that is away from the apex part 10a. The first portion 10b is in an area near the first marginal portion 11 of the outer panel component 1. Specifically, the first portion 10b is a portion that is shifted from the middle point between the apex part 10a and the first marginal portion towards the first marginal portion 11. However, the first portion 10b may be located at the middle point between the apex part 10a and the first marginal portion 11. The second outer-side corner part 36 of the stiffening member 3 is joined to the second portion 10c of the outer panel body 10 that is opposite the first portion 10b with the apex part 10a in between. The second portion 10c is in an area near the second marginal portion 12 of the outer panel component 1. Specifically, the second portion 10c is a portion that is shifted from the middle point between the apex part 10a and the second marginal portion 12 towards the second marginal portion 12. However, the second portion 10c may be located at the middle point between the apex part 10a and the second marginal portion 12. Each of the inner-side lateral part 33 and the second inner-side lateral part 34 is joined to the inner panel body 20.

The stiffening member 3 has a width in X direction (first direction). The width of the stiffening member 3 is constant. However, the width of the stiffening member 3 may be inconstant.

In the present embodiment, in section perpendicular to X direction (first direction), the first outer-side corner part 35 has a shape that fits the first portion 10b of the outer panel body 10. In this case, the area where the first portion 10b of the outer panel body 10 and the first outer-side corner part 35 of the stiffening member 3 are in contact with each other is large, and in the joint part between the first portion 10b and the first outer-side corner part 35, the gap between the first portion 10b and the first outer-side corner part 35 becomes small. The second outer-side corner part 36 has a shape that fits the second portion 10c of the outer panel body 10. In this case, the area where the second portion 10c of the outer panel body 10 and the second outer-side corner part 36 of the stiffening member 3 are in contact with each other is large, and in the joint part between the second portion 10c and the second outer-side corner part 36, the gap between the second portion 10c and the second outer-side corner part 36 becomes small. Therefore, the outer panel body 10 and the stiffening member 3 can be joined in stable posture (condition), and good connection can be achieved. Preferably, these gaps are substantially constant. Preferably, in section perpendicular to Y direction (second direction) as well as in section perpendicular to X direction (first direction), the first outer-side corner part 35 has a shape that fits the first portion 10b of the outer panel body 10, and the second outer-side corner part 36 has a shape that fits the second portion 10c of the outer panel body 10. When the first outer-side corner part 35 and the second outer-side corner part 36 have shapes that fit the first portion 10b and the second portion 10c of the outer panel body 10, respectively, both in section perpendicular to X direction (first direction) and in section perpendicular to Y direction (second direction), better connection between the outer panel body 10 and the stiffening member 3 can be achieved.

In the outer panel body 10, the first portion 10b is a portion corresponding to the first outer-side corner part 35, and the second portion 10c is a portion corresponding to the second outer-side corner part 36.

In the present embodiment, the shape of the first outer-side corner part 35 fits the first portion 10b of the outer panel body 10, and both in section perpendicular to X direction and in section perpendicular to Y direction, the tilting direction of the outer surface of the first outer-side corner part 35 conforms with the tilting direction of the inner surface of the first portion 10b. Likewise, the shape of the second outer-side corner part 36 fits the second portion 10c of the outer panel body 10, and both in section perpendicular to X direction and in section perpendicular to Y direction, the tilting direction of the outer surface of the second outer-side corner part 36 conforms with the tilting direction of the inner surface of the second portion 10c.

The tilting direction of the outer surface of the first outer-side corner part 35 conforming with the tilting direction of the inner surface of the first portion 10b in section perpendicular to X direction means that the tilting direction of the outer surface of the first outer-side corner part 35 is substantially parallel to the tilting direction of the inner surface of the first portion 10b in section perpendicular to X direction (first direction). In section perpendicular to X direction (first direction), being substantially parallel means that the angle between these tilting directions is within 6 degrees. The tilting direction of the outer surface of the first outer-side corner part 35 conforming with the tilting direction of the inner surface of the first portion 10b in section perpendicular to Y direction means that the tilting direction of the outer surface of the first outer-side corner part 35 is substantially parallel to the tilting direction of the inner surface of the first portion 10b in section perpendicular to Y direction (second direction). In section perpendicular to Y direction (second direction), being substantially parallel means that the angle between these tilting directions is within 6 degrees.

Likewise, the tilting direction of the outer surface of the second outer-side corner part 36 conforming with the tilting direction of the inner surface of the second portion 10c in section perpendicular to X direction means that the tilting direction of the outer surface of the second outer-side corner part 36 is substantially parallel to the tilting direction of the inner surface of the second portion 10c in section perpendicular to X direction (first direction). In section perpendicular to X direction (first direction), being substantially parallel means that the angle between these tilting directions is within 6 degrees. The tilting direction of the outer surface of the second outer-side corner part 36 conforming with the tilting direction of the inner surface of the second portion 10c in section perpendicular to Y direction means that the tilting direction of the outer surface of the second outer-side corner part 36 is substantially parallel to the tilting direction of the inner surface of the second portion 10c in section perpendicular to Y direction (second direction). In section perpendicular to Y direction (second direction), being substantially parallel means that the angle between these tilting directions is within 6 degrees.

In section perpendicular to X direction (first direction), the tilting direction of the inner surface of the first portion 10b of the outer panel body 10 means the direction to which a straight line connecting both ends of the inner surface of the first portion 10b tilts. In section perpendicular to Y direction (second direction), the tilting direction of the inner surface of the first portion 10b of the outer panel body 10 means the direction to which a straight line connecting both ends of the inner surface of the first portion 10b tilts. Likewise, in section perpendicular to X direction (first direction), the tilting direction of the inner surface of the second portion 10c of the outer panel body 10 means the direction to which a straight line connecting both ends of the inner surface of the second portion 10c tilts. In section perpendicular to Y direction (second direction), the tilting direction of the inner surface of the second portion 10c of the outer panel body 10 means the direction in which a straight line connecting both ends of the inner surface of the second portion 10c tilts.

In section perpendicular to X direction, the tilting direction of the outer surface of the first outer-side corner part 35 means the direction to which a straight line connecting both ends of the outer surface of the first outer-side corner part 35 tilts. In section perpendicular to Y direction, the tilting direction of the outer surface of the first outer-side corner part 35 means the direction to which a straight line connecting both ends of the outer surface of the first outer-side corner part 35 tilts. Likewise, in section perpendicular to X direction, the tilting direction of the outer surface of the second outer-side corner part 36 means the direction to which a straight line connecting both ends of the outer surface of the second outer-side corner part 36 tilts. In section perpendicular to Y direction, the tilting direction of the outer surface of the second outer-side corner part 36 means the direction to which a straight line connecting both ends of the outer surface of the second outer-side corner part 36 tilts.

With respect to the sectional shape of the outer panel body 10, as described above, the radius of curvature is 200 mm to 2000 mm. The radius of curvature may be varying. Therefore, the first outer-side corner part 35 and the second outer-side corner part 36 may be substantially flat.

In view of easiness in manufacturing the stiffening member 3, as shown in FIG. 3, preferably, the first outer-side corner part 35 has a flat shape, and the second outer-side corner part 36 has a flat shape. In this case, more specifically, in section perpendicular to X direction (first direction), the first outer-side corner part 35 includes a straight portion, a small circular arc portion connecting one end of this straight portion and the outer-side lateral part 30, and a small circular arc portion connecting the other end of the straight portion and the first vertical part 31. Also, in section perpendicular to Y direction (second direction), the first outer-side corner part 35 has a straight portion. Likewise, in section perpendicular to X direction (first direction), the second outer-side corner part 36 includes a straight portion, a small circular arc portion connecting one end of this straight portion and the outer-side lateral part 30, and a small circular arc portion connecting the other end of the straight portion and the second vertical part 32. Also, in section perpendicular to Y direction (second direction), the second outer-side corner part 36 has a straight portion.

As mentioned above, in view of easiness in manufacturing the stiffening member 3, it is preferred that the first outer-side corner part 35 and the second outer-side corner part 36 are flat; however, in view of an increase in natural frequency, the first outer-side corner part 35 is preferably curved along the first portion 10b, and the second outer-side corner part 36 is curved along the second portion 10c. More specifically, in section perpendicular to X direction (first direction), the first outer-side corner part 35 includes a curved portion that is curved along the first portion 10b, a small circular arc portion connecting one end of this curved portion and the outer-side lateral part 30, and a small circular arc portion connecting the other end of the curved portion and the first vertical part 31. In section perpendicular to Y direction (second direction), the first outer-side corner part 35 has a straight portion. Likewise, in section perpendicular to X direction (first direction), the second outer-side corner part 36 includes a curved portion that is curved along the second portion 10c, a small circular arc portion connecting one end of this curved portion and the outer-side lateral part 30, and a small circular arc portion connecting the other end of the curved portion and the second vertical part 32. In section perpendicular to Y direction (second direction), the second outer-side corner part 36 has a straight portion.

Even when the outer panel body 10 is curved outward both in section perpendicular to X direction (first direction) and in section perpendicular to Y direction (second direction), the first outer-side corner part 35 and the second outer-side corner part 36 are preferably flat in view of easiness in manufacturing the stiffening member 3. However, in view of an increase in natural frequency, in section perpendicular to Y direction (second direction), the first outer-side corner part 35 may have a curved portion that is curved along the first portion 10b. Likewise, in section perpendicular to Y direction (second direction), the second outer-side corner part 36 may have a curved portion that is curved along the second portion 10c.

The description above is of a case in which the first outer-side corner part 35 has a shape that fits the first portion 10b of the outer panel body 10 both in section perpendicular to X direction and in section perpendicular to Y direction; however, in section perpendicular to Y direction, the shape of the first outer-side corner part 35 need not fit the first portion 10b of the outer panel body 10. The description above is also of a case in which the second outer-side corner part 36 has a shape that fits the second portion 10c of the outer panel body 10 both in section perpendicular to X direction and in section perpendicular to Y direction; however, in section perpendicular to Y direction, the shape of the second outer-side corner part 36 need not fit the second portion 10c of the outer panel body 10.

The first outer-side corner part 35 of the stiffening member 3 is joined to the first portion 10b of the outer panel body 10 via a single first adhesive part 41. The second outer-side corner part 36 of the stiffening member 3 is joined to the second portion 10c of the outer panel body via a single second adhesive part 42.

FIG. 11 shows a perspective view of the stiffening member 3 in the panel set 100 according to the first embodiment. As shown in FIG. 11, the single first adhesive part 41 is provided entirely on the first outer-side corner part 35, the single second adhesive part 42 is provided entirely on the second outer-side corner part 36. In this case, the single first adhesive part 41 is in a band-like shape extending in X direction (first direction) within a portion corresponding to the first portion 10b, and the single second adhesive part 41 is in a band-like shape extending in X direction (first direction) within a portion corresponding to the second portion 10c.

In sum, with reference to FIGS. 1 to 3, in the present embodiment, the method of joining the outer panel body 10 and the stiffening member 3 is bonding by use of an adhesive. In this case, the joint between the outer panel body 10 and the stiffening member 3 is not seen on the outer surface of the outer panel body 10. Therefore, the outer panel body 10 looks good from outside O and is excellent in design and surface quality.

The adhesive used for the first adhesive part 41 and the second adhesive part 42 is, for example, a rubber elastic material mainly composed of synthetic rubber. Such an adhesive is generally called mastic adhesive. Since each of the first adhesive part 41 and the second adhesive part 42 is a rubber elastic body, each of the first adhesive part 41 and the second adhesive part 42 fits in the curved outer panel body 10 and bonds the stiffening member 3 with the outer panel body 10. Especially when the first outer-side corner part 35 has a shape that fits the first portion 10b of the outer panel body 10 as described above, the thickness of the first adhesive part 41 is constant. Likewise, when the second outer-side corner part 36 has a shape that fits the second portion 10c of the outer panel body 10, the thickness of the second adhesive part 42 is constant. In this case, it becomes possible to join the outer panel body 10 and the stiffening member 3 together in stable condition (posture), which results in better connection.

However, the method of joining the outer panel body 10 and the stiffening member 3 is not limited to bonding by use of an adhesive. In other words, the method of joining the stiffening member 3 (the first outer-side corner part 35 and the second outer-side corner part 36) to the outer panel body 10 is not particularly limited. For example, when the outer panel body 10 is not required to look good, the method of joining may be welding or mechanical fastening. The welding is, for example, spot welding. The welding may be laser welding.

The method of joining the stiffening member 3 (the first outer-side corner part 35 and the second outer-side corner part 36) to the inner panel body 20 is not particularly limited. For example, the method of joining is welding. The welding is, for example, spot welding. The welding may be laser welding. The method of joining may be mechanical fastening or boding by use of an adhesive.

[Effects]

The first outer-side corner part 35 and the second outer-side corner part 36 of the stiffening member 3 are joined to the outer panel body 10. Thereby, the outer-side lateral side 30 is tensely spread from the first portion 10b to the second portion 10c of the outer panel body 10 and keeps away from the apex part 10a of the outer panel body 10. Since the first outer-side corner part 35 and the second outer-side corner part 36 are joined to the outer panel body 10, for example, the outer lateral part 30 is away from the outer panel body 10. The outer-side lateral part 30 is not joined to the outer panel body 10. However, portions of the outer-side lateral part 30 that are near the first outer-side corner part 35 and near the second outer-side corner part 36 may be joined to the outer panel body 10. In this case, when an external force is applied to the outer panel body 10, a tensile force or a compressive force acts on the outer-side lateral part 30 in the second direction. Meanwhile, the first portion 10b and the second portion 10c of the outer panel body 10 receive a force reactive to the tensile or compressive force in the second direction from the outer-side lateral part 30. Thereby, the first portion 10b and the second portion 10c of the outer panel body 10 keep their positional relation in which they are away from each other with the apex part of the curve in between, and a shape change of the outer panel body 10 in section perpendicular to the first direction can be suppressed. The stiffening member 3 has a width in X direction (first direction). Therefore, the first outer-side corner part 35 and the second outer-side corner part 36 are joined respectively to the first portion 10b and the second portion 10c of the outer panel body 10 with a specified range in the first direction. Thereby, when the first portion 10b and the second portion 10c of the outer panel body 10 are about to make a shape change seen in section perpendicular to the second direction, the first outer-side corner part 35 and the second outer-side corner part 36 produce a reactive force. Then, a shape change of the outer panel body 10 seen in section perpendicular to the second direction is also suppressed. Thus, both a shape change of the outer panel body 10 seen in section perpendicular to the first direction and a shape change of the outer panel body 10 seen in section perpendicular to the second direction are suppressed, and thereby, a deformation of the surface shape of the outer panel body 10 are suppressed. Thus, the outer panel component 1 is stiffened by the stiffening member 3, and the stiffness of the outer panel component 1 is enhanced.

The first inner-side lateral part 33 is connected to the first vertical part 31 via the first inner-side corner part 37, and the second inner-side lateral part 34 is connected to the second vertical part 32 via the second inner-side corner part 38. Since the stiffening member 3 has a width in the first direction, the first inner-side lateral part 33 and the second inner-side lateral part 34 are joined to the inner panel body 20 with a specified range in the first direction. This produces the following effect. For example, when an external force that may cause a shape change of the inner panel body 20 seen in section perpendicular to the second direction (Y direction) is applied to the inner panel body 20, the first inner-side lateral part 33 and the second inner-side lateral part 34 produce reactive forces in the separate portions to which the first inner-side lateral part 33 and the second inner-side lateral part 34 are joined. Therefore, a shape change of the inner panel body 20 seen in section perpendicular to the second direction is suppressed. Thus, the stiffening member 3 enhances the stiffness of the inner panel component 2 as well, and the stiffness of the inner panel component 2 is enhanced.

With respect to the elements of the stiffening member 3 located on the side of the inner panel component 2, the first inner-side later part 33 connects to the first inner-side corner part 37, and further, the first inner-side corner part 37 connects to the first vertical part 31. When an external force that may cause the inner panel body 20 to make a shape change seen in section perpendicular to the second direction (Y direction) is applied to the inner panel body 20, the reactive force produced by the first inner-side lateral part 33 and the second inner-side lateral part 34 is increased due to the presence of the first vertical part 31. Accordingly, as compared with a stiffening member without a first vertical part, this stiffening member 3 stiffens the inner panel component 2 more, and the stiffness of the inner panel component 2 is enhanced more. This effect of the first vertical part 31 is obtained by the second vertical part 32 in the same way.

With respect to the elements of the stiffening member 3 located on the side of the outer panel component 1, the outer-side lateral part 30 connects to the first outer-side corner part 35, and further, the first outer-side corner part 35 connects to the first vertical part 31. When an external force that may cause a shape change of the outer panel body 10 seen in section perpendicular to the second direction (Y direction) is applied to the outer panel body 10, the reactive force produced by the first outer-side corner part 35 is increased due to the presence of the first vertical part 31. Accordingly, as compared with a stiffening member without a first vertical part, the stiffening member 3 stiffens the outer panel component 1 more, and the stiffness of the outer panel component 1 is enhanced more. This effect of the first vertical part 31 is obtained by the second vertical part 32 in the same way.

The outer-side lateral part 30 of the stiffening member 3 is connected to the first inner-side lateral part 31 via the first vertical part 33 and connected to the second inner-side lateral part 34 via the second vertical part 32. In this case, as compared with a stiffening member with neither a first vertical part nor a second vertical part (for example, a stiffening member consisting of an outer-side lateral part 30, a first outer-side corner part 35 and a second outer-side corner part 36, a stiffening member consisting of a first inner-side corner part 37 and a first inner-side lateral part 33, or a stiffening member consisting of a second inner-side corner part 38 and a second inner-side lateral part 34), the area moment of inertia of the stiffening member 3 itself becomes higher, and as a result, the stiffness of the panel set 100 stiffened with the stiffening member 3 is enhanced. The first vertical part 31 and the second vertical part 32 extend from the outer panel body 10 to the inner panel body 20, and the outer panel body 10 and the inner panel body 20 are supported by each other via the stiffening member 3. In this case, components that are enhanced in stiffness are connected to each other, and therefore, when an external force is applied to one of the components, the external force propagates to the other component to which the external force is not directly applied. Then, even though both the components deform, the amount of deformation of each component is little.

Thus, the outer panel body 10 and the inner panel body 20 are connected to each other via the first vertical part 31 and the second vertical part 32. Accordingly, the effect of the stiffening member 3 to stiffen the panel set 100 is higher than the effect of the outer-side lateral part 30 alone, higher than the effect of only the first inner-side lateral part 33 (or the second inner-side lateral part 34) and the first inner-side corner part 37 (or the second inner-side corner part 38), and higher than the effect of only the outer-side lateral part 30, the first inner-side lateral part 33 (or the second inner-side lateral part 34) and the first inner-side corner part 37 (or the second inner-side corner part 38). Therefore, even when vibrations propagate to the panel set 100, the outer panel body 10 and the inner panel body 20 are unlikely to deform, and the rigidities of the outer panel body 10 and the inner panel body 20 are enhanced. Then, the natural frequency becomes higher than in a case without the stiffening member 3.

As thus far described, in the panel set 100 according to the present invention, the stiffening member 3 enhances the rigidities of the outer panel component 1 and the inner panel component 2. The outer panel component 1 and the inner panel component 2 that are enhanced in stiffness are connected to each other by the stiffening member 3. Thereby, the stiffness of the outer panel component 1 is enhanced more by the stiffening member 3, and the stiffness of the inner panel component 2 is enhanced more by the stiffening member 3. Accordingly, the stiffness of the panel set 100 is enhanced more, and the natural frequency of the panel set 100 becomes still higher. Therefore, even when the weight of the panel set 100 is reduced, an increase in uncomfortable noise for the occupants can be suppressed.

[Preferable Condition 1: Lengths in Y direction (Second Direction) with Respect to Stiffening Member 3]

FIG. 12 is a sectional view showing a preferable condition 1 for the panel set 100 according to the first embodiment. FIG. 12 corresponds to FIG. 3. FIG. 12 shows a sectional view of the panel set 100 shown in FIG. 1 in a plane perpendicular to X direction (first direction). Referring to FIG. 12, the elements of the panel set 100 shown in section perpendicular to X direction are defined as follows.

The length in Y direction (second direction) from the apex part 10a of the outer panel body 10 to the end of the outer panel body 10 near the first portion 10b is denoted by P1. The end of the outer panel body 10 near the first portion 10b is the side, out of the two sides in Y direction (second direction), on which the first marginal portion 11 is located. The length in the second direction from the apex part 10a of the outer panel body 10 to the joint between the first outer-side corner part 35 and the outer panel body 10 is denoted by S1. To be precise, the joint between the first outer-side corner part 35 and the outer panel body 10 means the midpoint in Y direction (second direction) of the first outer-side corner part 35 in section perpendicular to X direction. The length in the second direction from the apex part 10a of the outer panel body 10 to the joint between the first inner-side lateral part 33 and the inner panel body 20 is denoted by T1. To be precise, the joint between the first inner-side lateral part 33 and the inner panel body 20 means the midpoint in Y direction (second direction) of the joint in section perpendicular to X direction. It is preferred that the thus defined lengths P1, S1 and T1 satisfy Formulae (1) to (3) below.

$$0.35 \leq S1/P1 \leq 0.80 \quad (1)$$

$$0.50 \leq T1/P1 \leq 0.90 \quad (2)$$

$$S1 < T1 \quad (3)$$

In the example shown by FIG. 12, the outer panel body 10 is rectangular, and therefore, the lengths P1, S1 and T1 shown in section perpendicular to X direction (first direction) are equal respectively to P1, S1 and T1 shown in planar view. When the outer panel body 10 is not rectangular, and the length P1 is varying along X direction, it is preferred that the lengths P1, S1 and T1 shown in section perpendicular to X direction (first direction) satisfy Formulae (1) to (3).

The length in Y direction (second direction) from the apex part 10a of the outer panel body 10 to the end of the outer panel body 10 near the second portion 10c is denoted by P2. The end of the outer panel body 10 near the second portion 10c is the side, out of the two sides in Y direction (second direction), on which the second marginal portion 12 is located. The length in the second direction from the apex part 10a of the outer panel body 10 to the joint between the second outer-side corner part 36 and the outer panel body 10 is denoted by S2. To be precise, the joint between the second outer-side corner part 36 and the outer panel body 10 means the midpoint in Y direction (second direction) of the second outer-side corner part 36 in section perpendicular to X direction. The length in the second direction from the apex part 10a of the outer panel body 10 to the joint between the second inner-side lateral part 34 and the inner panel body 20 is denoted by T2. To be precise, the joint between the second inner-side lateral part 34 and the inner panel body 20 means the midpoint in Y direction (second direction) of the joint in section perpendicular to X direction. It is preferred that the thus defined lengths P2, S2 and T2 preferably satisfy Formulae (1) to (3) below.

$$0.35 \leq S2/P2 \leq 0.80 \qquad (4)$$

$$0.50 \leq T2/P2 \leq 0.90 \qquad (5)$$

$$S2 < T2 \qquad (6)$$

In the example shown by FIG. 12, the outer panel body 10 is rectangular, and therefore, the lengths P2, S2 and T2 shown in section perpendicular to X direction (first direction) are equal respectively to P2, S2 and T2 shown in planar view. When the outer panel body 10 is not rectangular, and the length P2 is varying along X direction, it is preferred that the lengths P2, S2 and T2 shown in section perpendicular to X direction (first direction) satisfy Formulae (4) to (6).

There is a suitable range for the dimension in Y direction (second direction) of the stiffening member 3 to certainly increase the natural frequencies of the outer panel body 1 and the inner panel body 2. However, if the dimension in Y direction of the stiffening member 3 is too great for the outer panel body 10, the joints between the stiffening member 3 and the outer panel body 10 become too far from the center of the outer panel body 10, and the joints between the stiffening member 3 and the inner panel body 20 become too far from the center of the inner panel body 20.

The center of the outer panel body 10 is away from the periphery of the outer panel body 10 and accordingly is likely to have a large vibration amplitude. Therefore, if the joints between the stiffening member 3 and the outer panel body 10 are too far from the center of the outer panel body 10, it becomes difficult to suppress vibrations of the outer panel body 10, and the effect of increasing the natural frequency becomes low. The center of the inner panel body 20 is away from the periphery of the inner panel body 20 and accordingly is likely to have a large vibration amplitude. Therefore, if the joints between the stiffening member 3 and the inner panel body 20 are too far from the center of the inner panel body 20, it becomes difficult to suppress vibrations of the inner panel body 20, and the effect of increasing the natural frequency becomes low.

From this perspective, when the lengths in Y direction (second direction) satisfy Formulae (1) and (4), it means that the two joints between the stiffening member 3 and the outer panel body 10 are positioned at an appropriately long interval (S1 + S2) in Y direction. In other words, it means that the full length in Y direction of the outer-side lateral part 30 is appropriately long. When the lengths in Y direction satisfy Formulae (2) and (5), it means that the two joints between the stiffening member 3 and the inner panel body 20 are positioned at an appropriately long interval (T1 + T2) in Y direction. Therefore, by satisfying these Formulae, it becomes possible to certainly increase the natural frequencies of the outer panel component 1 and the inner panel component 2.

When the lengths satisfy Formula (3), the joint between the first inner-side lateral part 33 and the inner panel body 20 is positioned further in an outer portion than the joint between the first outer-side corner part 35 and the outer panel body 10. When the lengths satisfy Formula (6), the joint between the second inner-side lateral part 34 and the inner panel body 20 is positioned further in an outer portion than the joint between the second outer-side corner part 36 and the outer panel body 10. This arrangement of the joints in the outer portions improves the area moment of inertia of the stiffening member and enhances the stiffness of the stiffening member and the stiffness of the panel set 100, as compared with a case of arrangement of the joints in inner portions. Therefore, even when vibrations propagated to the panel set 100 are about to cause vibrations of the outer panel component 1 or the inner panel component 2, the outer panel component 1 and the inner panel component 2 are unlikely to vibrate because of their enhanced rigidities. Then, the natural frequencies of the outer panel component 1 and the inner panel component 2 become higher.

Furthermore, to satisfy conditions that the first vertical part 31 is not at a negative angle to the outer-side lateral part 30 and that the second vertical part 32 is not at a negative angle to the outer-side lateral part 30, the lengths need to satisfy at least Formulae (3) and (6). When the lengths satisfy these formulae, it is possible to manufacture the stiffening member 3 easily by press forming.

The stiffening member 3 is joined to the inner panel body 20 at the first inner-side lateral part 33 and the second inner-side lateral part 34. Even when the dimension in Y direction (second direction) of the first inner-side lateral part 33 is long, it has little influence on the performance. If the dimension of the first inner-side lateral part 33 is too long, the weight of the stiffening member 3 is increased. On the other hand, if the length of the first inner-side lateral part 33 is too short, it becomes difficult to ensure a portion for joining. Therefore, the dimension in Y direction of the first inner-side lateral part 33 is preferably not less than 10 mm and not more than 30 mm. From the same perspective, the dimension in Y direction of the second inner-side lateral part 34 is preferably not less than 10 mm and not more than 30 mm.
The dimension in Y direction (second direction) of the stiffening member 3 may be determined depending on the shape of the curvature of the outer panel body 10. Specifically, when the lengths P1 and P2 of the outer panel body 10 gradually change along X direction (first direction), the dimension in Y direction of the stiffening member 3 may gradually change along X direction.

[Preferable Condition 2: Dimension in X direction (First Direction) of Stiffening Member 3]

FIG. 13 is a plan view showing a preferable condition 2 for the panel set 100 according to the first embodiment. FIG. 13 shows a plan view of the panel set 100 shown in FIG. 1 when viewed in Z direction from the outside O. In FIG. 13, the stiffening member 3, which is behind the outer panel body 10, is shown by solid line for easier understanding.
With reference to FIG. 13, the elements of the panel set 100 are defined as follows. The length in X direction (first direction) of the outer panel body 10 from one side to the other side is denoted by Q. The one side in X direction of the outer panel body 10 is the side on which the third marginal portion 13 is located. The other side in X direction of the outer panel body 10 is the side on which the fourth marginal portion 14 is located. In this case, the dimension W in X direction of the stiffening member 3 preferably satisfies Formula (7) below.

$$0.01 \times Q \leq W \leq 0.50 \times Q \qquad (7)$$

The dimension W in X direction of the stiffening member 3 can be also referred to as width of the stiffening member 3. The dimension W in X direction (width) of the stiffening member 3 means an average of measurements in X direction of the outer-side lateral part 30 in the whole extent in Y direction of the outer-side lateral part 30.
In the example shown by FIG. 13, the outer panel body 10 is rectangular, and the length Q shown in section perpendicular to Y direction (second direction) is equal to the length Q shown in planar view. When the outer panel body 10 is not rectangular, and the length Q is varying along Y direction, it is preferred that the length Q shown in section perpendicular to Y direction (second direction) satisfies Formula (7).
To certainly increase the natural frequencies of the outer panel component 1 and the inner panel component 2, it is preferred that the dimension W in X direction (first direction) of the stiffening member 3 is large. However, if the dimension W is too large, the weight of the stiffening member 3 is increased. On the other hand, even if the dimension W is small, it does not influence the performance. However, if the dimension W is too small, the dimensions in X direction (first direction) of the first inner-side lateral part 33 and the second inner-side lateral part 34 become small, and it becomes difficult to ensure places for joining. Therefore, the dimension W is preferably not less than 5 mm.
From this perspective, when the dimension W satisfies Formula (7), the dimension W in X direction (first direction) of the stiffening member 3 is appropriate for the outer panel body 10. Accordingly, by satisfying Formula (7), it becomes possible to certainly increase the natural frequencies of the outer panel component 1 and the inner panel component 2 while suppressing a weight increase.
More preferably, the dimension W in X direction of the stiffening member 3 satisfies Formula (7') that defines a narrower range than Formula (7).

$$0.05 \times Q \leq W \leq 0.30 \times Q \qquad (7')$$

By satisfying Formula (7'), it becomes possible to certainly increase the natural frequencies of the outer panel component 1 and the inner panel component 2 while suppressing a weight increase more.

[Preferable Condition 3: Position in X direction (First Direction) of Stiffening Member 3]

FIG. 14 is a plan view showing a preferable condition 3 for the panel set 100 according to the first embodiment. As with FIG. 13, FIG. 14 shows a plan view of the panel set 100 shown in FIG. 1 when viewed in Z direction from the outside O.
With reference to FIG. 14, the elements of the panel set 100 are defined as follows. As with the preferable condition 2 shown by FIG. 13, the length in X direction (first direction) of the outer panel body 10 from one side to the other side is denoted by Q. In this case, it is preferred that the stiffening member 3 is positioned to be at least partly in the range from the point defined by 0.45 × Q to the point defined by 0.55 × Q in X direction (first direction) of the outer panel body 10. Here, the one side in X direction (first direction) of the outer panel body 10 is defined to be at point 0, and the other side in X direction of the outer panel body 10 is defined to be at point Q.

As described above in connection with the preferable condition 1, the center of the outer panel body 10 is away from the periphery of the outer panel body 10. Therefore, the center in X direction (first direction) of the outer panel body 10 is likely to bend due to vibrations.

From this perspective, under the preferable condition 3, the stiffening member 3 at least lies in the substantially center in X direction (first direction) of the outer panel body 10. Therefore, it becomes possible to sufficiently suppress vibrations of the outer panel body 10 and to increase the natural frequency of the outer panel component 1. It is preferred that the stiffening member 3 lies in the center in X direction of the outer panel body 10.

[Second Embodiment]

FIG. 15 is a perspective view of a stiffening member 3 of a panel set 100 according to a second embodiment. FIG. 16 is a sectional view of the panel set 100 including the stiffening member 3 according to the second embodiment. The present embodiment is a modification of the first embodiment.

As shown in FIGS. 15 and 16, in the present embodiment, in section perpendicular to X direction (first direction), the shapes of the first outer-side corner part 35 and the second outer-side corner part 36 do not fit the first portion 10b and the second portion 10c, respectively, of the outer panel body 10. The first outer-side corner part 35 is circular arc in section, and the radius of curvature of the circular arc is sufficiently smaller than the radius of curvature of the outer panel body 10. For example, unlike the first embodiment, the radius of curvature of the first outer-side corner part 35 is not more than one fiftieth of the radius of curvature of the first portion 10b of the outer panel body 10. Likewise, the second outer-side corner part 36 is circular arc in section, and the radius of curvature of the circular arc is sufficiently smaller than the radius of curvature of the outer panel body 10. For example, unlike the first embodiment, the radius of curvature of the second outer-side corner part 36 is not more than one fiftieth of the radius of curvature of the second portion 10c of the outer panel body 10.

With respect to the sectional shape of the first outer-side corner part 35, the radius of curvature of the circular arc may be constant or varying. When the radius of curvature is varying, in section perpendicular to X direction (first direction), the radius of curvature is determined from a circular arc passing through three points, i.e., the boundary point between the outer-side lateral part 30 and the first outer-side corner part 35, the midpoint of the first outer-side corner part 35, and the border point between the first outer-side corner part 35 and the first vertical part 31. Likewise, with respect to the sectional shape of the second outer-side corner part 36, the radius of curvature of the circular arc may be constant or varying.

In the present embodiment, the area where the first portion 10b of the outer panel body 10 and the first outer-side corner part 35 of the stiffening member 3 are in contact with each other is small. Likewise, the area where the second portion 10c of the outer panel body 10 and the second outer-side corner part 36 of the stiffening member 3 are in contact with each other is small. Therefore, the thickness of the first adhesive part 41 is not uniform, and the thickness of the second adhesive part 42 is not uniform; however, it is possible to join the stiffening member 3 to the outer panel body 10. Therefore, the first outer-side corner part 35 and the second outer-side corner part 36 may be circular arc in section. When the radius of curvature of the first outer-side corner part 35 is not more than one fiftieth of the radius of curvature of the first portion 10b of the outer panel body 10 as in the present embodiment, the joint strength between the outer panel body 10 and the stiffening member 3 is low, as compared with a case in which the first outer-side corner part 35 has a shape that fits the first portion 10b as in the first embodiment. Likewise, when the radius of curvature of the second outer-side corner part 36 is not more than one fiftieth of the radius of curvature of the second portion 10c of the outer panel body 10, the joint strength between the outer panel body 10 and the stiffening member 3 is low, as compared with a case in which the second outer-side corner part 36 has a shape that fits the second portion 10c as in the first embodiment.

[Third Embodiment]

FIG. 17 is a perspective view of a stiffening member 3 of a panel set 100 according to a third embodiment. FIG. 18 is a sectional view of the panel set 100 including the stiffening member 3 according to the third embodiment. The present embodiment is a modification of the first embodiment.

As shown in FIGS. 17 and 18, in the present embodiment, the outer-side lateral part 30 is provided with a protrusion 30a. The protrusion 30a protrudes in the plate-thickness direction of the outer-side lateral part 30 and extends in Y direction (second direction). The shape of the protrusion 30a in section perpendicular to Y direction is varying along Y direction. In the example shown by FIGS. 17 and 18, the protrusion 30a protrudes in the direction towards the inner panel body 20, out of the directions along the plate thickness. The outer-side lateral part 30 has, partly in the width, i.e., on both sides of the protrusion 30a, flat portions from the first outer-side corner part 35 to the second outer-side corner part 36.

If the outer-side lateral part 30 is simply flat, when an external vibration force is applied, the center in section perpendicular to X direction (first direction) of the outer-side lateral part 30 is likely to vibrate. Specifically, the stiffening member 3 stiffens the outer panel component 1 and the inner panel component 2 and curbs noise caused by vibrations applied thereto; however, if the outer-side lateral part 30 is simply flat, the stiffening member 3 may vibrate easily, and there is a possibility that the stiffening member 3 itself will be a noise source.

From this perspective, in the present embodiment, the protrusion 30a provided in the outer-side lateral part 30 has two side walls that uprise from the outer-side lateral part 30 and extend in Y direction. These side walls of the protrusion 30a enhance the stiffness of the outer-side lateral part 30. In this way, the stiffness of the outer-side lateral part 30 is enhanced, and even when the panel set 100 undergoes vibrations, the natural frequency of the outer-side lateral part 30 of the stiffening member 3 becomes higher, which enhances the effect of suppressing generation of noise from the stiffening member.

In addition to enhancing the stiffness of the outer panel component 1, the protrusion 30a provided in the outer-side lateral part 30 enhances the stiffness of the inner panel component 2 that is connected to the outer panel component 1 via the stiffening member 3. Thereby, the natural frequencies of the outer panel component 1 and the inner panel component 2 become still higher, and the effect of suppressing generation of noise from the panel set 100 becomes higher.

The space V between the outer panel body 10 and the inner panel body 20 is divided by the outer-side lateral part 30. Specifically, the space V between the outer panel body 10 and the inner panel body 20 is divided into a space on the inner side I of the outer-side lateral part 30 (on the side of the inner panel body 20) and a space on the outer side O of the outer-side lateral part 30 (on the side of the outer panel body 10). In the present embodiment, the protrusion 30a protrudes in the direction towards the inner panel body 20 (to the inner side I), out of the directions along the plate thickness. In the present invention, the space on the inner side I of the outer-side lateral part 30 is larger than the space on the outer side O of the outer-side lateral part 30. In this case, interference of the protrusion 30a with a component that lies ahead in the protruding direction (i.e., the inner panel body 20) can be avoided.

However, the protrusion 30a may protrude to the inner side I or the outer side O of the outer-side lateral part 30. However, to avoid interference of the protrusion 30a with a component that lies ahead in the protruding direction (i.e., the outer panel body 10 or the inner panel body 20), it is preferred that the protrusion 30a protrudes into a larger space.

The protrusion 30a may extend to the first outer-side corner part 35 or may extend further to the first vertical part 31. The protrusion 30a may extend to the second outer-side corner part 36 or may extend further to the second vertical part 32.

The direction in which the protrusion 30a extends may be inclined from the direction in which the outer-side lateral part 30 extends (the direction in which the first outer-side corner part 35 and the second outer-side corner part 36 are arranged). In other words, the direction in which the protrusion 30a extends may be inclined from Y direction (second direction).

The protrusion 30a is preferably positioned in the center of the outer-side lateral part 30 in the direction in which the outer-side lateral part 30 extends. The center of the outer-side lateral part 30 in the direction in which the outer-side lateral part 30 extends vibrate easily, and therefore, by positioning the protrusion 30a in the center of the outer-side lateral part 30 in the direction in which the outer-side lateral part 30 extends, the stiffness of the outer-side lateral part 30 is enhanced more, and the natural frequency can be increased more.

[Modification 1]

FIG. 19 is a perspective view of Modification 1 of the stiffening member 3 of the panel set 100 according to the third embodiment. As shown in FIG. 19, in Modification 1, the shape of the protrusion 30a in section perpendicular to Y direction is constant along Y direction.

[Modification 2]

FIG. 20 is a perspective view of Modification 2 of the stiffening member 3 of the panel set 100 according to the third embodiment. As shown in FIG. 20, in Modification 2, the outer-side lateral part 30 are provided with two protrusions 30a. The two protrusions 30a are arranged in X direction (first direction). The number of protrusions 30a provided may be one, or three or more. In other words, the outer-side lateral part 30 may be provided with a plurality of protrusions 30a.

[Modification 3]

FIG. 21 is a perspective view of Modification 3 of the stiffening member 3 of the panel set 100 according to the third embodiment. As shown in FIG. 21, in Modification 3, the protrusion 30a has a hole 30b at the bottom in Z direction. Because of the hole 30b, the weight of the stiffening member 3 becomes lighter.

In any of Modifications 1 to 3, each of the protrusions 30a has two side walls that uprise from the outer-side lateral part 30 and extend in Y direction (second direction). Because of these side walls of the protrusion 30a, the stiffness of the outer-side lateral part 30 becomes higher. In the outer-side lateral part 30, a portion with no protrusion 30a is flat from the first outer-side corner part 35 to the second outer-side corner part 36.

In the present embodiment, the size of the protrusion 30a has an influence on the effectiveness to reduce vibration occurrences in the outer-side lateral part 30. Therefore, it is important to specify the size of the protrusion 30a.

The height of the protrusion 30a is preferably not less than 2.5 times the plate thickness of the outer-side lateral part 30, and more preferably, not less than 5.0 times the plate thickness of the outer-side lateral part 30. The length in Y direction (second direction) of the protrusion 30a is preferably not less than two thirds of the dimension in Y direction of the outer-side lateral part 30.

The protrusion 30a of the present embodiment may be applied to the stiffening member 3 according to the second embodiment as well as to the stiffening member 3 according to the first embodiment.

[Fourth Embodiment]

FIG. 22 is a perspective view of a stiffening member 3 of a panel set 100 according to a fourth embodiment. FIG. 23 is a sectional view of the panel set 100 including the stiffening member 3 according to the fourth embodiment. The present embodiment is a modification of the third embodiment.

As shown in FIGS. 22 and 23, in the present embodiment, the first vertical part 31 is provided with a step-like first protrusion 31a. The first protrusion 31a protrudes in the plate-thickness direction of the first vertical part 31 and extends in Z direction. The shape of the first protrusion 31a in section perpendicular to Z direction is constant along Z direction. The first protrusion 31a extends to the first inner-side corner part 37 and further to the first inner-side lateral part 33. In the example shown by FIGS. 22 and 23, the first protrusion 31a protrudes in the direction to the side where the first inner-side lateral part 33 lies, out of the directions along the plate thickness. A second protrusion 32a is provided in the second vertical part 32 in the same way as the first protrusion 31a. The first vertical part 31, partly in the width, and more specifically, on both sides of the first protrusion 31a, has flat portions from the first outer-side corner part 35 to the first inner-side corner part 37. The second vertical part 32, partly in the width, and more specifically, on both sides of the second protrusion 32a, has flat portions from the second outer-side corner part 36 to the second inner-side corner part 38.

If the first vertical part 31 is simply flat and has a great dimension in Z direction, it would be likely that in section perpendicular to X direction, the center of the first vertical part 31 vibrates easily. From this perspective, in the present embodiment, the first protrusion 31a provided in the first vertical part 31 has two side walls that uprise from the first vertical part 31 and extend in Z direction. Because of these side walls of the first protrusion 31a, the stiffness of the first vertical part 31 becomes higher. Therefore, even when the outer panel component 1 or the inner panel component 2 undergoes vibrations, vibrations of the first vertical part 31 of the stiffening member 3 can be effectively suppressed.

If the second vertical part 32 is simply flat and has a great dimension in Z direction, it would be likely that in section perpendicular to X direction, the center of the second vertical part 32 vibrates easily. From this perspective, in the present embodiment, the second protrusion 32a provided in the second vertical part 32 has two side walls that uprise from the second vertical part 32 and extend in Z direction. Because of these side walls of the second protrusion 32a, the stiffness of the second vertical part 32 becomes higher. Therefore, even when the outer panel component 1 or the inner panel component 2 undergoes vibrations, vibrations of the second vertical part 32 of the stiffening member 3 can be effectively suppressed.

The first protrusion 31a provided in the first vertical part 31 enhances the stiffness of the first vertical part 31, and the second protrusion 32a provided in the second vertical part 32 enhances the stiffness of the second vertical part 32. Thereby, the rigidities of the outer panel component 1 and the inner panel component 2 that are connected to each other via the first vertical part 31 and the second vertical part 32 are enhanced more. Then, the natural frequencies of the outer panel component 1 and the inner panel component 2 become still higher, and the effect of suppressing generation of noise from the panel set 100 can be enhanced.

The first protrusion 31a may protrude to the side where the first inner-side lateral part 33 lies as shown in FIGS. 22 and 23 or protrude to the side where the outer-side lateral part 30 lies. Likewise, the second protrusion 32a may protrude to the side where the outer-side lateral part 30 lies.

As shown in FIGS. 22 and 23, the first protrusion 31a extends to the first inner-side corner part 37 and further to the first inner-side lateral part 33, and moreover, the first protrusion 31a may extend to the first outer-side corner part 35 and further to the outer-side lateral part 30. Likewise, the second protrusion 32a extends to the second inner-side corner part 38 and further to the second inner-side lateral part 34, and moreover, the second protrusion 32a may extend to the second outer-side corner part 36 and further to the outer-side lateral part 30.

[Modification 4]

FIG. 24 is a perspective view of Modification 4 of the stiffening member 3 of the panel set 100 according to the fourth embodiment. As shown in FIG. 24, in Modification 4, the first outer-side corner part 35 and the first vertical part 31 are provided with three first protrusions 31a. The three first protrusions 31a are arranged in X direction (first direction). The first protrusions 31a protrude in the direction to the side where the outer-side lateral part 30 lies, out of the directions along the plate thickness. The number of first protrusions 31a provided may be two, or four or more. In sum, the first outer-side corner part 35 and the first vertical part 31 may be provided with a plurality of first protrusions 31a. However, one or more first protrusions 31a may be provided only in the first vertical part 31. Alternatively, the first protrusions 31a may extend from the first vertical part 31 to the first inner-side corner part 37.

Additionally, the second outer-side corner part 36 and the second vertical part 32 are provided with three second protrusions 32a. The three second protrusions 32a are arranged in X direction (first direction). The second protrusions 32a protrude in the direction to the side where the outer-side lateral part 30 lies, out of the directions along the plate thickness. The number of second protrusions 32a provided may be two, or four or more. In sum, the second outer-side corner part 36 and the second vertical part 32 may be provided with a plurality of second protrusions 32a. However, one or more second protrusions 32a may be provided only in the second vertical part 32. Alternatively, the second protrusions 32a may extend from the second vertical part 32 to the second inner-side corner part 38.

[Modification 5]

FIG. 25 is a perspective view of Modification 5 of the stiffening member 3 of the panel set 100 according to the fourth embodiment. As shown in FIG. 25, in Modification 5, a first hole 31b is made in the first vertical part 31. The first vertical part 31 does not have any first protrusions. Because of the first hole 31b, the weight of the stiffening member 3 becomes lighter. Likewise, a second hole 32b is made in the second vertical part 32.

Even if the first vertical part 31 is simply flat, as long as the dimension in Z direction of the first vertical part 31 is small, the stiffness of the first vertical part 31 would have only a little influence on vibration. Accordingly, there is no problem with making the hole 31b in the first vertical part 31. Even if the second vertical part 32 is simply flat, as long as the dimension in Z direction of the second vertical part 32 is small, the stiffness of the second vertical part 32 would have only a little influence on vibration. Accordingly, there is no problem with making the hole 23b in the second vertical part 32. However, it is preferred that the sizes of the first hole 31b and the second hole 32b are small or that there is no holes 31b or 32b.

In the first vertical part 31, a portion with no first protrusion 31a is straight from the first outer-side corner part 35 to the first inner-side corner part 37. In the second vertical part 32, a portion with no second protrusion 32a is straight from the second outer-side corner part 36 to the second inner-side corner part 38. In other words, the first vertical part 31, partly in the width, and more specifically, on both sides of the first hole 31b, has a flat portion from the first outer-side corner part 35 to the first inner-side corner part 37. The second vertical part 32, partly in the width, and more specifically, on both sides of the second hole 31b, has a flat portion from the second outer-side corner part 3 to the second inner-side corner part 38.

In the present embodiment, the size of the first protrusion 31a has an influence on the effectiveness to reduce vibration occurrences in the first vertical part 31. The size of the second protrusion 32a has an influence on the effectiveness to reduce vibration occurrences in the second vertical part 32. Therefore, it is important to specify the sizes of the first protrusion 31a and the second protrusion 32a.

The height of the protrusion 31a is preferably not less than 2.5 times the plate thickness of the first vertical part 31, and more preferably, not less than 5.0 times the plate thickness of the first vertical part 31. The length in Z direction of the protrusion 31a is preferably not less than two thirds of the dimension in Z direction of the first vertical part 31. The same applies to the second protrusion 32a.

[Fifth Embodiment]

FIG. 26 is a perspective view of a stiffening member 3 of a panel set 100 according to a fifth embodiment. The present embodiment is a modification of the fourth embodiment.

As shown in FIG. 26, in the present embodiment, protrusions 30a are formed respectively at open edges along Y direction of the outer-side lateral part 30. The protrusions 30a are formed at the respective centers of the open edges of the outer-side lateral part 30. The open edges of the outer-side lateral part 30 are partly bent to the inner side I (towards the inner panel body 20), and thereby, the protrusions 30a protrude to the inner side I. The outer lateral part 30, partly in the width, and more specifically, between the protrusions 30a, has a flat portion from the first outer-side corner part 35 to the second outer-side corner part 36.

First protrusions 31a are formed respectively at open edges along Z direction (third direction) of the first vertical part 31. The protrusions 31a are formed at the respective centers of the open edges of the first vertical part 31. The open edges of the first vertical part 31 are partly bent in the direction to the side where the outer-side lateral part 30 lies, out of the directions along the plate thickness, and thereby, the protrusions 31a protrude to the side where the outer-side lateral part 30 lies. In the same way as the first protrusions 31a, second protrusions 32a are formed respectively at open edges of the second vertical part 32. The first vertical part 31, partly in the width, and more specifically, between the protrusions 31a, has a flat portion from the first outer-side corner part 35 to the first inner-side corner part 37. The second vertical part 32, partly in the width, and more specifically, between the protrusions 32a, has a flat portion from the second outer-side corner part 36 to the second inner-side corner part 38.

Additionally, third protrusions 33a are formed on the first inner-side lateral part 33. Specifically, the third protrusions 33a are formed respectively at open edges along Y direction (second direction) of the firs inner-side lateral part 33. The third protrusions 33a are formed in the respective centers of the open edges of the first inner-side lateral part 33. The open edges of the inner-side lateral part 33 are partly bent to the outer side O (towards the outer panel body 10), and thereby, the protrusions 33a protrude to the outer side O. In the same way as the third protrusion 33a, fourth protrusions 34a are formed on the second inner-lateral part 34.

[Modification 6]

FIG. 27 is a perspective view of Modification 6 of the stiffening member 3 of the panel set 100 according to the fifth embodiment. As shown in FIG. 27, in Modification 6, protrusions 30a are formed respectively at the entire open edges along Y direction (second direction) of the outer-side lateral part 30.

First protrusions 31a are formed respectively at the entire open edges along Z direction (third direction) of the first vertical part 31. In the same way as the first protrusions 31a, protrusions 32a are formed respectively at the entire open edges of the second vertical part 32.

Third protrusions 33a are formed respectively at the entire open edges along Y direction (second direction) of the first inner-side lateral part 33. In the same way as the third protrusions 33a, fourth protrusions 34a are formed respectively at the entire open edges of the second inner-side lateral part 34. Moreover, an additional third protrusion 33aa is formed at the open edge along X direction (first direction) of the first inner-side lateral part 33. In the same way as the third protrusions 33a and 33aa, fourth protrusions 34a and an additional fourth protrusion 34aa are formed on the second inner-side lateral part 34.

All of the outer-side lateral part 30, the first vertical part 31, the second vertical part 32, the first inner-side lateral part 33 and the second inner-side lateral part 34 or only some of these parts may be provided with the protrusions 30a, 31a, 32a, 33a, 34a, 33aa, 34aa. Additionally, the first outer-side corner part 35, the second outer-side corner part 36, the first inner-side corner part 37, and the second inner-side corner part 38 may be provided with similar protrusions as described above. The protrusions formed on the first outer-side corner part 35 and the protrusions formed on the second outer-side corner part 36 preferably protrude to the side opposite to the side where the outer panel body 10 lies, i.e., towards the inner panel body 20. The protrusions formed on the first inner-side corner part 37 and the protrusions formed on the second inner-side corner part 38 preferably protrude to the side opposite to the side where the inner-panel body 20 lies, i.e., towards the outer panel body 10.

[Sixth Embodiment]

FIG. 28 is a perspective view of a stiffening member 3 of a panel set according to a sixth embodiment. The present embodiment is a modification of the first embodiment.

As shown in FIG. 28, in the present embodiment, a single first adhesive part 41 is provided on part of the first outer-side corner part 35. In this case, the single first adhesive part 41 is provided in such a manner to extend linearly in X direction (first direction) within a portion corresponding to the first portion. A single second adhesive part 42 is provided on part of the second outer-side corner part 36. In this case, the single second adhesive part 42 is provided in such a manner to extend linearly in X direction (first direction) within a portion corresponding to the second portion.

[Modification 7]

FIG. 29 is a perspective view of Modification 7 of the stiffening member 3 of the panel set 100 according to the sixth embodiment. As shown in FIG. 29, in Modification 7, the first adhesive part 41 provided on the first outer-side corner part 35 consists of a plurality of adhesive lines that are parallel to each other. The second adhesive part 42 provided on the second outer-side corner part 36 consists of a plurality of adhesive lines that are parallel to each other. The number of adhesive lines of the first adhesive part 41 may be two or more. The number of adhesive lines of the second adhesive part 42 may be two or more.

[Modification 8]

FIG. 30 is a perspective view of Modification 8 of the stiffening member 3 of the panel set 100 according to the sixth embodiment. As shown in FIG. 30, in Modification 8, the first adhesive part 41 provided on the first outer-side corner part 35 is a single adhesive spot. The second adhesive part 42 provided on the second outer-side corner part 36 is a single adhesive spot.

[Modification 9]

FIG. 31 is a perspective view of Modification 9 of the stiffening member 3 of the panel set 100 according to the sixth embodiment. As shown in FIG. 31, in Modification 9, the first adhesive part 41 provided on the first outer-side corner part 35 consists of a plurality of adhesive spots that are arranged in X direction (first direction) at intervals. The second adhesive part 42 provided on the second outer-side corner part 36 consists of a plurality of adhesive spots that are arranged in X direction at intervals. The plurality of adhesive spots of the first adhesive part 41 may be arranged in a row in X direction, may be arranged in a plurality of rows, or may be positioned at random. The plurality of adhesive spots of the second adhesive part 42 are positioned in the same way as the adhesive spots of the first adhesive part 41.

Practically, Modification 9 is preferable, that is, the first adhesive part 41 preferably consists of a plurality of adhesive spots, and the second adhesive part 42 preferably consists of a plurality of adhesive spots. This leads to a decrease in the usage of the adhesive. To join the outer panel body 10 and the stiffening member 3 in stable condition, thereby to ensure sufficient adhesion area and to achieve sufficient adhesion strength, it is preferred that the amount of adhesive on each spot of the first adhesive part 41 and the second adhesive part 42 is 2 to 4 g. In this case, the size of each adhesive spot of the first adhesive part 41 is preferably not less than 10 mm and not more than 50 mm in equivalent circle diameter in planar view. The equivalent circle diameter means the diameter of a circle of which the area is equal to the area of the adhesive spot. For example, when the adhesive spot is a circle, the equivalent circle diameter is the diameter of the circle. When the adhesive spot is an ellipse, the equivalent circle diameter is the average of the length of the major axis and the length of the shorter axis of the ellipse. When the adhesive spot is a closed surface, the equivalent circle diameter is the average of the longer dimension and the shorter dimension of the closed surface. The intervals in X direction between the adhesive spots of the first adhesive part 41 is preferably not less than 40 mm and not more than 100 mm. Likewise, the size of each adhesive spot of the second adhesive part 42 is preferably not less than 10 mm and not more than 50 mm in equivalent circle diameter in planar view. The intervals between the adhesive spots of the second adhesive part 42 is preferably not less than 40 mm and not more than 100 mm.

The conditions for the present embodiment may be applied to the stiffening members 3 according to the second to fifth embodiments as well as to the stiffening member 3 according to the first embodiment.

[Seventh Embodiment]

FIG. 32 is a plan view of a panel set 100 according to a seventh embodiment. FIG. 32 is a plan view of the panel set 100 when viewed in Z direction from the outside O. For easy understanding, in FIG. 32, the stiffening member 3 that is behind the outer panel body 10 is shown by solid line. The present embodiment is a modification of the first embodiment.

As shown in FIG. 32, in the present embodiment, two stiffening members 3 are arranged side by side in X direction (first direction). The number of stiffening members 3 provided may be three or more. However, as the number of stiffening members 3 provided is increasing, the number of joint parts of the stiffening members 3 to the outer panel body 10 and the inner panel body 20 increases. From the perspective of weight reduction and manufacturing efficiency, it is preferred that the number of stiffening members 3 provided is small.

When a plurality of stiffening members 3 are provided, those stiffening members 3 may be the same or different in size (for example, width, dimension in a direction perpendicular to the width direction, height). When a plurality of stiffening members 3 are provided, the protrusions formed on those stiffening members 3 may be the same or different in configuration (for example, shape, depth, direction).

Even when a plurality of stiffening members 3 are provided, Formula (7) is applicable. In this case, W in Formula (7) should be the total dimension in X direction (total width) of the stiffening members 3. In this case, it is preferred that at least one of the stiffening members 3 is positioned to be at least partly in the range from the point $0.45 \times Q$ to the point $0.55 \times Q$ in X direction (first direction) of the outer panel body 10.

The conditions for the present embodiment may be applied to the stiffening members 3 according to the second to sixth embodiments as well as to the stiffening member 3 according to the first embodiment.

[Conditions of Numerical Ranges in Embodiments]

The effects produced by the numerical ranges specified in the embodiments above become more effective under the following conditions. The dimension in X direction of the outer panel body 10 is not more than 1800 mm, and the dimension in Y direction is not more than 1500 mm. These values of dimensions in both directions are the maximum values. The minimum value of dimension in X direction is 800 mm, and the minimum value of dimension in Y direction is 300 mm. The maximum interval between the outer panel body 10 and the inner panel body 20 is not more than 400 mm. The lower limit of the maximum interval is 50 mm.

The plate thickness of the outer panel component 1 is not less than 0.3 mm and not more than 1.4 mm. The tensile strength of the outer panel component 1 is not less than 270 MPa and not more than 780 MPa. The plate thickness of the inner panel component 2 is not less than 0.3 mm and not more than 1.4 mm. The tensile strength of the inner panel component 2 is not less than 270 MPa and not more than 780 MPa. The plate thickness of the stiffening member 3 is not less than 0.15 mm and not more than 0.8 mm. The tensile strength of the stiffening member 3 is not less than 270 MPa and not more than 700 MPa.

The apex part 10a of the outer panel body 10 is located within a range of $\pm P1 \times 0.2$ from the center in Y direction of the outer panel body 10. The value S1/P1 may be different from the value S2/P2. The value T1/P1 may be different from the value T2/P2.

The width of the stiffening member 3 may be constant or varying within a range of 40%. For example, when the width of the stiffening member 3 is 100 mm, the stiffening member 3 may have a constricted part with a width of 60 mm. When the outer-side lateral part 30 of the stiffening member 3 is provided with the protrusion 30a, a hole 30b may be made in the bottom of the protrusion 30a.

[Example 1]

In order to confirm the effects of the present embodiment, a CAE analysis was conducted. Table 1 shows the detailed conditions of the CAE analysis and analysis results. For the CAE analysis, a commercially available general-purpose solver LS-DYNA ver. 971 (made by ANSYS) was used. For the CAE analysis, models of the panel sets 100 according to the above-described embodiments were prepared under various conditions.

The conditions that were common to all the panel sets 100 were as follows: in planar view, the dimension in X direction of the outer panel body 10 was 400 mm; in planar view, the dimension in Y direction of the outer panel body 10 was 400 mm; in section perpendicular to X direction, the radius of curvature of the curve of the outer panel body 10 was 1000 mm; the position in Y direction of the apex part 10a of the outer panel body 10 was the center in Y direction of the outer panel body (P1 = P2 = 200); the minimum height in Z direction of the side walls of the inner panel component 2 was 15 mm (at the position of the apex part 10a of the outer panel body 10); the maximum height in Z direction of the side walls of the inner panel component 2 was 40 mm (at the positions of the edges of the outer panel body 10); the method of joining the inner panel component 2 and the outer panel component 1 was hemming; the materials of the outer panel component 1, the inner panel component 2 and the stiffening member 3 were steel plates having a yield strength of 180 MPa and a tensile strength of 300 MPa; the dimensions in Y direction of the first marginal portion 11 and the second marginal portion 12 (widths of hem portions) were 10 mm; and the dimensions in X direction of the third marginal portion 13 and the fourth marginal portion 14 (widths of hem portions) were 10 mm.

The number of stiffening members 3 provided was one, two, or three. When one stiffening member 3 was provided, the stiffening member 3 was positioned in the center in X direction of the outer panel body 10. When two stiffening member 3 were provided, the two stiffening members 3 were positioned with the center in X direction of the outer panel body 10 in between. When three stiffening member 3 were provided, one of the stiffening members 3 was positioned in the center in X direction of the outer panel body 10, and the other two stiffening members 3 were positioned with the center stiffening member 3 in between. When two or three stiffening members 3 were provided, the intervals between the stiffening members 3 were 30 mm. In this case, at least one of the stiffening members 3 was positioned to be at least partly in the range from the point $0.45 \times Q$ to the point $0.55 \times Q$ in X direction of the outer panel body 10.

The outer-side lateral part 30 of the stiffening member 3 was flat or was provided with a protrusion 30a. The protrusion 30a had a height of 10 mm, a dimension in Y direction of 210 mm, and a dimension in X direction that is 0.7 times the width of the stiffening member 3. With reference to FIG. 12, S1 = S2 =120 mm, and T1 = T2 = 158 mm. Accordingly, S1/P1 = 0.60, T1/P1 = 0.79, S2/P2 = 0.60, and T2/P2 = 0.79. The dimensions in Y direction of the first inner-side lateral part 33 and the second inner-side lateral part 34 were 16 mm. The stiffening member 3 was shaped such that the first inner-side lateral part 33 and the second inner-side lateral part 34 lay respectively on the sides opposite to the side where the outer-side lateral part 30 lay. In section perpendicular to X direction, the first inner-side corner part 37 and the second inner-side corner part 38 had a radius of curvature of 6 mm. In section perpendicular to X direction, the straight portion of the first outer-side corner part 35 and the straight portion of the second outer-side corner part 36 had a length of 15 mm. The dimension in X direction (width) of the stiffening member 3 was not varying and was constant along Y direction.

The stiffening member 3 and the inner panel component 2 were joined by spot welding on one point at the position that is the center in X direction and in Y direction of each of the first inner-side lateral part 33 and the second inner-side lateral part 34. The stiffening member 3 and the outer panel component 1 were joined by applying a mastic adhesive entirely to the first outer-side corner 35 and the second outer-side corner part 36 of the stiffening member 3.

The dimension in Y direction of the outer panel body 10 (P1 + P2) was 400 mm, and the dimension in X direction of the outer panel body 10 (Q) was 400 mm.

In Comparative Model 1, the plate thicknesses of the outer panel component 1 and the inner panel component 2 were 0.5 mm. In Comparative Model 2, the plate thicknesses of the outer panel component 1 and the inner panel component 2 were 0.4 mm. In Inventive Models 1 to 18, the plate thicknesses of the outer panel component 1 and the inner panel component 2 were 0.4 mm. Inventive Models 1 to 18 varied in the plate thickness of the stiffening member 3, in the dimension W in X direction of the stiffening member 3, in the number of stiffening members 3 provided, and in the presence or absence of the protrusion 30a in the stiffening member 3.

Analysis was conducted on each model, and the natural frequencies of the outer panel component 1, the inner panel component 2 and the stiffening member 3 were calculated. Table 1 shows the analysis results. In Table 1, in the column of "Presence/Absence of Protrusion", "Present" means that the protrusion 30a protruded towards the inner panel component 2, and "Present, Upward" means that the protrusion 30a protruded toward the outer panel component 1.

[Table 1]

Table 1

| No. | Plate Thickness mm | | | Total Mass of Panel Set kg | Stiffening Member | | | | Natural Frequency Hz | | |
|---|---|---|---|---|---|---|---|---|---|---|---|
| | Outer Panel Component | Inner Panel Component | Stiffening Member | | Number | Width of One Member mm | W/Q | Presence/ Absence of Protrusion | Outer Panel Component | Inner Panel Component | Stiffening Member |
| Comparative 1 | 0.5 | 0.5 | - | 1.43 | - | - | - | - | 144.6 | 31.0 | - |
| Comparative 2 | 0.4 | 0.4 | - | 1.14 | - | - | - | - | 125.4 | 24.8 | - |
| 1 | 0.4 | 0.4 | 0.4 | 1.14 | 1 | 5 | 0.013 | Present | 139.7 | 29.0 | 146.8 |
| 2 | 0.4 | 0.4 | 0.4 | 1.15 | 1 | 10 | 0.025 | Present | 143.5 | 29.1 | 162.3 |
| 3 | 0.4 | 0.4 | 0.4 | 1.17 | 1 | 20 | 0.050 | Present | 148.5 | 29.3 | 176.2 |
| 4 | 0.4 | 0.4 | 0.4 | 1.20 | 1 | 40 | 0.100 | Present | 154.7 | 30.0 | 182.7 |
| 5 | 0.4 | 0.4 | 0.4 | 1.22 | 1 | 60 | 0.150 | Present | 158.5 | 30.4 | 180.9 |
| 6 | 0.4 | 0.4 | 0.4 | 1.27 | 1 | 100 | 0.250 | Present | 164.6 | 31.3 | 174.8 |
| 7 | 0.4 | 0.4 | 0.4 | 1.32 | 1 | 140 | 0.350 | Present | 168.6 | 31.8 | 165.2 |
| 8 | 0.4 | 0.4 | 0.4 | 1.25 | 2 | 40 | 0.200 | Present | 164.3 | 31.3 | 182.1 |
| 9 | 0.4 | 0.4 | 0.4 | 1.30 | 2 | 60 | 0.300 | Present | 168.4 | 31.8 | 180.5 |
| 10 | 0.4 | 0.4 | 0.4 | 1.35 | 2 | 80 | 0.400 | Present | 170.9 | 32.0 | 177.8 |
| 11 | 0.4 | 0.4 | 0.4 | 1.31 | 3 | 40 | 0.300 | Present | 169.4 | 31.9 | 182.0 |
| 12 | 0.4 | 0.4 | 0.4 | 1.38 | 3 | 60 | 0.450 | Present | 172.0 | 32.1 | 180.5 |
| 13 | 0.4 | 0.4 | 0.4 | 1.20 | 1 | 40 | 0.100 | Absent | 149.7 | 29.6 | 74.5 |
| 14 | 0.4 | 0.4 | 0.4 | 1.25 | 2 | 40 | 0.200 | Absent | 157.3 | 30.6 | 74.4 |
| 15 | 0.4 | 0.4 | 0.4 | 1.30 | 3 | 40 | 0.300 | Absent | 161.4 | 31.3 | 74.4 |
| 16 | 0.4 | 0.4 | 0.1 | 1.16 | 1 | 40 | 0.100 | Present | 142.5 | 26.8 | 135.1 |
| 17 | 0.4 | 0.4 | 0.2 | 1.17 | 1 | 40 | 0.100 | Present | 150.3 | 29.9 | 147.0 |
| 18 | 0.4 | 0.4 | 0.3 | 1.18 | 1 | 40 | 0.100 | Present | 151.7 | 30.0 | 156.4 |

(continued)

| No. | Plate Thickness mm | | | Total Mass of Panel Set kg | Stiffening Member | | | | Natural Frequency Hz | | |
|---|---|---|---|---|---|---|---|---|---|---|---|
| | Outer Panel Component | Inner Panel Component | Stiffening Member | | Number | Width of One Member mm | W/Q | Presence/ Absence of Protrusion | Outer Panel Component | Inner Panel Component | Stiffening Member |
| 19 | 0.4 | 0.4 | 0.4 | 1.20 | 1 | 40 | 0.100 | Present, Upper | 154.7 | 30.0 | 182.7 |
| 20 | 0.4 | 0.4 | 0.4 | 1.25 | 2 | 40 | 0.200 | Present, Upper | 164.3 | 31.3 | 182.1 |
| 21 | 0.5 | 0.5 | 0.5 | 1.53 | 1 | 60 | 0.150 | Present | 177.7 | 36.7 | 197.6 |
| 22 | 0.5 | 0.5 | 0.4 | 1.51 | 1 | 60 | 0.150 | Present | 177.6 | 36.5 | 180.9 |
| 23 | 0.4 | 0.4 | 0.4 | 1.14 | 1 | 3 | 0.008 | Present | 129.6 | 26.4 | 121.6 |

As shown by Comparative Models 1 and 2, when the plate thicknesses of the outer panel component 1 and the inner panel component 2 were decreased, the natural frequencies of the outer panel component 1 and the inner panel component 2 became lower. Next, Inventive Models 1 to 18 are compared with Comparative Models 1 and 2. In any of Inventive Models 1 to 18, one or more stiffening members 3 satisfying Formula (7) were provided. In any of Inventive Models 1 to 18, the natural frequencies were higher than those in Comparative Model 2 and were close to or higher than those in Comparative Model 1. These results show that it is possible to increase the natural frequencies by providing the stiffening member 3. Especially when W/Q, in which W and Q satisfy Formula (7), was not less than 0.20 as in Inventive Model 8, the natural frequencies were higher than those in Comparative Model 1 in which the plate thickness was 0.1 mm thicker.

The difference between Inventive Model 4 and Inventive Model 13, the difference between Inventive Model 8 and Inventive Model 14, and the difference between Inventive Model 11 and Inventive Model 15 were whether the stiffening member 3 was provided with the protrusion 30a or not. These comparisons show that whether the protrusion 30a was present or absent, the natural frequency of the inner panel component 2 was almost the same. However, the natural frequency of the outer panel component 1 was higher in Inventive Models in which the protrusion 30a was present. Therefore, it is better to provide the protrusion 30a to increase the natural frequency of the outer panel component 1. Moreover, the natural frequency of the stiffening member 3 was higher when the protrusion 30a was provided. These results show that it is better to provide the protrusion 30a in the stiffening member 3 to avoid vibrations of the stiffening member 3 itself.

In Inventive Models 16 to18, the plate thickness of the stiffening member 3 was smaller than that in Inventive Model 4. In Inventive Model 16, the plate thickness of the stiffening member 3 was 0.10 mm, and the natural frequencies were higher than those in Comparative Model 2 but lower than those in any of Inventive Models 17, 18 and 4. In Inventive Models 17, 18 and 4, the natural frequencies were almost the same. These results show that the plate thickness of the stiffening member 3 should be 0.15 mm or more.

The difference between Inventive Model 4 and Inventive Model 19 and the difference between Inventive Model 8 and Inventive Model 20 were which direction the protrusion 30a of the stiffening member 3 protruded in. In Inventive Models 19 and 20, the protrusion 30a protruded towards the outer panel component 1. In Inventive Models 4 and 8, the protrusion 30a protruded towards the inner panel component 2. Inventive Model 4 and Inventive Model 19 were the same in the natural frequencies of the outer panel component 1, the inner panel component 2 and the stiffening member 3. Inventive Model 8 and Inventive Model 20 were the same in the natural frequencies of the outer panel component 1, the inner panel component 2 and the stiffening member 3. These results show that the effect of raising the natural frequencies of the outer panel component 1, the inner panel component 2 and the stiffening member 3 was obtained whichever direction the protrusion 30a protrudes in.

Inventive Model 5, Inventive Model 21, and Inventive Model 22 were the same in the width of the stiffening member 3 (60 mm) but different in the plate thicknesses of the outer panel component 1, the inner panel component 2 and the stiffening member 3. When Inventive Model 5 and Inventive Model 21 are compared, the natural frequency of the outer panel component 1 and the natural frequency of the inner panel component 2 in Inventive Model 21, in which the plate thicknesses of the outer panel component 1 and the inner panel component 2 were greater, were higher than those in Inventive Model 5. When Inventive Model 21 and Inventive Model 22 are compared, Inventive Model 21 and Inventive Model 22 were the same in the plate thicknesses of the outer panel component 1 and the inner panel component 2 and different in the plate thickness of the stiffening member 3, but Inventive Model 21 and Inventive Model 22 were at the same level in the natural frequency of the outer panel component 1 and the natural frequency of the inner panel component 2. Thus, the plate thickness of the stiffening member 3 has little influence on the natural frequency of the outer panel component 1 and the natural frequency of the inner panel component 2.

In Inventive Model 23, the natural frequency of the outer panel component 1 and the natural frequency of the inner panel component 2 were high, as compared with Comparative Model 2. However, in Inventive Model 23, $W/Q \leq 0.1$. As compared with Inventive Model 1, therefore, in Inventive Model 23, the natural frequency of the outer panel component 1 and the natural frequency of the inner panel component 2 were low, and the effect was weak.

[Example 2]

The conditions of Example 2 were based on the conditions of Example 1, and in Example 2, the lengths in Y direction (S1, S2, T1 and T2) and the dimension in X direction (width) W of the stiffening member 3 were varied. The number of stiffening members 3 provided was one. The stiffening member 3 had the protrusion 30a on the outer-side lateral part 30. The height of the protrusion 30a was 10 mm. The plate thicknesses of the outer panel component 1 and the inner panel component 2 were 0.4 mm. Table 2 shows the detailed conditions and analysis results.

[Table 2]

Table 2

| No. | Plate Thickness mm | | | Total Mass of Panel Set kg | One Stiffening Member with Protrusion | | | | | | Natural Frequency Hz | | |
|---|---|---|---|---|---|---|---|---|---|---|---|---|---|
| | Outer Panel Component | Inner Panel Component | Stiffening Member | | Width mm | W/Q | S1 (S2) | S1/P1 (S2/P2) | T1 (T2) | T1/P1 (T2/P2) | Outer Panel Component | Inner Panel Component | Stiffening Member |
| Comparative 1 | 0.5 | 0.5 | - | 1.43 | - | - | - | - | - | - | 144.6 | 31.0 | - |
| Comparative 2 | 0.4 | 0.4 | - | 1.14 | - | - | - | - | - | - | 125.4 | 24.8 | - |
| 4 | 0.4 | 0.4 | 0.4 | 1.20 | 40 | 0.10 | 120 | 0.60 | 158 | 0.79 | 154.7 | 30.0 | 182.7 |
| 41 | 0.4 | 0.4 | 0.4 | 1.20 | 40 | 0.10 | 80 | 0.40 | 120 | 0.60 | 153.6 | 31.2 | 184.6 |
| 42 | 0.4 | 0.4 | 0.4 | 1.19 | 40 | 0.10 | 70 | 0.35 | 100 | 0.50 | 148.3 | 29.2 | 186.8 |
| 43 | 0.4 | 0.4 | 0.4 | 1.21 | 40 | 0.10 | 160 | 0.80 | 180 | 0.90 | 149.5 | 29.0 | 163.1 |
| 44 | 0.4 | 0.4 | 0.4 | 1.19 | 40 | 0.10 | 60 | 0.30 | 90 | 0.45 | 146.7 | 26.1 | 187.9 |
| 45 | 0.4 | 0.4 | 0.4 | 1.21 | 40 | 0.10 | 170 | 0.85 | 185 | 0.93 | 145.3 | 26.7 | 165.4 |
| 46 | 0.4 | 0.4 | 0.4 | 1.21 | 40 | 0.10 | 120 | 0.60 | 100 | 0.50 | 152.7 | 28.7 | 182.1 |
| 6 | 0.4 | 0.4 | 0.4 | 1.27 | 100 | 0.25 | 120 | 0.60 | 158 | 0.79 | 164.6 | 31.3 | 174.8 |
| 61 | 0.4 | 0.4 | 0.4 | 1.27 | 100 | 0.25 | 80 | 0.40 | 120 | 0.60 | 162.8 | 30.8 | 173.2 |
| 62 | 0.4 | 0.4 | 0.4 | 1.21 | 100 | 0.25 | 70 | 0.35 | 100 | 0.50 | 160.2 | 30.6 | 181.4 |
| 63 | 0.4 | 0.4 | 0.4 | 1.28 | 100 | 0.25 | 160 | 0.80 | 180 | 0.90 | 158.3 | 30.1 | 168.7 |
| 64 | 0.4 | 0.4 | 0.4 | 1.26 | 100 | 0.25 | 60 | 0.30 | 90 | 0.45 | 152.4 | 27.6 | 180.9 |
| 65 | 0.4 | 0.4 | 0.4 | 1.28 | 100 | 0.25 | 170 | 0.85 | 185 | 0.93 | 153.6 | 27.1 | 169.3 |
| 66 | 0.4 | 0.4 | 0.4 | 1.27 | 100 | 0.25 | 120 | 0.60 | 100 | 0.50 | 161.7 | 30.4 | 174.2 |

Inventive Models 4 and 6 in Table 2 were the same as Inventive Models 4 and 6 shown in Table 1. In Inventive Models 41 to 46, the width of the stiffening member 3 was 40 mm, which was the same as in Inventive Model 4. In Inventive Models 61 to 66, the width of the stiffening member 3 was 100 mm, which was the same as in Inventive Model 6.

In Inventive Models 41 to 45, the natural frequencies were higher than those in Comparative Model 2, and the effect was obtained. Inventive Models 41 to 43 satisfied the conditions expressed by Formulae (1), (2), (4) and (5), whereas Inventive Models 44 and 45 did not satisfy the conditions expressed by these formulae. As a result, the natural frequencies of the outer panel component 1 and the inner panel component 2 in Inventive Models 41 to 43 were higher than those in Inventive Models 44 and 45.

The natural frequencies in Inventive Models 61 to 65 were higher than those in Comparative Model 2, and the effect was obtained. Inventive Models 61 to 63 satisfied the conditions expressed by Formulae (1), (2), (4) and (5), whereas Inventive Models 64 and 65 did not satisfy the conditions expressed by these formulae. As a result, the natural frequencies of the outer panel component 1 and the inner panel component 2 in Inventive Models 61 to 63 were higher than those in Inventive Models 64 and 65.

In Inventive Models 4 and 46, the lengths S1 and S2 were 120 mm. The length T1 in Inventive Model 4 was 158 mm, and the length T1 in Inventive Model 46 was 100 mm. Inventive Model 4 satisfied Formulae (3) and (6), whereas Inventive Model 46 did not satisfy these formulae. The natural frequencies in Inventive Model 4 were higher than those in Inventive Model 46. In Inventive Models 6 and 66, the lengths S1 and S2 were 120 mm. The length T1 in Inventive Model 6 was 158 mm, and the length T1 in Inventive Model 66 was 100 mm. Inventive Model 6 satisfied Formulae (3) and (6), whereas Inventive Model 66 did not satisfy these formulae. The natural frequencies in Inventive Model 6 were higher than those in Inventive Model 66. These results show that the satisfaction of Formulae (3) and (6) leads to increases in the natural frequencies.

[Example 3]

In Example 3, the effect of each part of the stiffening member 3 to increase the natural frequencies was confirmed. Inventive Model 5 in Example 3 was the same as Inventive Model 5 in Table 1. Inventive Models A and B were models based on Inventive Model 5. The stiffening member 3 in Inventive Model A consisted of the outer-side lateral part 30, the first outer-side corner part 35, and the second outer-side corner part 36. The stiffening member 3 in Inventive Model B consisted of the first inner-side lateral part 33, the second inner-side lateral part 34, and the first inner-side corner part 37, and the second inner-side corner part 38. Table 3 shows the detailed conditions and analysis results.

[Table 3]

Table 3

| No. | Plate Thickness mm | | | Total Mass of Panel Set kg | Stiffening Member | | | | | Natural Frequency Hz | |
|---|---|---|---|---|---|---|---|---|---|---|---|
| | Outer Panel Component | Inner Panel Component | Stiffening Member | | Number | Width of One Member mm | W/Q | Presence/ Absence of Protrusion | Configuration | Outer Panel Component | Inner Panel Component |
| Comparative 1 | 0.5 | 0.5 | - | 1.43 | - | - | - | - | - | 144.6 | 31.0 |
| Comparative 2 | 0.4 | 0.4 | - | 1.14 | - | - | - | - | - | 125.4 | 24.8 |
| 5 | 0.4 | 0.4 | 0.4 | 1.22 | 1 | 60 | 0.15 | Present | Hat-Shaped (outer-side lateral part, first and second outer-side corner parts, first and second inner-side lateral parts, first and second inner-side corner parts) | 158.5 | 30.4 |
| A | 0.4 | 0.4 | 0.4 | 1.18 | 1 | 60 | 0.15 | Present | Outer-side lateral part, first and second outer-side corner parts | 150.5 | 24.8 |
| B | 0.4 | 0.4 | 0.4 | 1.16 | 1 | 60 | 0.15 | - | First and second inner-side lateral parts, first and second inner-side corner parts | 125.4 | 28.2 |

In Inventive Model A, since the stiffening member 3 consisted of the outer-side lateral part 30, the first outer-side corner part 35, and the second outer-side corner part 36, as compared with those in Comparative Model 2, the natural frequency of the outer panel component 1 became higher, but the natural frequency of the inner panel component 2 did not change. This shows that the outer-side lateral part 30, the first outer-side corner part 35 and the second outer-side corner part 36 stiffen the outer panel component 1 and increase the natural frequency of the outer panel component 1. Moreover, the natural frequency of the outer panel component 1 in Inventive Model 5 was higher than that in Inventive Model A, which shows that a mutual effect is produced by providing vertical parts.

In Inventive Model B, since the stiffening member 3 consisted of the first inner-side lateral part 33, the second inner-side lateral part 34, and the first inner-side corner part 37, and the second inner-side corner part 38, as compared with Comparative Model 2, the natural frequency of the outer panel component 1 did not change, but the natural frequency of the inner panel component 2 became higher. This shows that the first inner-side lateral part 33, the second inner-side lateral part 34, and the first inner-side corner part 37, and the second inner-side corner part 38 stiffen the inner panel component 2 and increase the natural frequency of the inner panel component 2. Moreover, the natural frequency of the inner panel component 2 in Inventive Model 5 was higher than that in Inventive Model B, which shows that a mutual effect is produced by providing vertical parts.

[Example 4]

The conditions of Example 4 were based on the conditions of Example 1, and in Example 4, the position of the stiffening member 3 was varied. Table 4 shows the detailed conditions and analysis results. With respect to the column "In Range from 0.45×Q to 0.55×Q?" in Table 4, when the stiffening member was positioned to be at least partly in the range from the point 0.45×Q to the point 0.55×Q, it is shown as "Yes", and when no part of the stiffening member was in the range from the point 0.45×Q to the point 0.55×Q, it is shown as "No". Inventive Model 6 in Table 4 was a model in the same conditions as Inventive Model 6 in Table 1, in which the stiffening member 3 was positioned in the center in X direction of the outer panel body 10, i.e., positioned on the point 0.5×Q in X direction. In Inventive Models 401, 402 and 403, the stiffening member 3 was positioned on a point 0.4×Q, a point 0.3×Q, and a point 0.2×Q, respectively, in X direction of the outer panel body 10. The position in X direction of the stiffening member 3 is defined by the position of the center in X direction (width direction) of the stiffening member 3.

[Table 4]

Table 4

| No. | Plate Thickness mm | | | Stiffening Member | | | | | Natural Frequency Hz | | |
|---|---|---|---|---|---|---|---|---|---|---|---|
| | Outer Panel Component | Inner Panel Component | Stiffening Member | Number | Width of One Member mm | Presence/ Absence of Protrusion | Position in X Direction | In Range from 0.45×Q to 0.55×Q? | Outer Panel Component | Inner Panel Component | Stiffening Member |
| Comparative 1 | 0.5 | 0.5 | - | - | - | - | - | - | 144.6 | 31.0 | - |
| Comparative 2 | 0.4 | 0.4 | - | - | - | - | - | - | 125.4 | 24.8 | - |
| 6 | 0.4 | 0.4 | 0.4 | 1 | 100 | Present | 0.5×Q | Yes | 164.6 | 31.3 | 174.8 |
| 401 | 0.4 | 0.4 | 0.4 | 1 | 100 | Present | 0.4×Q | Yes | 164.2 | 31.1 | 174.7 |
| 402 | 0.4 | 0.4 | 0.4 | 1 | 100 | Present | 0.3×Q | No | 160.3 | 28.7 | 174.6 |
| 403 | 0.4 | 0.4 | 0.4 | 1 | 100 | Present | 0.2×Q | No | 158.7 | 26.9 | 174.7 |

In Inventive Models 401 to 403, the natural frequencies were higher than those in Comparative Model 2 and were close to or higher than those in Comparative Model 1, and the effect of raising the natural frequencies was confirmed. When Inventive Model 6 in which the position of the stiffening member 3 was on the point 0.5×Q in X direction of the outer panel body 10 and Inventive Model 401 in which the position of the stiffening member 3 was on the point 0.4×Q in X direction of the outer panel body 10 are compared, the natural frequencies of the outer panel component 1, the inner panel component 2 and the stiffening member 3 were almost the same.

Next, when Inventive Model 401 in which the position of the stiffening member 3 was on the point 0.4×Q in X direction of the outer panel body 10, Inventive Model 402 in which the position of the stiffening member 3 was on the point 0.3×Q in X direction of the outer panel body 10, and Inventive Model 403 in which the position of the stiffening member 3 was on the point 0.2×Q in X direction of the outer panel body 10 are compared to one another, as the position of the stiffening member 3 became farther from the center in X direction of the outer panel body 10, the natural frequencies of the outer panel component 1 and the inner panel component 2 became lower.

[Example 5]

The conditions of Example 5 were based on the conditions of Example 1, and in Example 5, the mastic adhesive applied on the first outer-side corner part 35 and the second outer-side corner part 36 of the stiffening member 3 was varied. Table 5 shows the detailed conditions and analysis results.

Inventive Model 7 in Table 5 was a model in the same conditions as Inventive Model in Table 1, and the mastic adhesive was applied entirely on the first outer-side corner part 35 and the second outer-side corner part 36 of the stiffening member 3. In Inventive Models 301 to 305, the adhesive was applied in circular spots. In Inventive Models 301 to 303, each of the circular spots of mastic adhesive applied on the first outer-side corner part 35 and the second outer-side corner part 36 had a diameter of 20 mm, and the number of circular adhesive spots applied on each of the corner parts was one, two, and three, respectively, in Inventive Models 301, 302, and 303. In Inventive Models 304 and 305, the number of mastic adhesive spots applied on each of the first outer-side corner part 35 and the second outer-side corner part 36 was one, but Inventive Model 304 and Inventive Model 305 were different in the diameter of the circular adhesive spots.

[Table 5]

Table 5

| No. | Plate Thickness mm | | | Stiffening Member | | | Joint to Outer Panel | | | Natural Frequency Hz | | |
|---|---|---|---|---|---|---|---|---|---|---|---|---|
| | Outer Panel Component | Inner Panel Component | Stiffening Member | Number | Width of One Member mm | Presence/ Absence of Protrusion | Configuration of Adhesive Part | Interval between Adhesive Spots mm | Diameter of Adhesive Spot mm | Outer Panel Component | Inner Panel Component | Stiffening Member |
| Comparative 1 | 0.5 | 0.5 | - | - | - | - | - | - | - | 144.6 | 31.0 | - |
| Comparative 2 | 0.4 | 0.4 | - | - | - | - | - | - | - | 125.4 | 24.8 | - |
| 7 | 0.4 | 0.4 | 0.4 | 1 | 140 | Present | Entirely Applied | - | - | 168.6 | 31.8 | 165.2 |
| 301 | 0.4 | 0.4 | 0.4 | 1 | 140 | Present | 1 Spot | - | 20 | 167.2 | 30.4 | 163.4 |
| 302 | 0.4 | 0.4 | 0.4 | 1 | 140 | Present | 2 Spots | 47 | 20 | 168.4 | 31.7 | 165.0 |
| 303 | 0.4 | 0.4 | 0.4 | 1 | 140 | Present | 3 Spots | 35 | 20 | 168.4 | 31.8 | 165.1 |
| 304 | 0.4 | 0.4 | 0.4 | 1 | 140 | Present | 1 Spot | - | 10 | 166.4 | 29.4 | 162.8 |
| 305 | 0.4 | 0.4 | 0.4 | 1 | 140 | Present | 1 Spot | - | 5 | 160.6 | 27.6 | 159.6 |

In Inventive Models 301 to 305, the natural frequencies were higher than those in Comparative Model 2 and were close to or higher than those in Comparative Model 1, and the effect of raising the natural frequencies was confirmed. In Inventive Model 302 in which two adhesive spots were provided on each of the outer-side corner parts, as compared with Inventive Model 301 in which only one adhesive spot was provided on each of the outer-side corner parts, the natural frequencies of the outer panel component 1, the inner panel component 2 and the stiffening member 3 were higher. In Inventive Model 302 in which two adhesive spots were provided on each of the outer-side corner parts at an interval in X direction of 47 mm, as compared with Inventive Model 303 in which three adhesive spots were provided on each of the outer-side corned parts at intervals in X direction of 35 mm, the natural frequencies of the outer panel component 1, the inner panel component 2 and the stiffening member 3 were almost the same, and this result shows that when the intervals in X direction between adhesive spots becomes less than 40 mm, the effect of raising the natural frequencies becomes saturated.

When Inventive Model 301 in which the diameter of each adhesive spot was 20 mm, Inventive Model 304 in which the diameter of each adhesive spot was 10 mm, and Inventive Model 305 in which the diameter of each adhesive spot was 5 mm are compared with one another, as the diameter of each adhesive spot became larger, the natural frequencies of the outer panel component 1, the inner panel component 2 and the stiffening member 3 became higher.

[Example 6]

The conditions of Example 6 were based on the conditions of Inventive Model 4 of Example 1, and in Example 6, the plate thickness of the stiffening member 3 was varied. FIGS. 33 and 34 show analysis results of Example 6. FIG. 33 shows the relation between the plate thickness of the stiffening member 3 and the natural frequency of the inner panel component 2. In FIG. 33, the vertical axis indicates the amount of an increase in the natural frequency of the inner panel component 2 from that in Comparative Model 2 that is different in the condition about the presence or absence of the stiffening member 3. FIG. 34 shows the relation between the plate thickness of the stiffening member 3 and the natural frequency of the outer panel component 1. In FIG. 34, the vertical axis indicates the amount of an increase in the natural frequency of the outer panel component 1 from that in Comparative Model 2 that is different in the condition about the presence or absence of the stiffening member 3.

FIG. 33 shows the following. When the plate thickness of the stiffening member 3 is not less than 0.15 mm, the natural frequency of the inner panel component 2 notably increases as compared with a case in which the stiffening member 3 is not provided. As long as the plate thickness of the stiffening member 3 is kept not less than 0.15 mm, the natural frequency of the inner panel component 2 stays nearly unchanged.

FIG. 34 shows the following. Even when the plate thickness of the stiffening member 3 is 0.05 mm, the natural frequency of the outer panel component 1 increases as compared with a case in which the stiffening member 3 is not provided; however, when the plate thickness of the stiffening member 3 is not less than 0.15 mm, the natural frequency of the outer panel component 1 notably increases.

[Example 7]

The conditions of Example 7 were based on the conditions of Inventive Model 4 of Example 1, and in Example 7, the tensile strength of the stiffening member 3 was varied. FIGS. 35 and 36 show analysis results of Example 7. FIG. 35 shows the relation between the tensile strength of the stiffening member 3 and the natural frequency of the inner panel component 2. In FIG. 35, the vertical axis indicates the amount of an increase in the natural frequency of the inner panel component 2 from that in Comparative Model 2 that is different in the condition about the presence or absence of the stiffening member 3. FIG. 36 shows the relation between the tensile strength of the stiffening member 3 and the natural frequency of the outer panel component 1. In FIG. 36, the vertical axis indicates the amount of an increase in the natural frequency of the outer panel component 1 from that in Comparative Model 2 that is different in the condition about the presence or absence of the stiffening member 3.

FIG. 35 shows that an increase in the tensile strength of the stiffening member 3 makes almost no change to the natural frequency of the inner panel component 2. FIG. 36 shows that an increase in the tensile strength of the stiffening member 3 makes almost no change to the natural frequency of the outer panel component 1.

Some embodiments of the present disclosure have been described. However, the above-described embodiments are merely examples to carry out the present disclosure. Therefore, the present disclosure is not limited to the above-described embodiments, and the present disclosure can be carried out by modifying the above-described embodiments appropriately without departing from the scope thereof.

For example, the panel set may have the following configuration. The stiffening member is made of a bar material. In this case, the outer-side lateral part is shaped like a frame. The first vertical part is shaped like a frame. The second vertical part is shaped like a frame. The first inner-side lateral part is shaped like a frame. The second inner-side lateral part is shaped like a frame.

The panel set made of a bar material may have the following configuration. The first inner-side lateral part lies on a side of the first vertical part opposite to the side where the outer-side lateral part lies, and the second inner-side lateral part lies on a side of the second vertical part opposite to the side where the outer-side lateral part lies. In this case, the first inner-side lateral part and the second inner-side lateral part extends in directions to separate from each other. Then, in section perpendicular to the first direction, the stiffening member is shaped like a hat.
The panel set may have the following configuration. The stiffening member is solid. In this case, for weight reduction of the whole panel set, it is preferred that the material of the stiffening member is resin.
The panel set may have the following configuration. The first inner-side lateral part lies on the side of the first vertical part where the outer-side lateral part lies, and the second inner-side lateral part lies on the side of the second vertical part where the outer-side lateral part lies. In this case, the first inner-side lateral part and the second inner-side lateral part extends in directions to face each other. Then, in section perpendicular to the first direction, the stiffening member is shaped like a C.

LIST OF REFERENCE SIGNS

100: panel set
1: outer panel component
10: outer panel body
10a: apex part
10b: first portion
10c: second portion
2: inner panel component
20: inner panel body
3: stiffening member
30: outer-side lateral part
31: first vertical part
32: second vertical part
33: first inner-side lateral part
34: second inner-side lateral part
35: first outer-side corner part
36: second outer-side corner part
37: first inner-side corner part
38: second inner-side corner part
41: first adhesive part
42: second adhesive part

## Claims

**1.** A panel set comprising:

an outer panel component that spreads in a first direction and in a second direction perpendicular to the first direction and includes an outer panel body that is curved convexly outward in section perpendicular to the first direction;
an inner panel component that is positioned in an inner side of the outer panel component and united with the outer panel component, the inner panel component including an inner panel body that faces the outer panel body, a space being formed between the outer panel body and the inner panel body; and
a stiffening member that is positioned in the space between the outer panel body and the inner panel body, wherein:

when viewed in the first direction, the stiffening member includes an outer-side lateral part positioned near the side of the outer panel body, a first vertical part, a second vertical part, a first inner-side lateral part, a second inner-side lateral part, a first outer-side corner part connecting the outer-side lateral part and the first vertical part, a second outer-side corner part connecting the outer-side lateral part and the second vertical part, a first inner-side corner part connecting the first vertical part and the first inner-side lateral part, and a second inner-side corner part connecting the second vertical part and the second inner-side lateral part;

the stiffening member has a width in the first direction;
the first outer-side corner part is joined to a first portion of the outer panel body that is away from an apex part of the outer panel body;
the second outer-side corner part is joined to a second portion of the outer panel body that is opposite the first portion with the apex part in between; and
the first inner-side lateral part and the second inner-side lateral part are joined to the inner panel body.

**2.** The panel set according to claim 1, wherein
in section perpendicular to the first direction,

the first outer-side corner part has a shape that fits the first portion of the outer panel body; and
the second outer-side corner part has a shape that fits the second portion of the outer panel body.

**3.** The panel set according to claim 1, wherein
each of the outer-side lateral part, the first vertical part, the second vertical part, the first inner-side lateral part, the second inner-side lateral part, the first outer-side corner part, the second outer-side corner part, the first inner-side corner part, and the second inner-side corner part is shaped like a plate.

**4.** The panel set according to claim 3, wherein
the outer-side lateral part, entirely or partly in the width, has a flat portion from the first outer-side corner part to the second outer-side corner part.

**5.** The panel set according to claim 4, wherein:

the first vertical part, entirely or partly in the width, has a flat portion from the first outer-side corner part to the first inner-side corner part; and
the second vertical part, entirely or partly in the width, has a flat portion from the second outer-side corner part to the second inner-side corner part.

**6.** The panel set according to claim 3, wherein
the outer-side lateral part is provided with a protrusion that protrudes in a plate-thickness direction of the outer-side lateral part and extends in the second direction.

**7.** The panel set according to claim 6, wherein
the protrusion protrudes in a direction towards the inner panel body out of directions along the plate thickness of the outer-side lateral part.

**8.** The panel set according to claim 3, wherein:

the first inner-side lateral part lies on a side of the first vertical part opposite to a side where the outer-side lateral part lies; and
the second inner-side lateral part lies on a side of the second vertical part opposite to a side where the outer-side lateral part lies.

**9.** The panel set according to claim 1, wherein:

the first outer-side corner part of the stiffening member is joined to the first portion of the outer panel body via a single or plural first adhesive part; and
the second outer-side corner part of the stiffening member is joined to the second portion of the outer panel body via a single or plural second adhesive part.

**10.** The panel set according to claim 9, wherein:

the first adhesive part consists of a plurality of adhesive spots, and the adhesive spots are arranged on the first outer-side corner part, in the first direction at intervals; and
the second adhesive part consists of a plurality of adhesive spots, and the adhesive spots are arranged on the second outer-side corner part, in the first direction at intervals.

**11.** The panel set according to any one of claims 1 to 10, wherein the panel set is a back door of an automobile.

FIG. 1

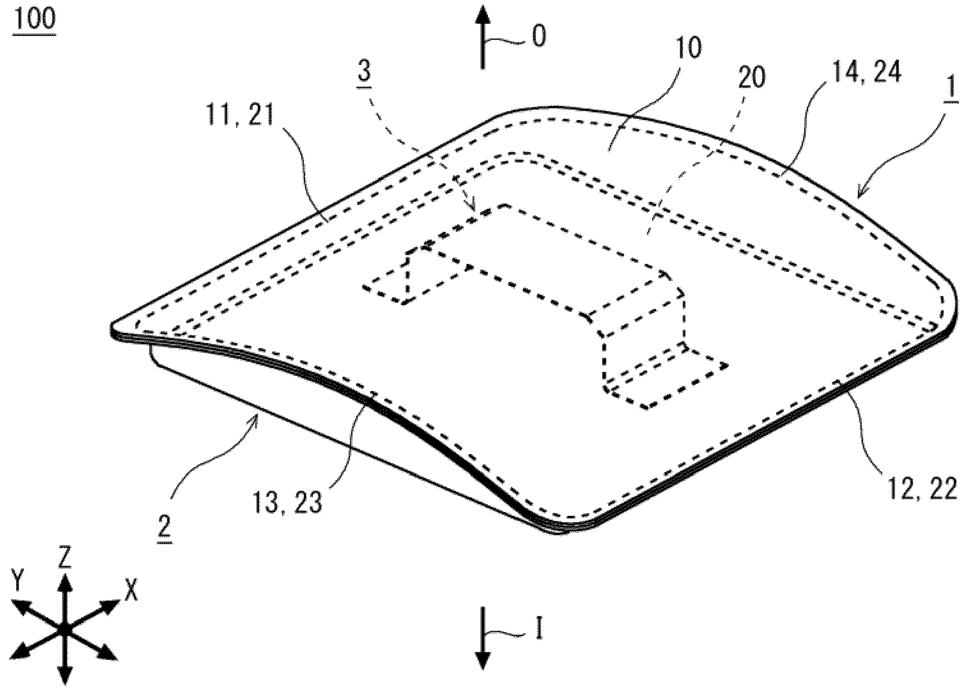

FIG. 2

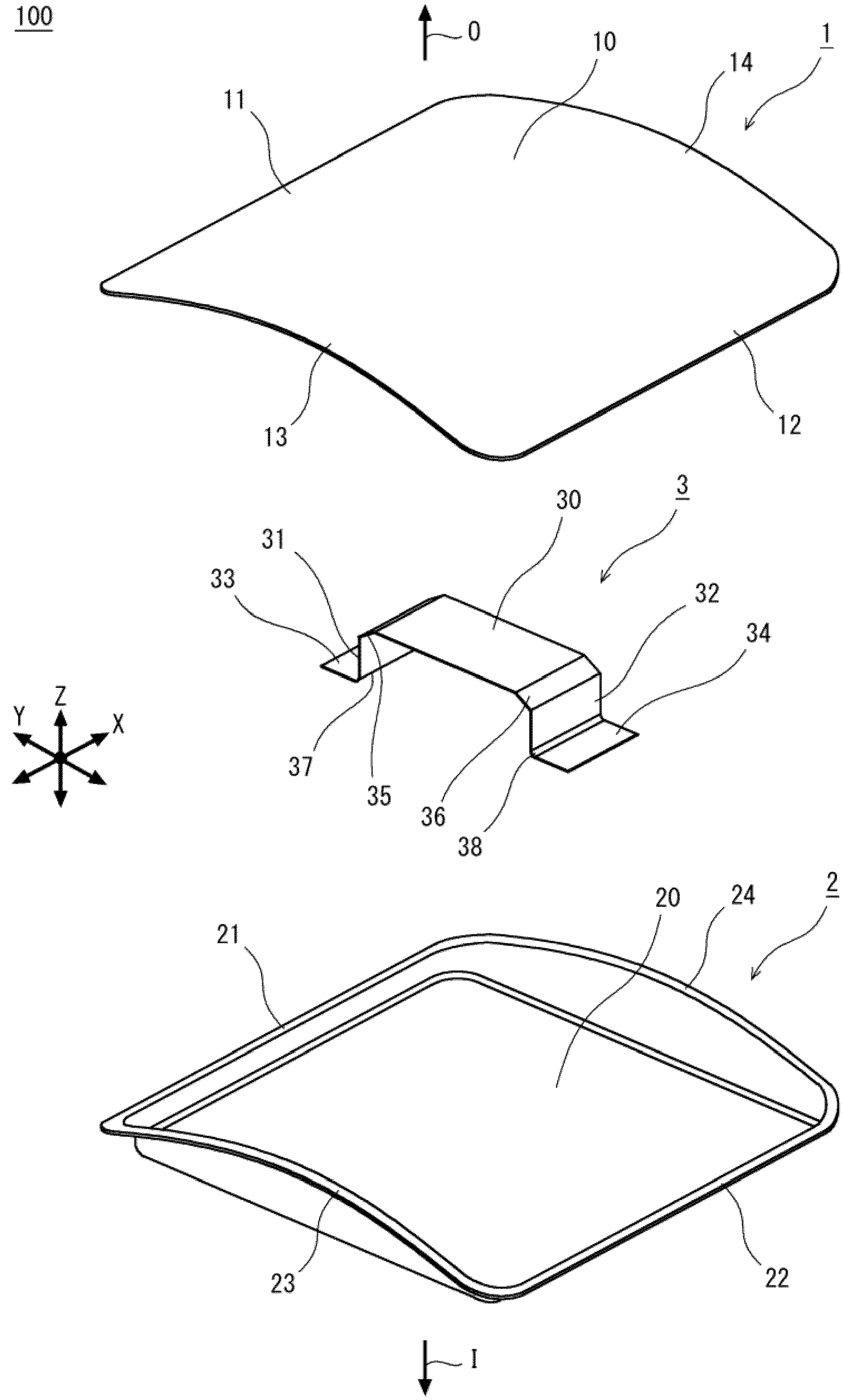

FIG. 3

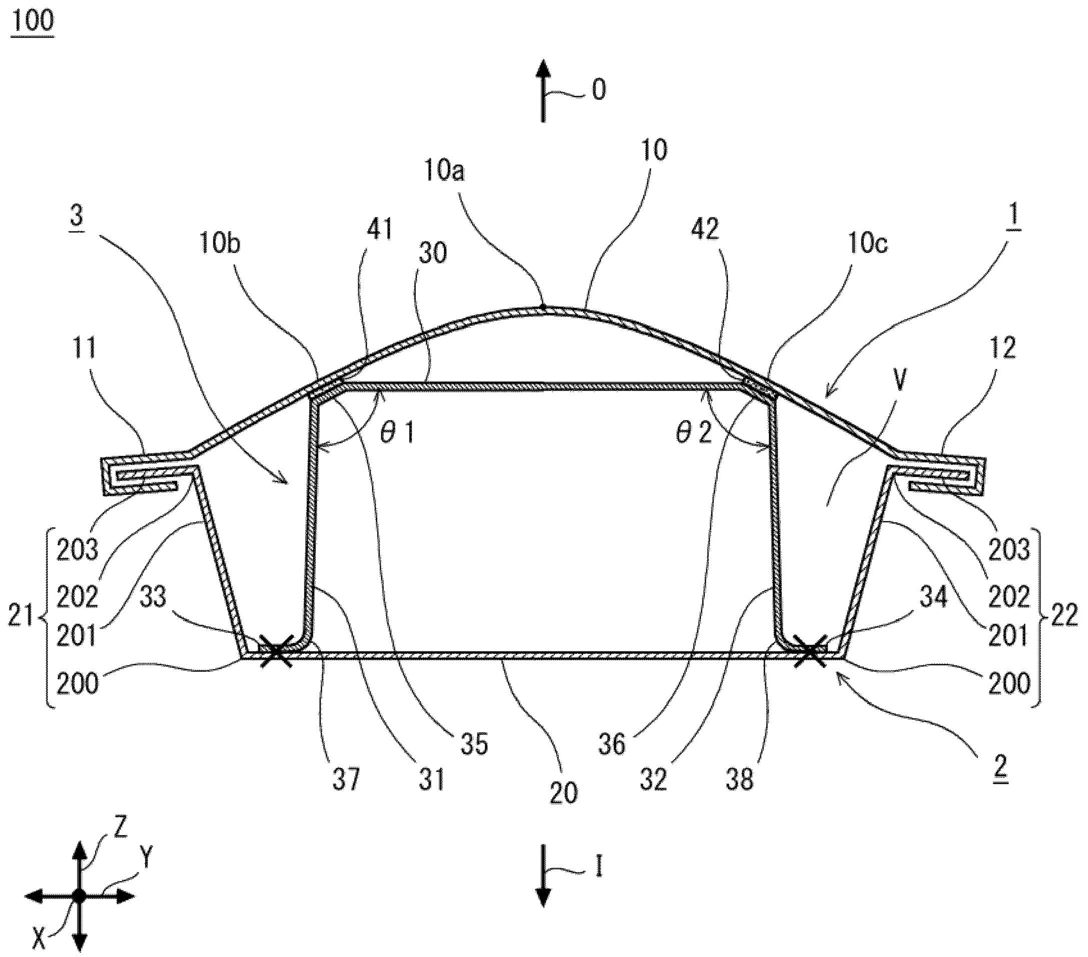
100
O
10a
10
3
10b
41
30
42
10c
1
11
12
V
θ1
θ2
203
202
201
200
21
33
34
22
35
36
37
31
20
32
38
2
I
Z
Y
X

FIG. 4

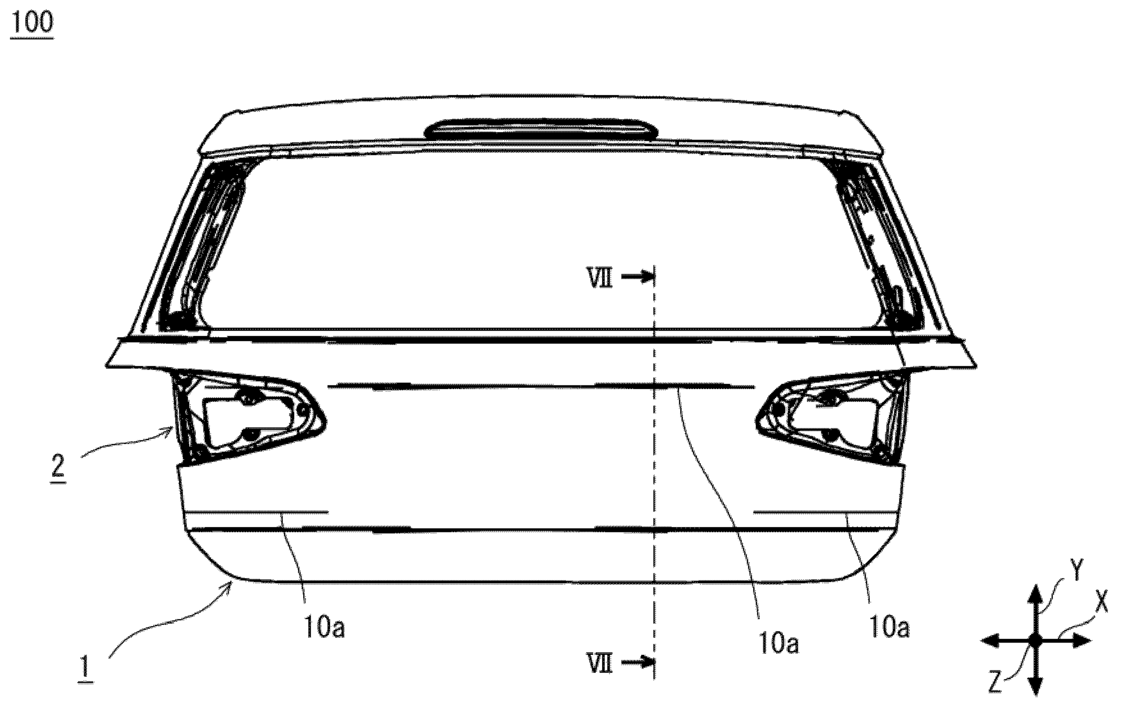

FIG. 5

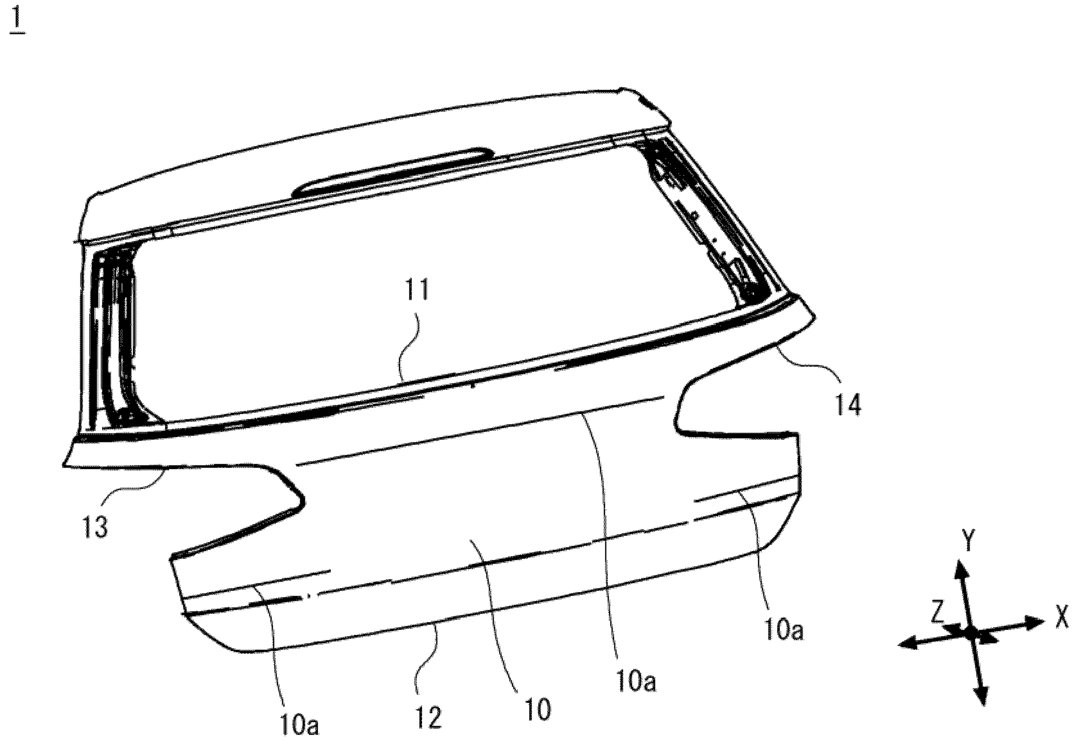


FIG. 6

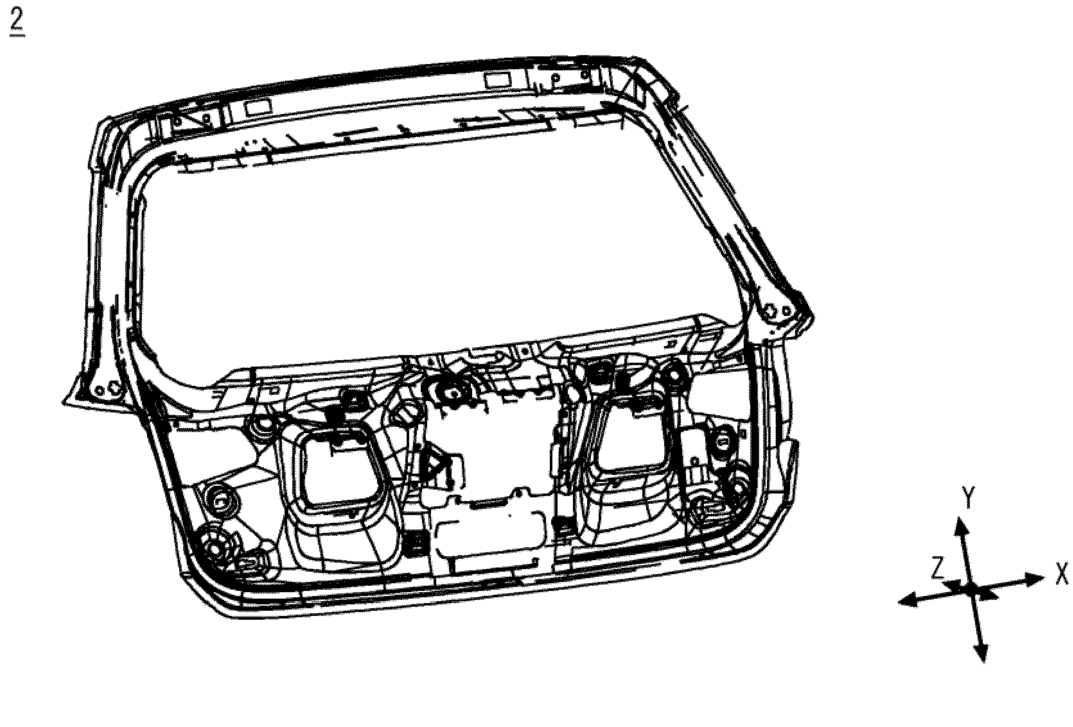

FIG. 7

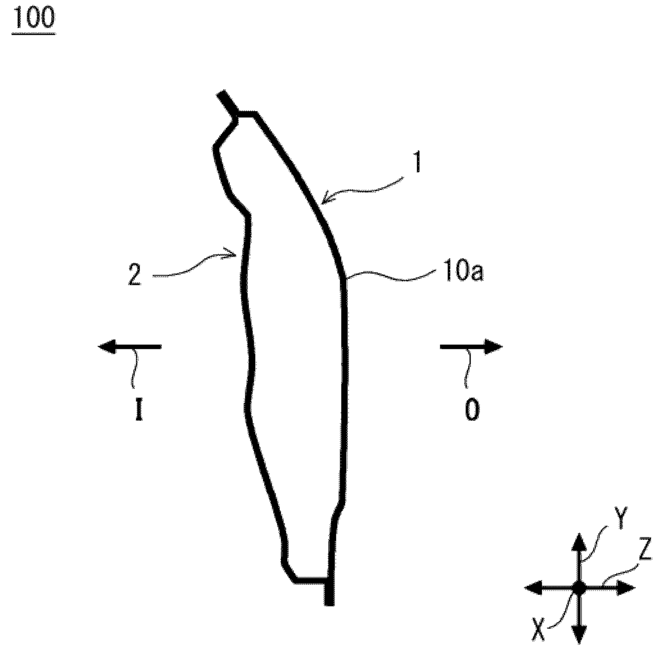


FIG. 8

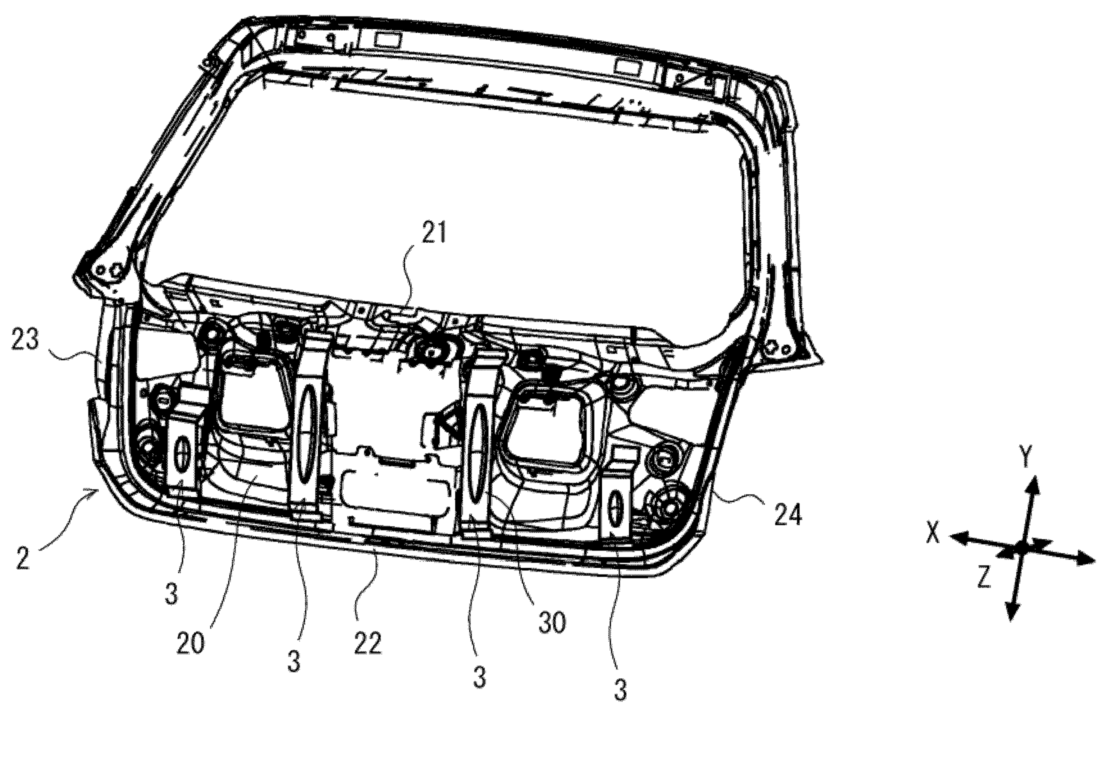

FIG. 9

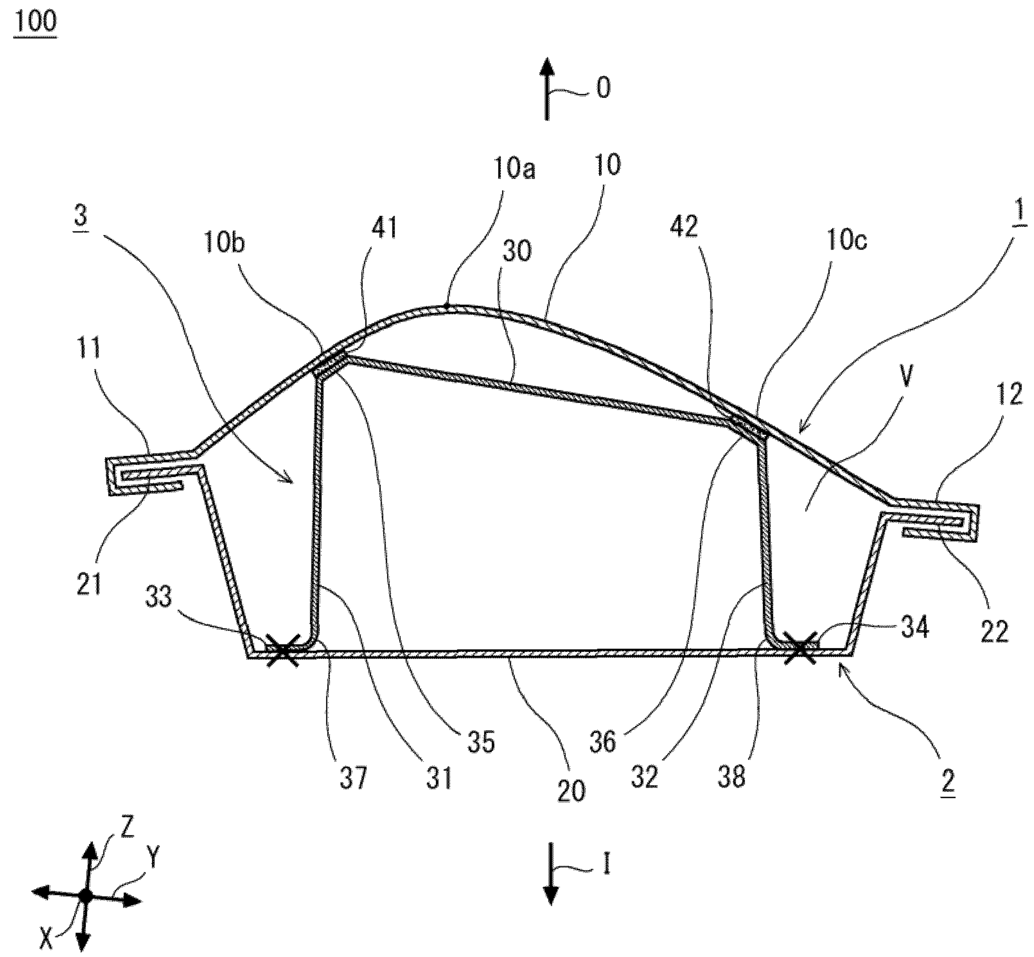
100
O
10a
10
3
10b
41
30
42
10c
1
11
V
12
21
22
33
34
35
36
37
31
20
32
38
2
Z
Y
X
I

FIG. 10

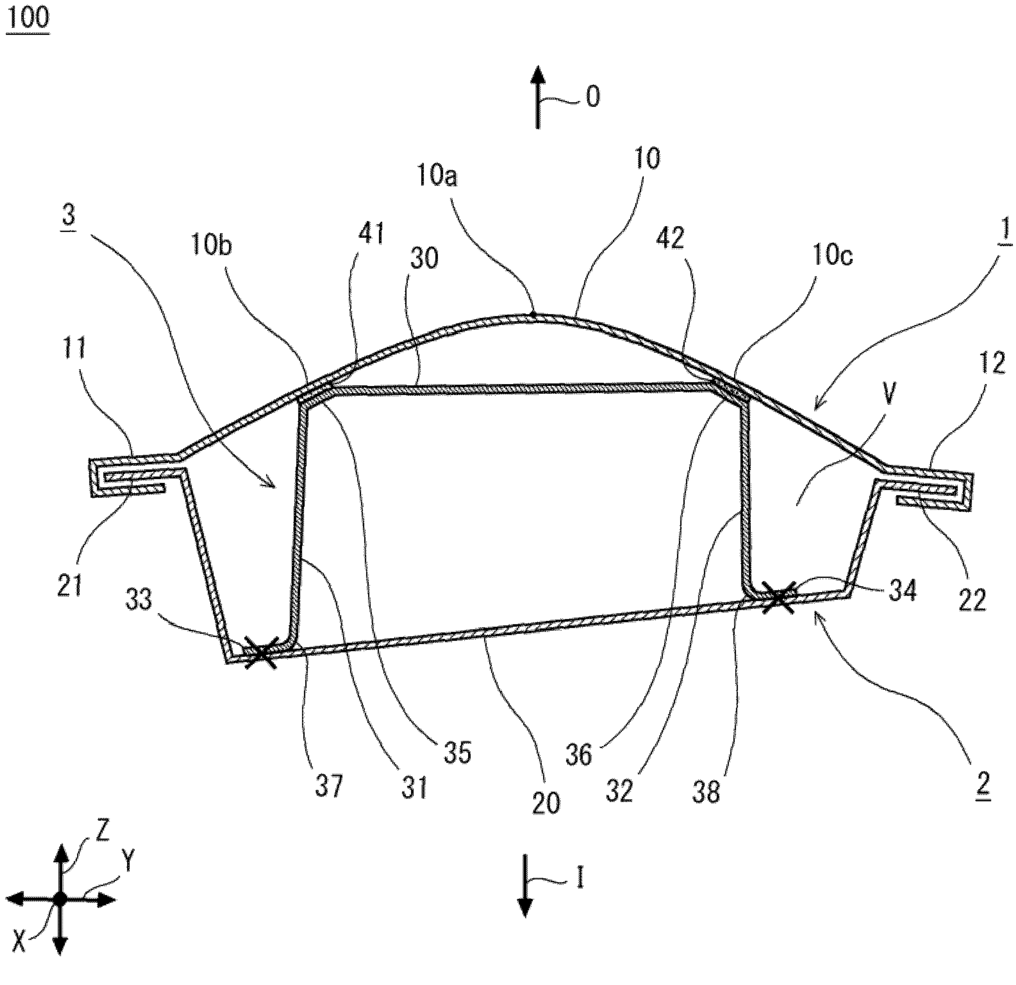
100
O
10
10a
3
10b
41
30
42
10c
1
11
12
V
21
33
34
22
37
31
35
20
36
32
38
2
Z
Y
X
I

FIG. 11

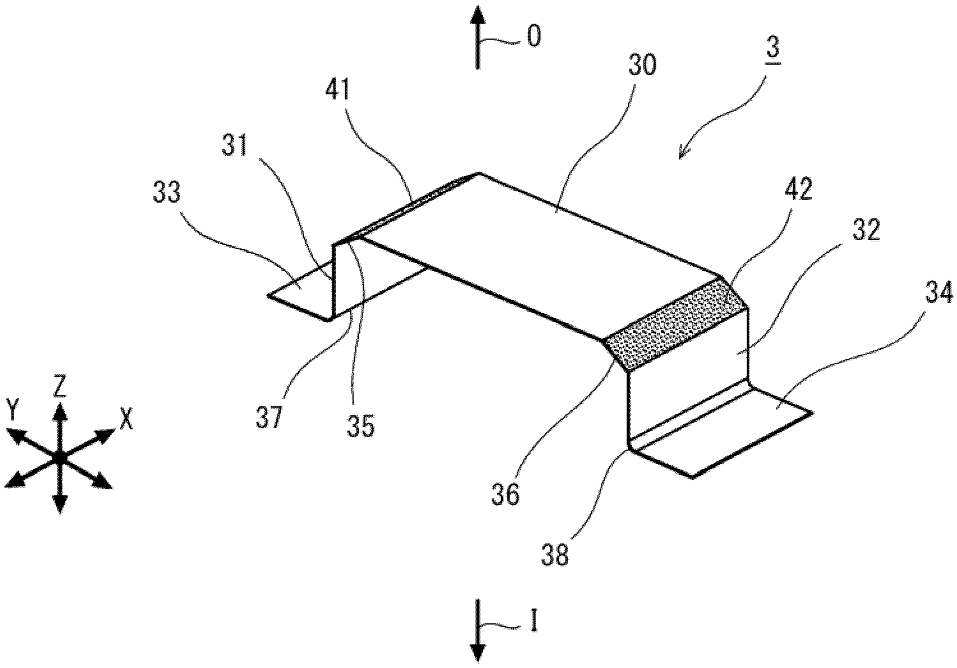

FIG. 12

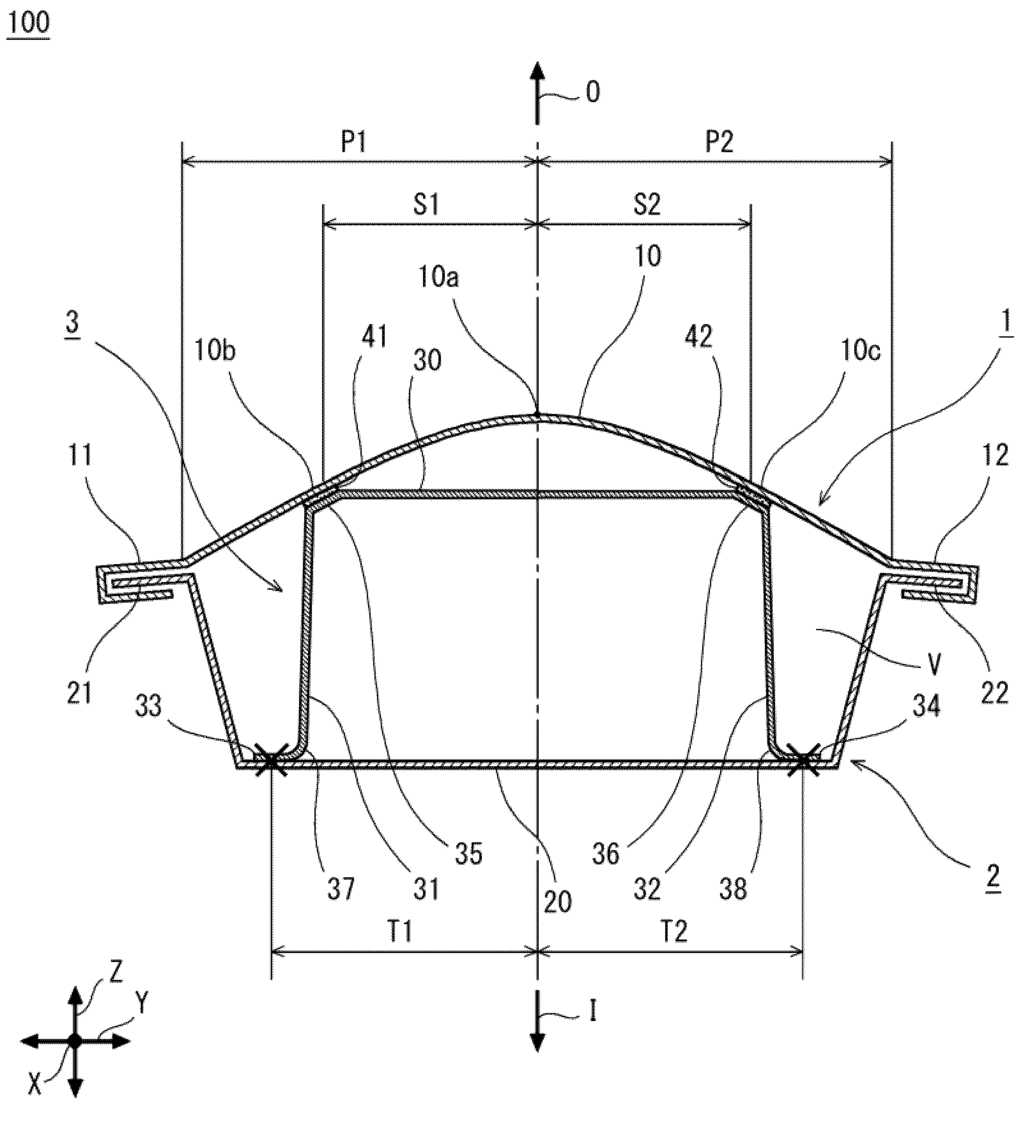
100
0
P1
P2
S1
S2
10a
10
3
10b
41
30
42
10c
1
11
12
V
21
33
34
22
35
36
37
31
20
32
38
2
T1
T2
Z
Y
X
I

FIG. 13

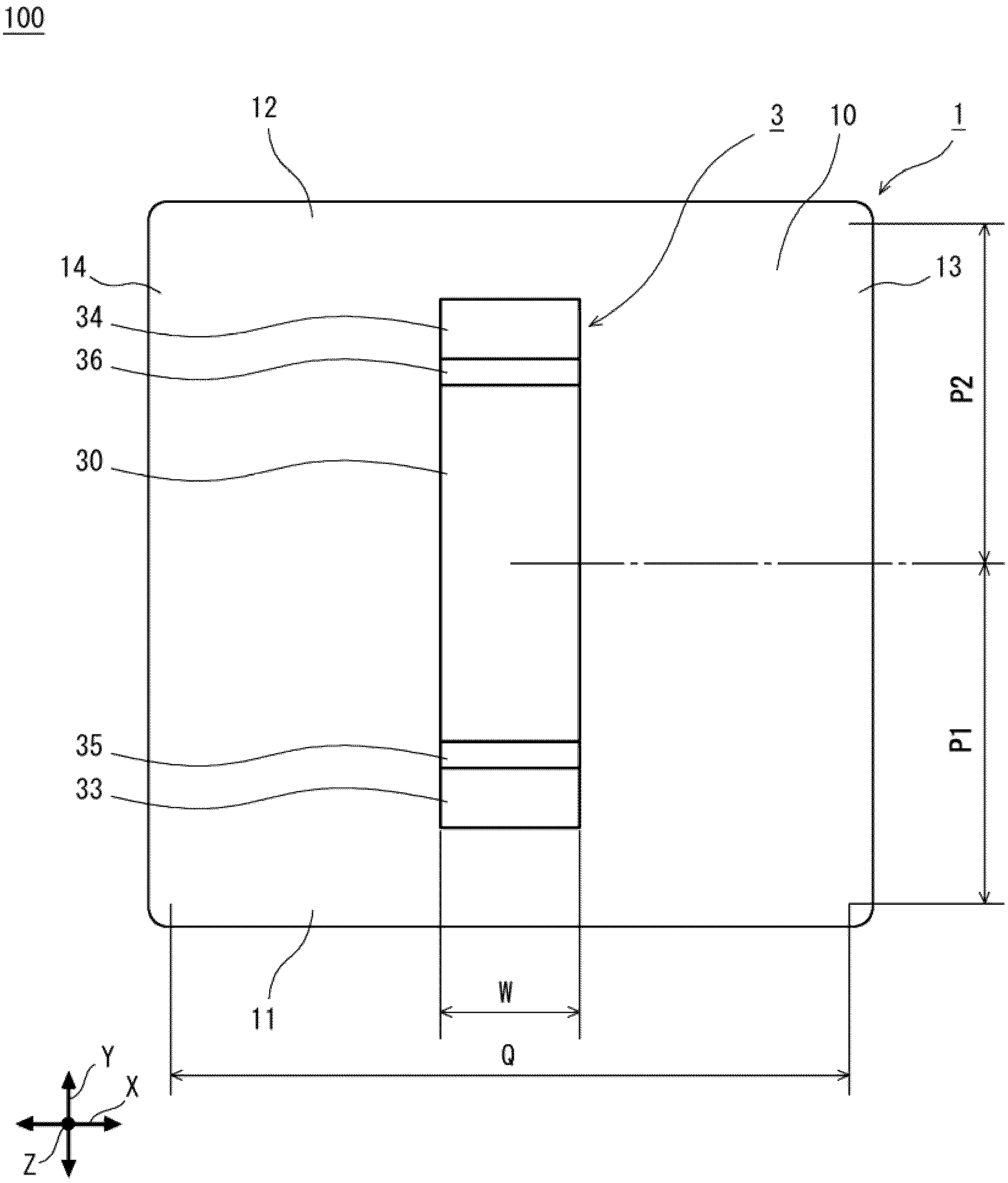

FIG. 14

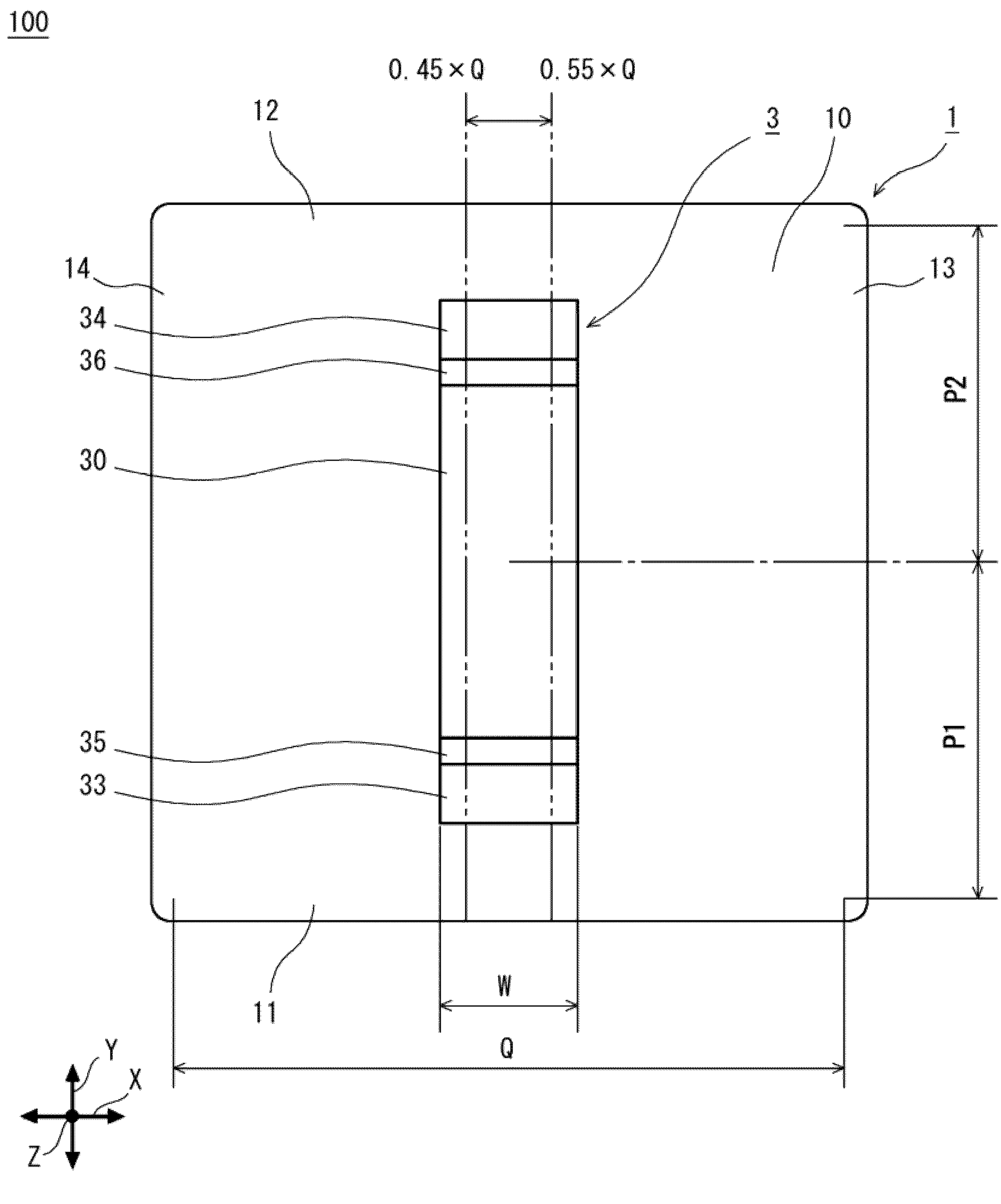

FIG. 15

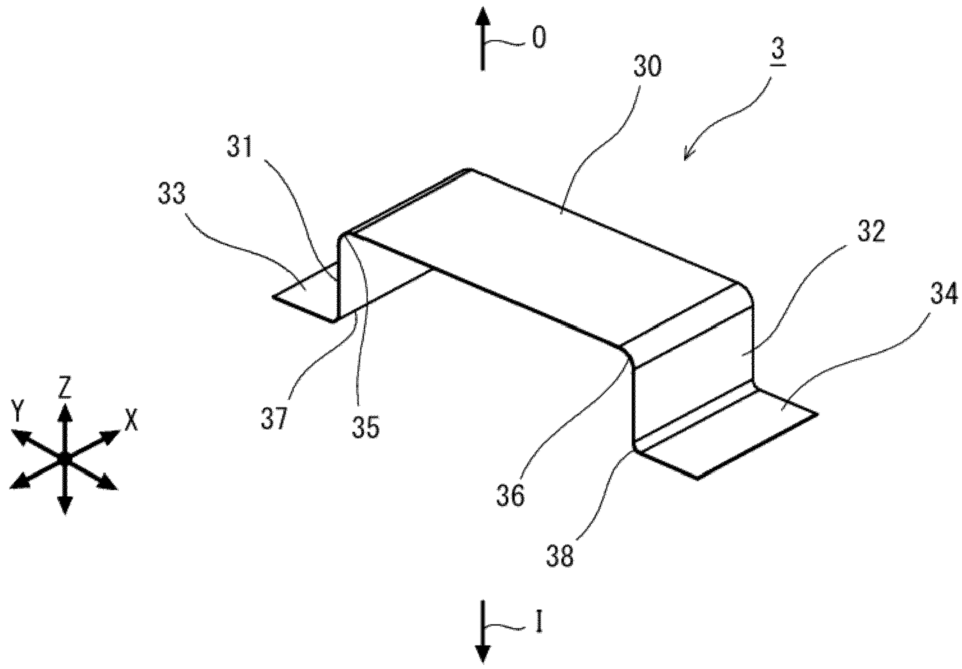

FIG. 16

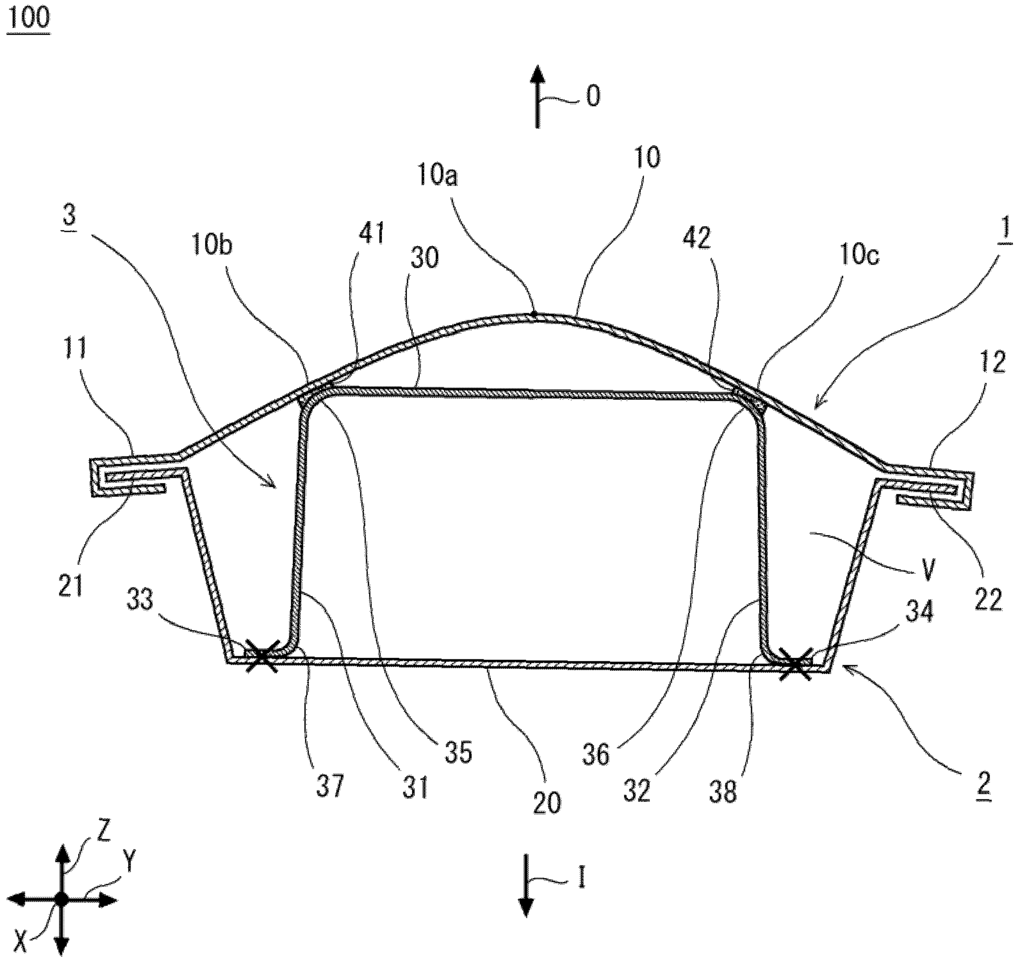
100
O
10a
10
3
10b
41
30
42
10c
1
11
12
21
33
V
22
34
37
31
35
20
36
32
38
2
Z
Y
X
I

FIG. 17

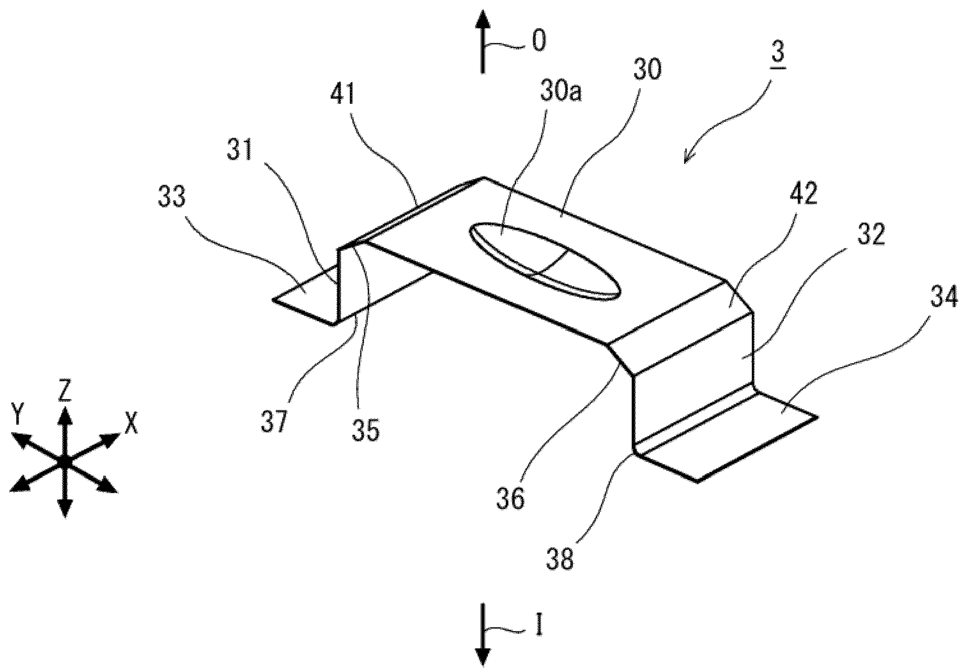

FIG. 18

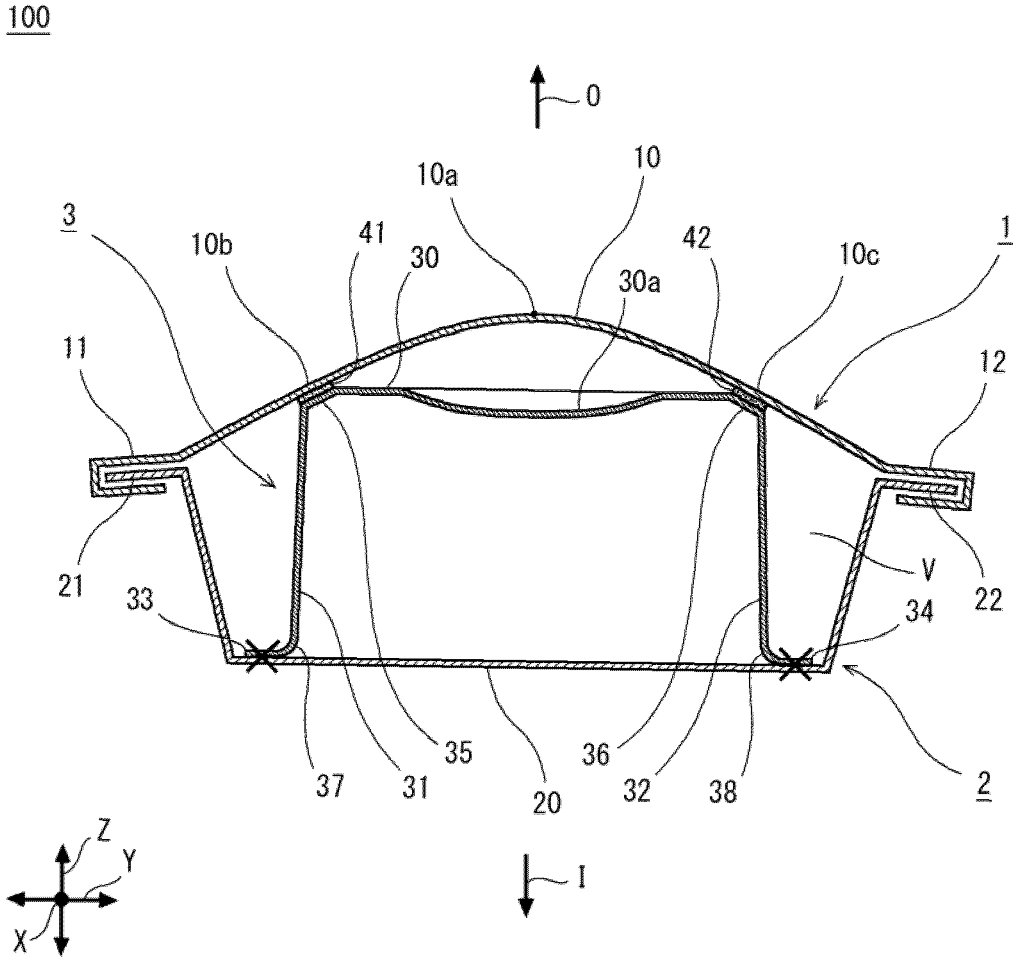
100
0
10
10a
3
10b
41
30
42
10c
1
30a
11
12
21
V
22
33
34
37
31
35
20
36
32
38
2
Z
Y
X
I

FIG. 19

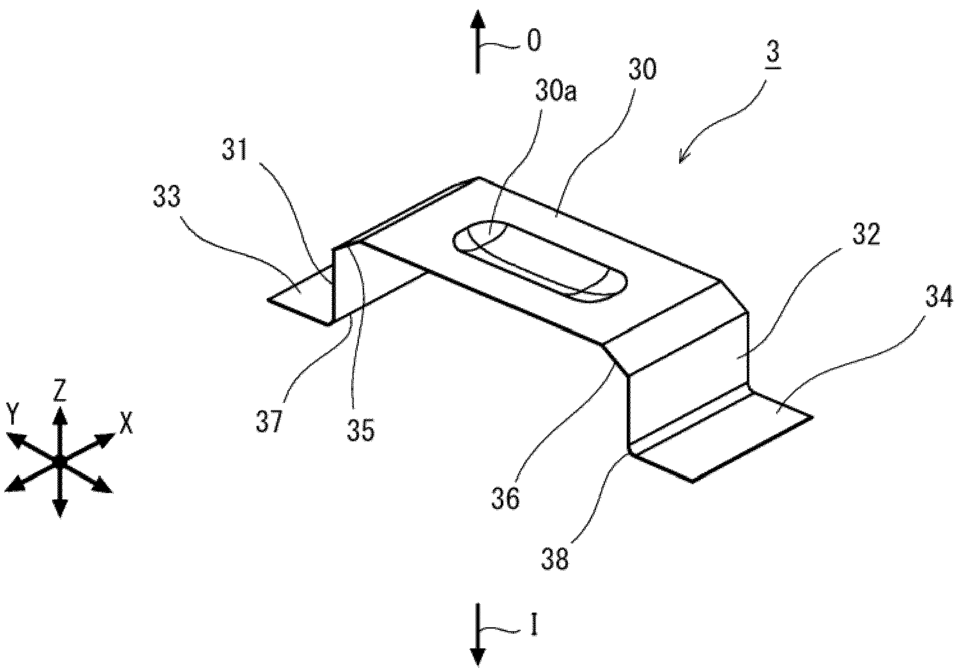

FIG. 20

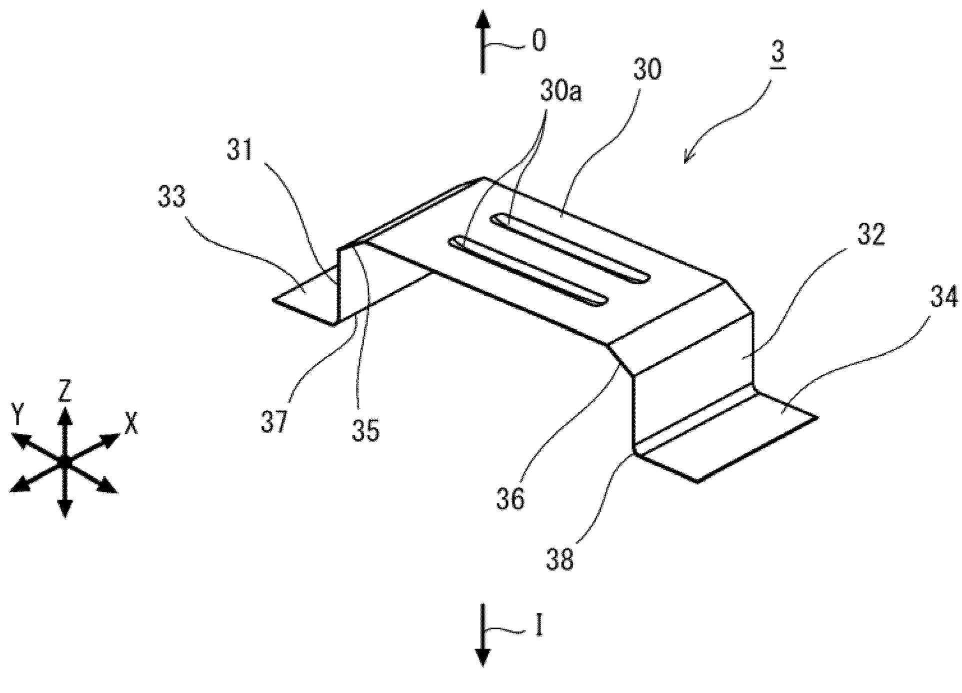

FIG. 21

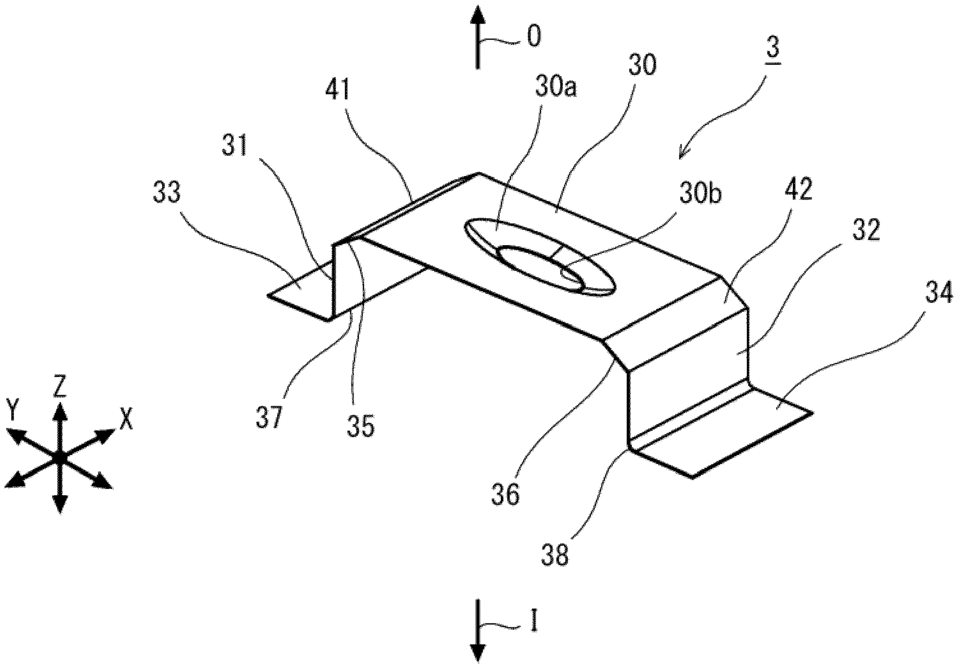

FIG. 22

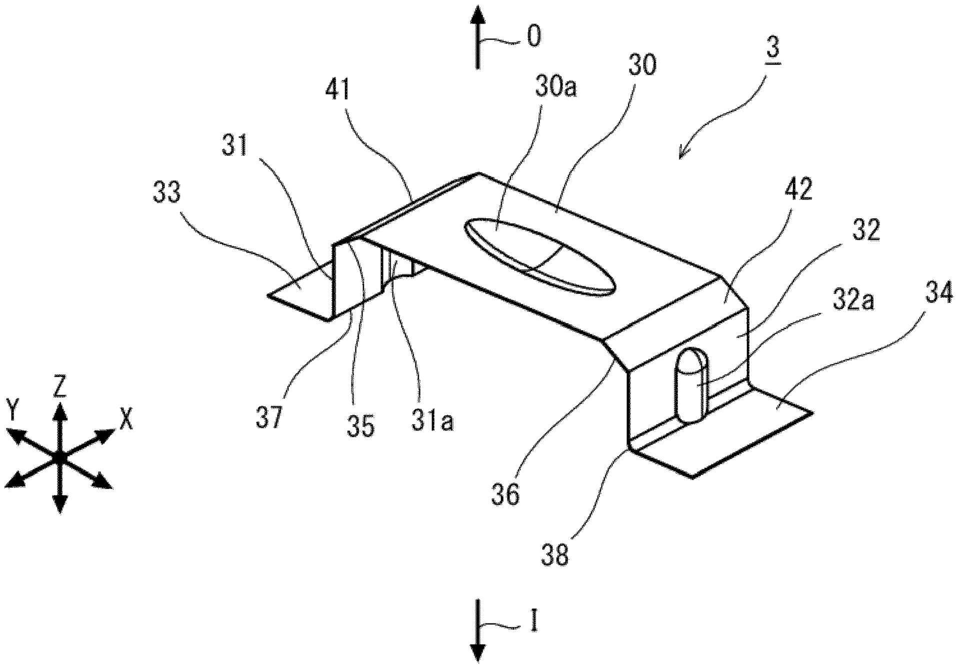

FIG. 23

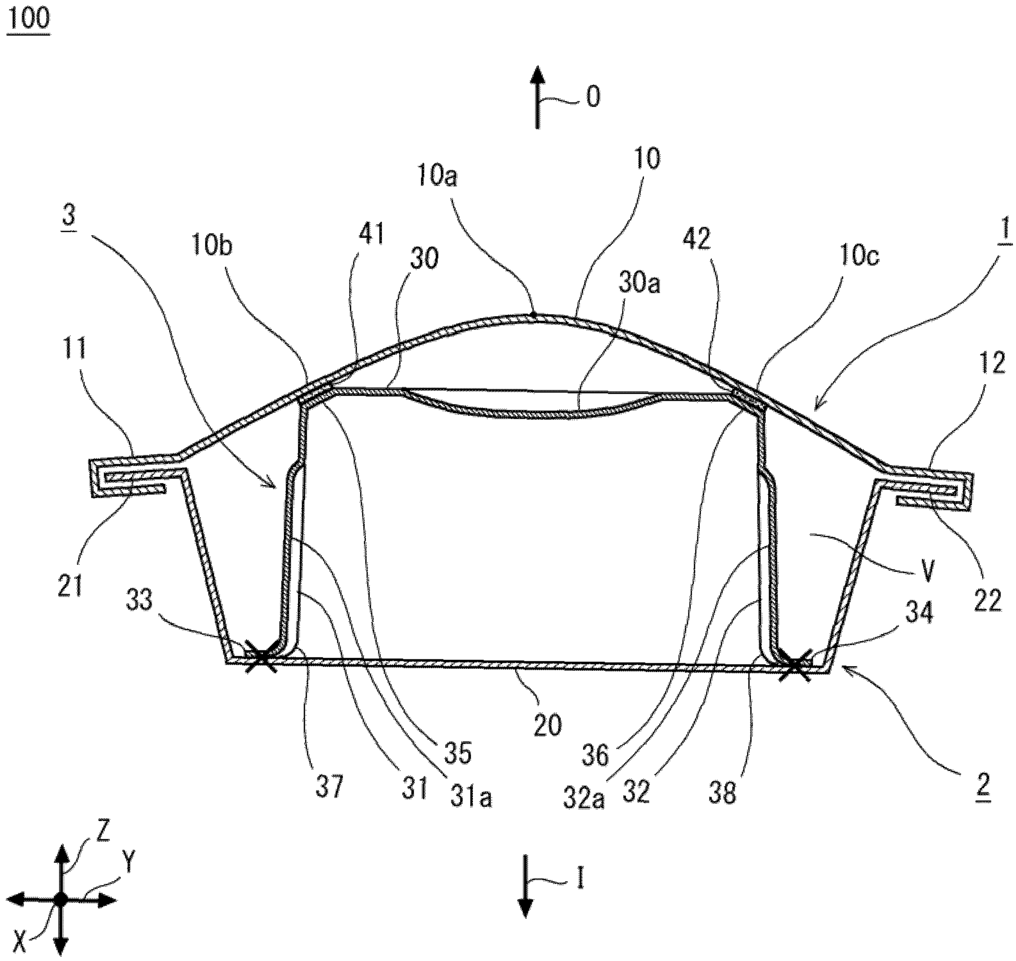
100
0
10a
10
3
10b
41
30
42
10c
1
30a
11
12
21
33
V
34
22
20
35
36
37
31
31a
32a
32
38
2
Z
Y
X
I

FIG. 24

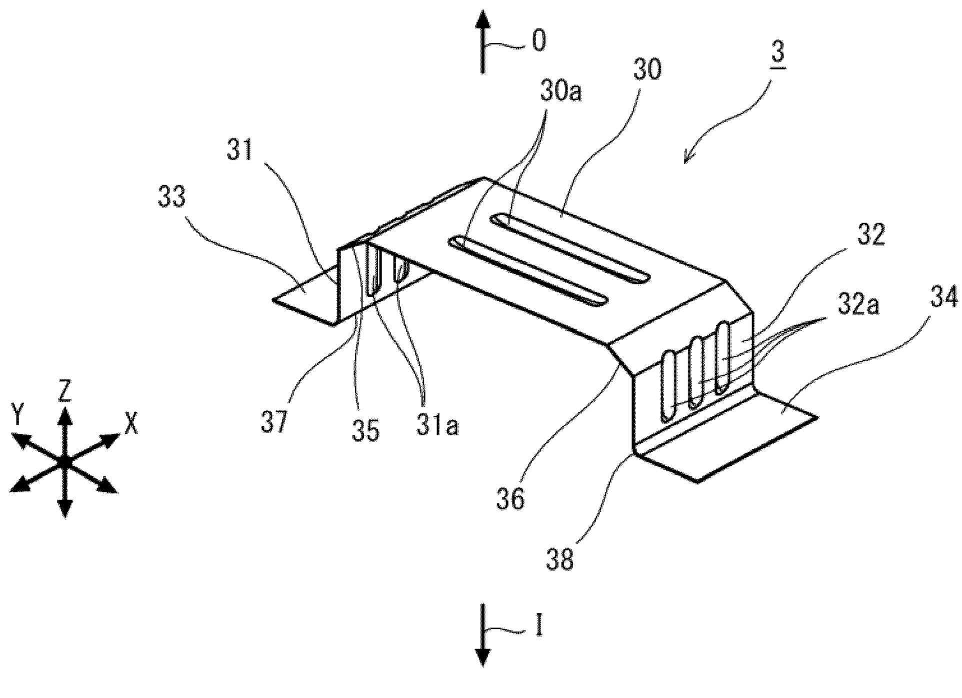

FIG. 25

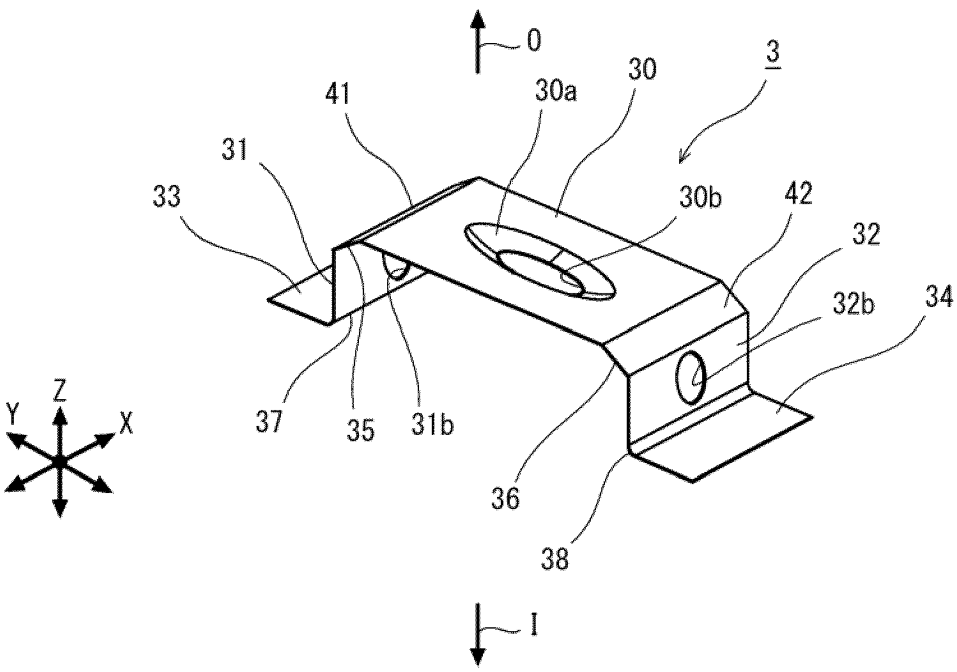

FIG. 26

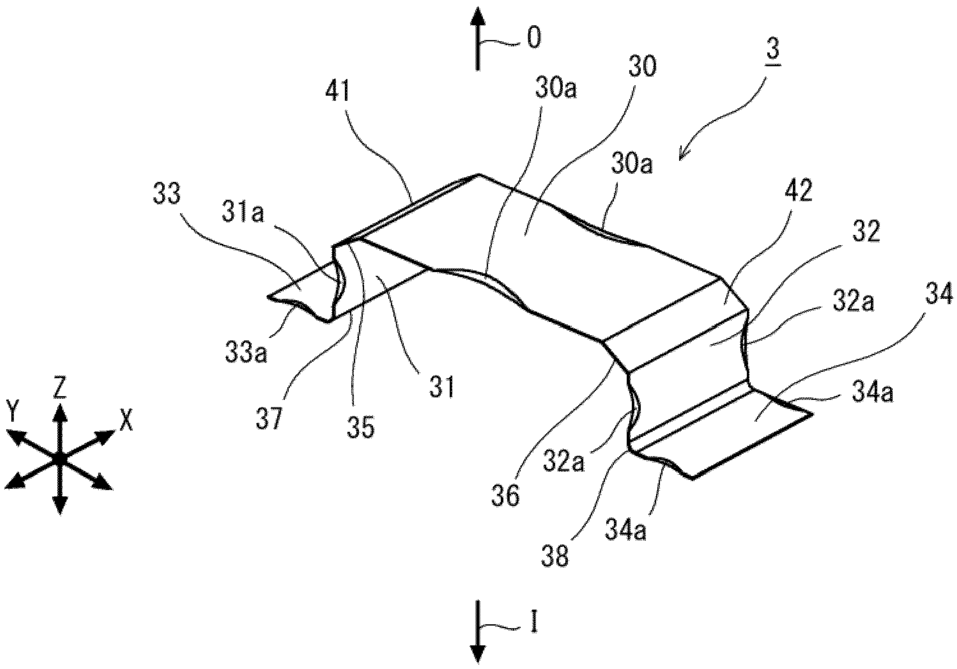
O
3
30
30a
30a
41
33
31a
42
32
32a
34
34a
33a
31
37
35
36
32a
38
34a
I
Z
Y
X

FIG. 27

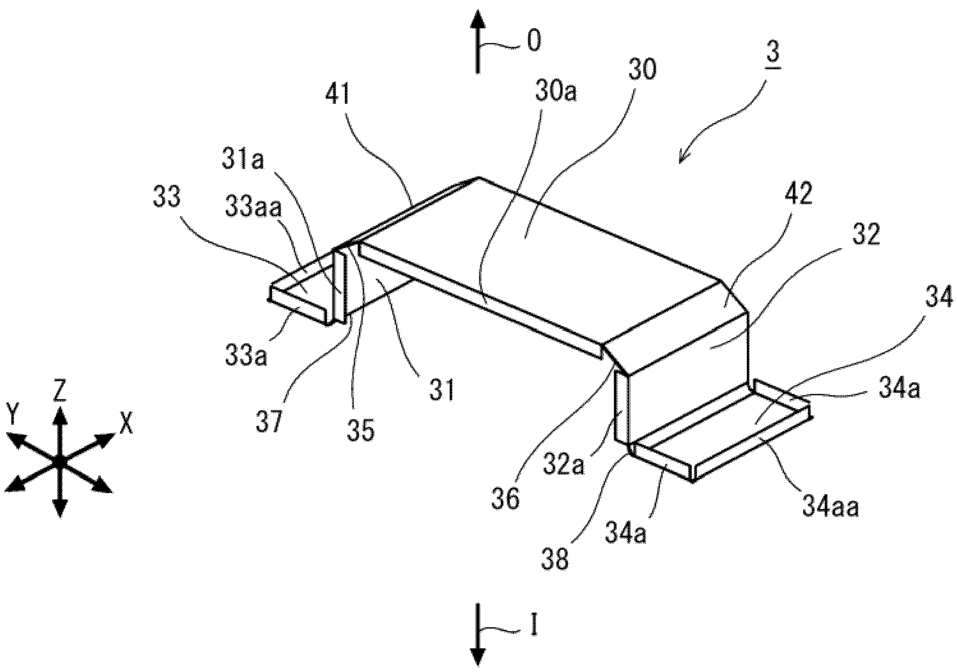
0
3
30
30a
41
31a
33
33aa
42
32
34
34a
33a
31
37
35
Z
Y
X
36
32a
34aa
38
34a
I

FIG. 28

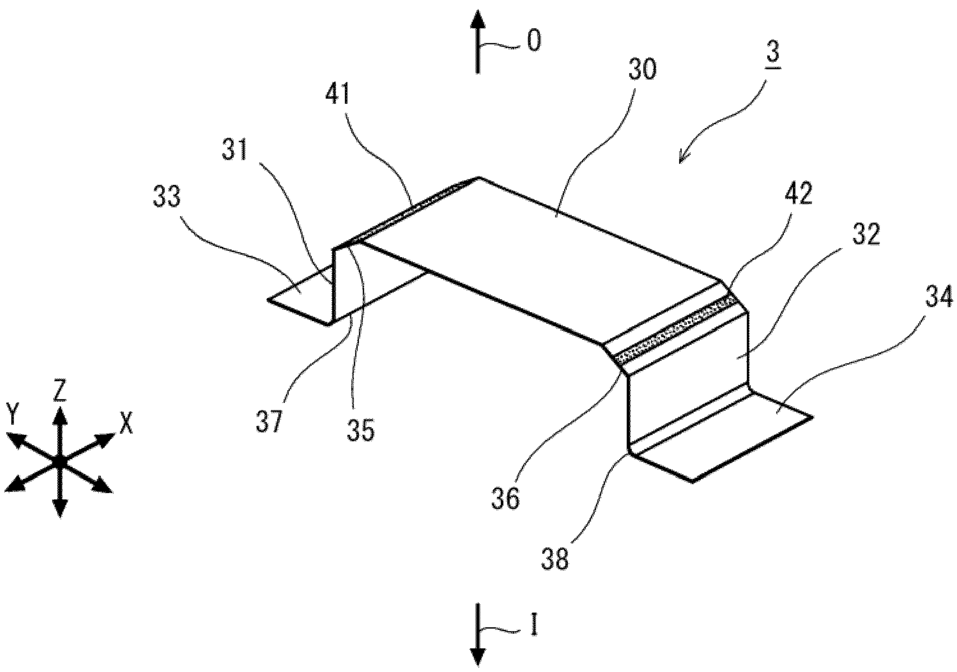

FIG. 29

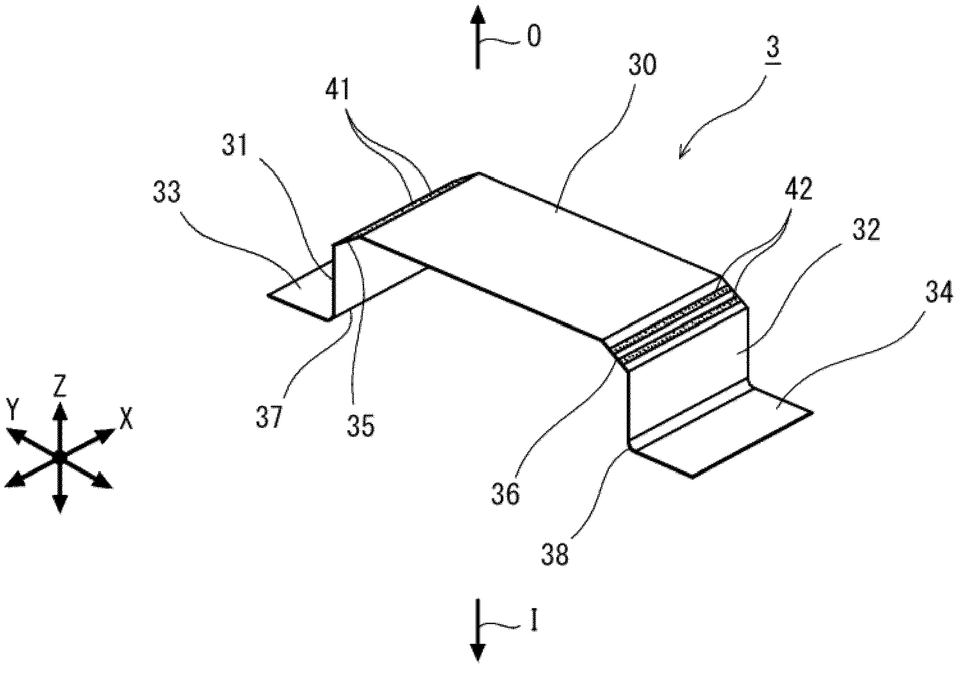

FIG. 30

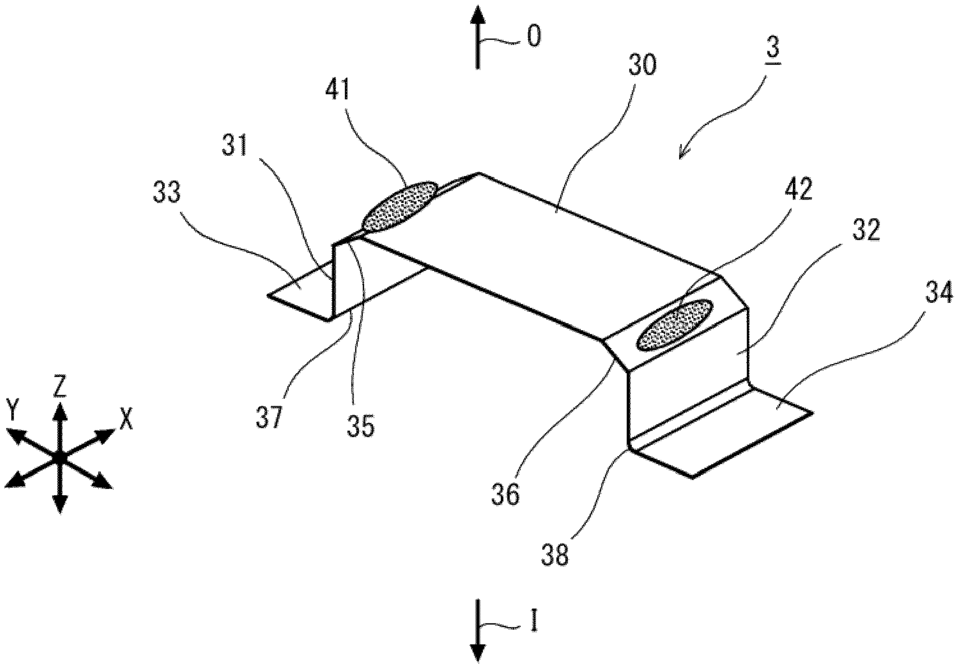

FIG. 31

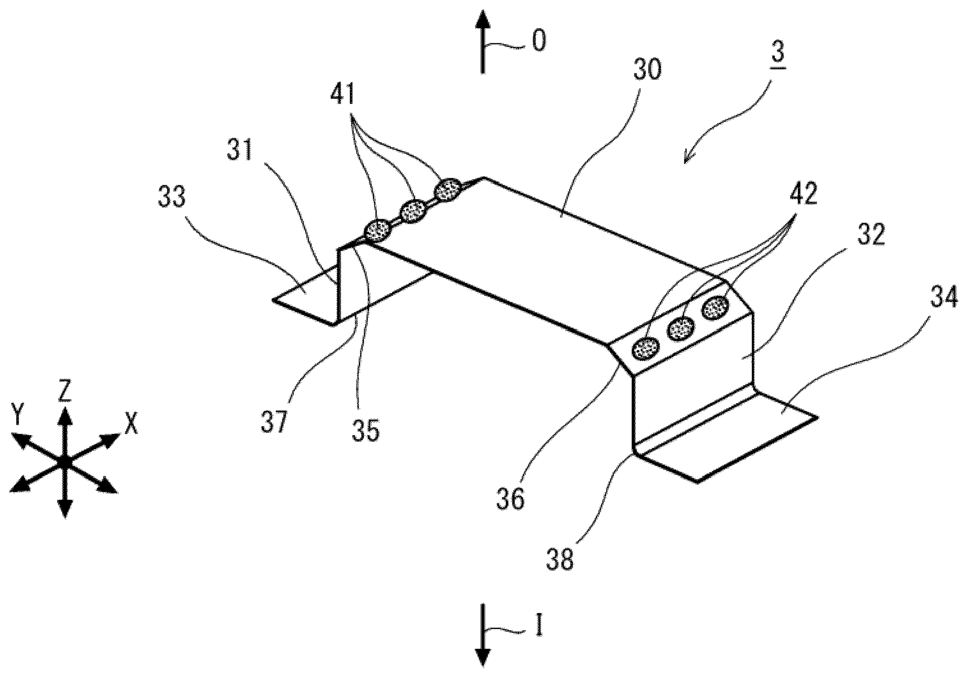

FIG. 32

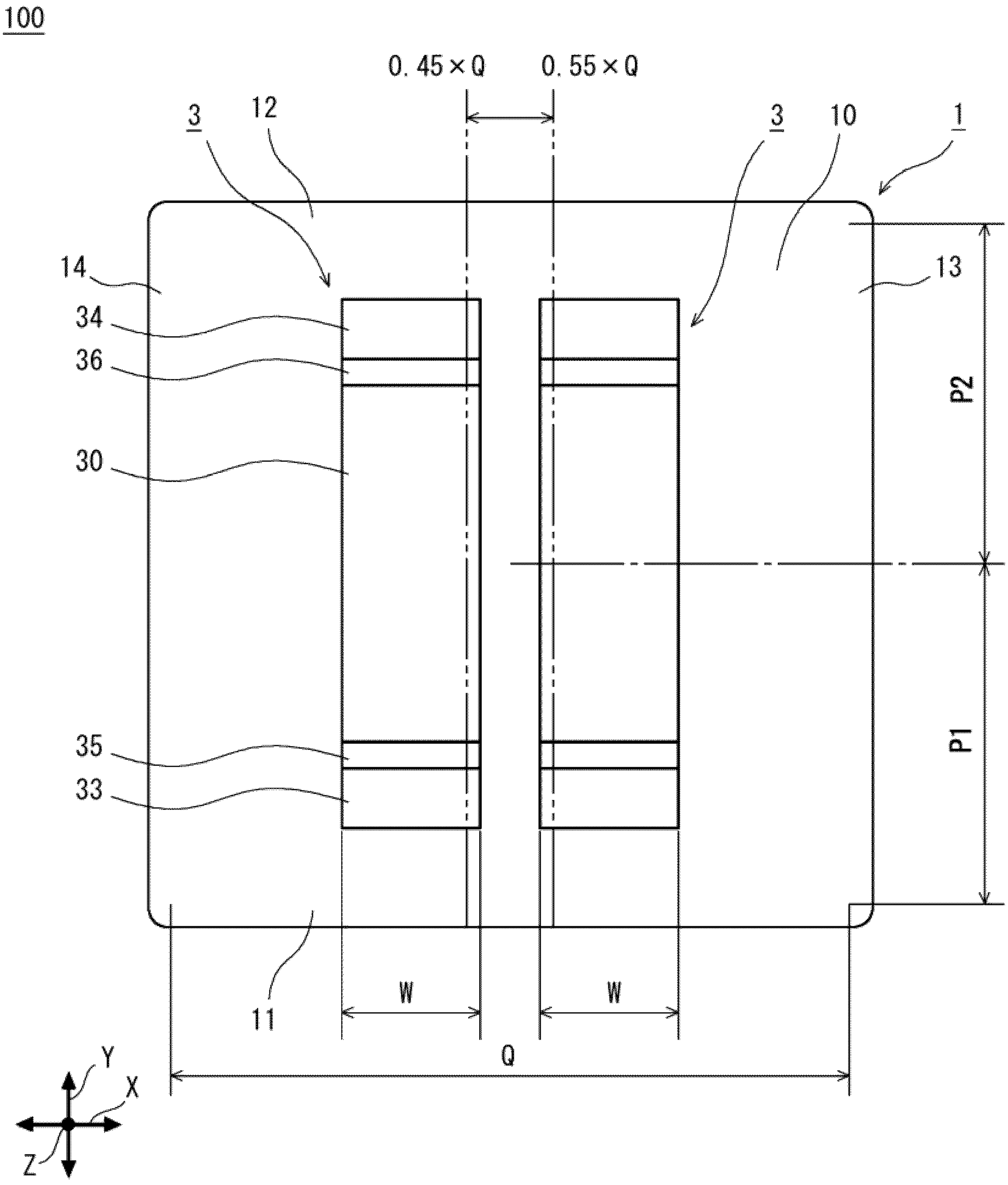

FIG. 33

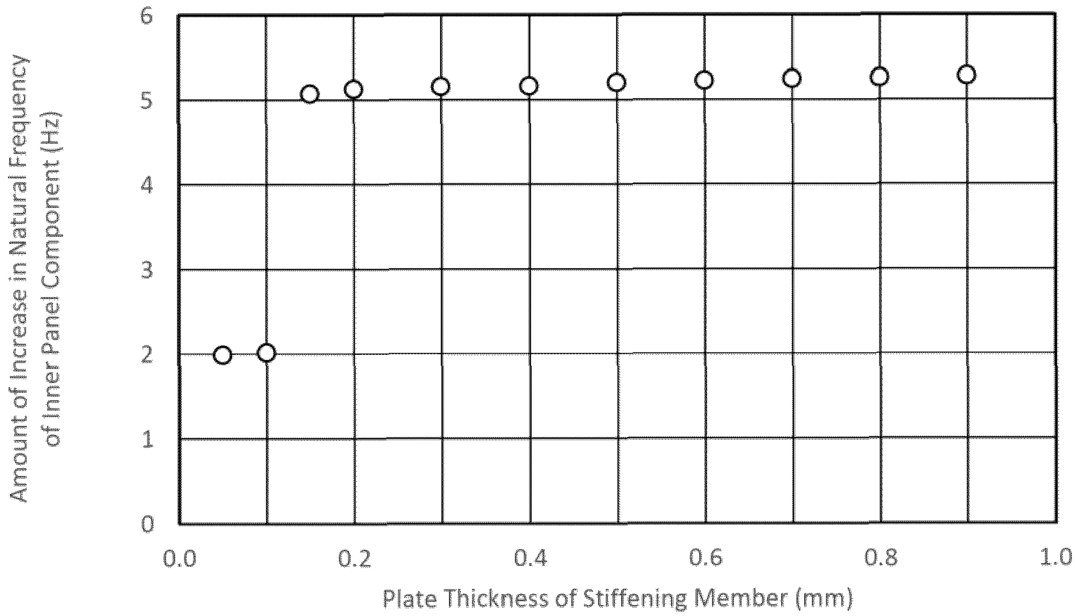
6
5
4
3
2
1
0
0.0
0.2
0.4
0.6
0.8
1.0
Amount of Increase in Natural Frequency of Inner Panel Component (Hz)
Plate Thickness of Stiffening Member (mm)

FIG. 34

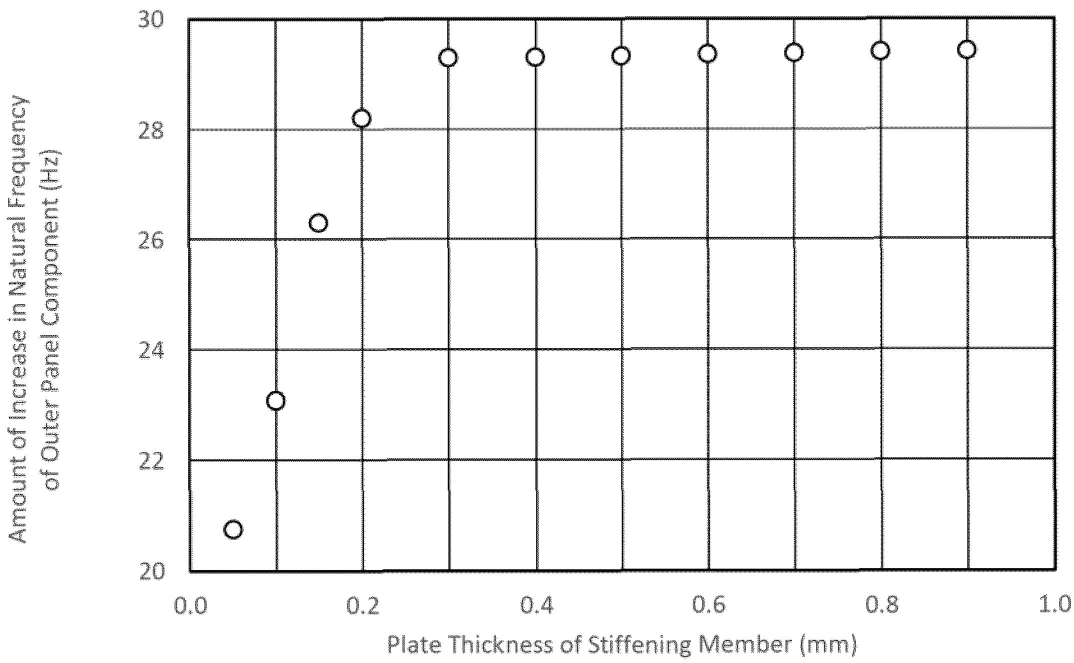
30
28
26
24
22
20
0.0
0.2
0.4
0.6
0.8
1.0
Amount of Increase in Natural Frequency of Outer Panel Component (Hz)
Plate Thickness of Stiffening Member (mm)

FIG. 35

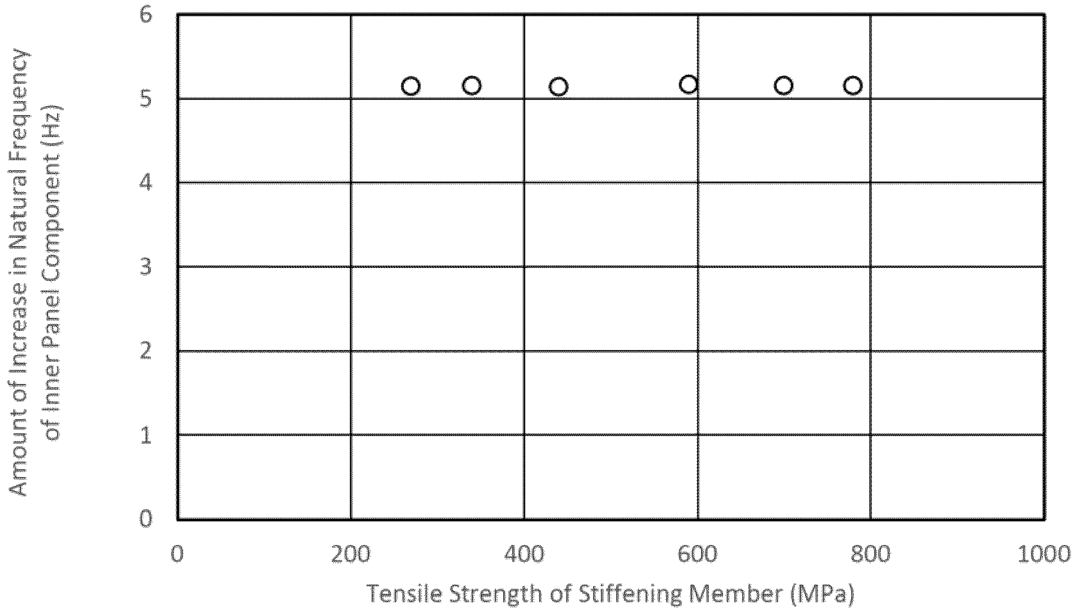
6
5
4
3
2
1
0
Amount of Increase in Natural Frequency of Inner Panel Component (Hz)
0
200
400
600
800
1000
Tensile Strength of Stiffening Member (MPa)

FIG. 36

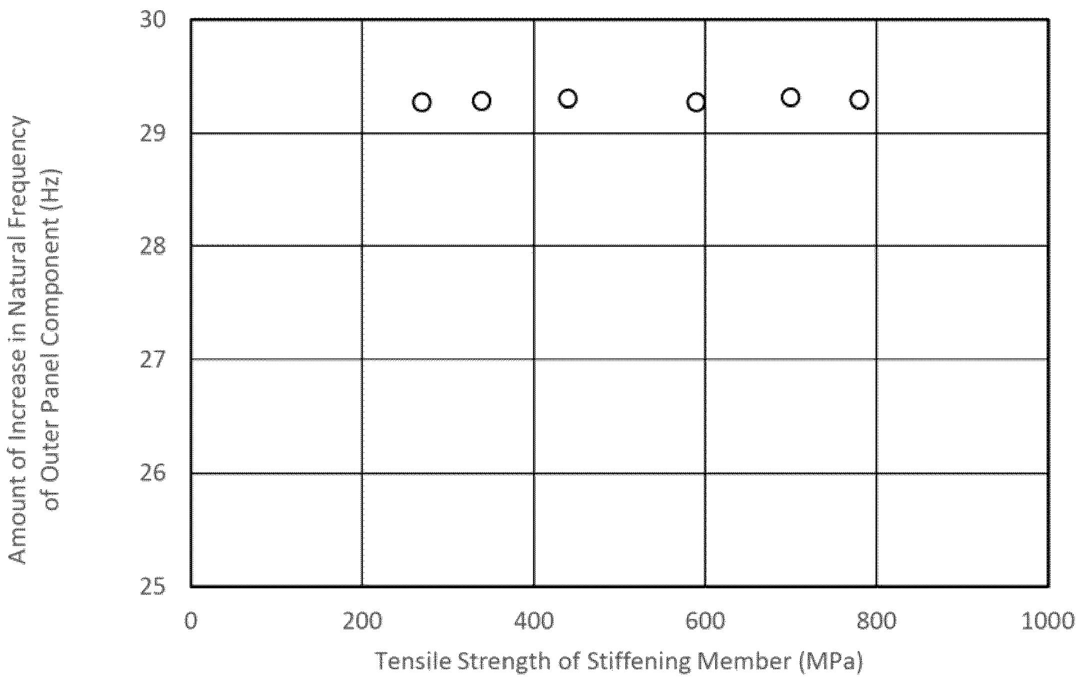
30
29
28
27
26
25
Amount of Increase in Natural Frequency of Outer Panel Component (Hz)
0
200
400
600
800
1000
Tensile Strength of Stiffening Member (MPa)

## INTERNATIONAL SEARCH REPORT

International application No.
**PCT/JP2023/024138**

**A. CLASSIFICATION OF SUBJECT MATTER**

***B60J 5/00***(2006.01)i; ***B60J 5/10***(2006.01)i; ***B62D 25/10***(2006.01)i
FI: B60J5/00 P; B60J5/10 D; B62D25/10 D

According to International Patent Classification (IPC) or to both national classification and IPC

**B. FIELDS SEARCHED**

Minimum documentation searched (classification system followed by classification symbols)

B60J5/00; B60J5/10; B62D25/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2005-319915 A (TOYOTA MOTOR CORP) 17 November 2005 (2005-11-17) entire text, all drawings | 1-11 |
| A | JP 10-258768 A (NISSAN MOTOR CO LTD) 29 September 1998 (1998-09-29) entire text, all drawings | 1-11 |
| A | JP 11-011351 A (DAIHATSU MOTOR CO LTD) 19 January 1999 (1999-01-19) entire text, all drawings | 1-11 |
| A | JP 2019-189182 A (SUZUKI MOTOR CORP) 31 October 2019 (2019-10-31) entire text, all drawings | 1-11 |
| A | JP 2015-085911 A (TOYOTA MOTOR CORP) 07 May 2015 (2015-05-07) entire text, all drawings | 1-11 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 August 2023** | **22 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (January 2015)

**INTERNATIONAL SEARCH REPORT**
**Information on patent family members**

International application No.
**PCT/JP2023/024138**

| Patent document cited in search report | Publication date (day/month/year) | Patent family member(s) | Publication date (day/month/year) |
|---|---|---|---|
| JP 2005-319915 A | 17 November 2005 | (Family: none) | |
| JP 10-258768 A | 29 September 1998 | (Family: none) | |
| JP 11-011351 A | 19 January 1999 | (Family: none) | |
| JP 2019-189182 A | 31 October 2019 | (Family: none) | |
| JP 2015-085911 A | 07 May 2015 | US 2016/0236715 A1<br>entire text, all drawings<br>WO 2015/064311 A1<br>CN 105745145 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010228617 A
- JP 2005271707 A
- JP 2006 A
- JP 036134 A
- JP 2010058622 A
- JP 2006036134 A